(19) Europäisches Patentamt
European Patent Office
Office européen des brevets

(11) **EP 3 920 609 A1**

(12) **EUROPEAN PATENT APPLICATION**
published in accordance with Art. 153(4) EPC

(43) Date of publication:
**08.12.2021 Bulletin 2021/49**

(51) Int Cl.:
***H04W 64/00*** (2009.01)

(21) Application number: **20748048.4**

(22) Date of filing: **03.02.2020**

(86) International application number:
**PCT/CN2020/074204**

(87) International publication number:
**WO 2020/156567 (06.08.2020 Gazette 2020/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.02.2019 CN 201910106818**

(71) Applicant: **Sony Group Corporation
Tokyo 108-0075 (JP)**

(72) Inventors:
• **WANG, Zhaocheng
  Beijing 100084 (CN)**
• **CAO, Jianfei
  Beijing 100028 (CN)**
• **LIU, Fuliang
  Beijing 100084 (CN)**

(74) Representative: **D Young & Co LLP
120 Holborn
London EC1N 2DY (GB)**

(54) **DEVICE AND METHOD FOR WIRELESS COMMUNICATION SYSTEM AND STORAGE MEDIUM**

(57) The present disclosure relates to device, method for a wireless communication system and storage medium. In embodiments of the present disclosure, location information of at least one terminal device on the terminal side in the wireless communication system is acquired, wherein the at least one terminal device has specific position configuration information; and location information of a target terminal device among the at least one terminal device is determined based on the specific position configuration information of the at least one terminal device and the location information of the at least one terminal device.

Figure 2

**Description**

CROSS-REFERENCE OF RELATED APPLICATIONS

The present application claims the benefit of priority to CN application No. 201910106818.4, filed on February 02, 2019, which is incorporated by reference herein in its entity.

FIELD OF THE INVENTION

The present disclosure generally relates to a wireless communication system, and more particularly to a beam management technology in a wireless communication system.

BACKGROUND

Around the world, various types of vehicles are increasing. More and more passengers and their equipments on transportation bring a lot of demand for communication services, so it is very important to study the wireless communication system on vehicles, especially high-speed vehicles.

3GPP considers using frequency bands above 6GHz with rich spectrum resources to provide high-speed data services, and uses beamforming technology to overcome path loss in high frequency bands. Generally speaking, in the use process after the initial access, the terminal device on the vehicle needs to perform beam search to determine a downlink transmission beam that is optima lat the base station, which often leads to higher time delay. Moreover, in the scene of high-speed trains and vehicles, with the rapid movement of high-speed trains and vehicles, beam search failures frequently occur, which requires high overhead to realize beam recovery and/or switching. Therefore, it is of great significance to study the fast beam search and beam switching mechanism for high-speed train and vehicle communication system.

DISCLOSURE OF THE INVENTION

In view of the above situation, this disclosure proposes an improved technique for precise location of mobile devices on vehicles. In addition, the present disclosure also proposes a technique for beam searching and/or beam switching based on the position of a mobile device which is precisely localized.

In view of the above, the present disclosure provides device and method for a wireless communication system, and a storage medium.

An aspect of the present disclosure relates to a position management device for a control side of a wireless communication system. According to an embodiment, the position management device comprises a processing circuit configured to: acquire location information of at least one terminal device on the terminal side in the wireless communication system, wherein the at least one terminal device has specific position configuration information; and determine location information of a target terminal device among the at least one terminal device, based on the specific position configuration information of the at least one terminal device and the location information of the at least one terminal device.

Another aspect of the present disclosure relates to an electronic device on control side of a wireless communication system. According to an embodiment, the electronic device comprises a processing circuit configured to: acquire location information of at least one terminal device on the terminal side in the wireless communication system served by the electronic device, wherein the at least one terminal device has specific position configuration information; transmit the location information of at least one terminal device to the position management device in the wireless communication system, so that the position management device determines location information of the terminal device based on the location information and the specific position configuration information of the at least one terminal device; and receive the determined location information of the at least one terminal device from the position management device.

Another aspect of the present disclosure relates to a terminal device on a terminal side of a wireless communication system. According to an embodiment, the terminal device comprises a processing circuit configured to: acquire a location information measurement configuration from an electronic device on a control side of a wireless communication system serving a terminal device; determine the location information of the terminal device based on the location information measurement configuration; and transmit the location information of the terminal device to the position management device in the wireless communication system, so that the position management device determines location information of the terminal device based on the location information and specific position configuration information of the at least one terminal device including the terminal device.

Another aspect of the present disclosure relates to a location management method for a wireless communication system. According to an embodiment, the method comprises the following steps: a terminal device transmits an indication of a communication scene where the terminal device is located to a position management device, wherein the communication scene comprises a communication scene in which the terminal device moves along a specific track; and the position management device locates the terminal device based on the communication scene indication.

Yet another aspect of the present disclosure relates to a non-transitory computer-readable storage medium storing executable instructions thereon, and the executable instructions, when executed, cause implementation of methods as mentioned above.

Yet another aspect of the present disclosure relates to a wireless communication device. According to an embodiment, the wireless communication device comprises a processor, and a storage device storing executable instructions thereon, wherein the executable instructions, when executed, implement the methods as mentioned above.

Therefore, the present disclosure can accurately locate at least one mobile terminal device on a train or a vehicle to improve the location accuracy, thereby quickly and accurately determining the position of the mobile terminal device for location tracking. In addition, the present disclosure can also carry out a scheme of fast location-aided beam search and beam switching with lower delay and overhead, based on the position of each mobile terminal device which is accurately located, so as to meet the requirements for both delay and reliability of communication when the mobile terminal device moves rapidly.

The above summary is provided to summarize some exemplary embodiments to provide a basic understanding of various aspects of the subject matter described herein. Therefore, the above features are only examples and should not be interpreted as narrowing the scope or spirit of the subject matter described herein in any way. Other features, aspects and advantages of the subject matter described herein will become apparent from the detailed description described below in conjunction with the accompanying drawings.

DESCRIPTION OF THE DRAWINGS

A better understanding of the present disclosure may be obtained when considering following detailed description of embodiments in conjunction with the accompanying drawings. The same or similar reference numerals are used in the drawings to indicate the same or similar components. Figures are included in the present specification together with the following detailed description and form a part of the specification, for illustrating the embodiments of the present disclosure and explaining the principles and advantages of the present disclosure. Wherein:

Fig. 1 is a diagram schematically illustrating a wireless communication system according to an embodiment of the present disclosure;

Fig. 2 is a basic signaling flow chart schematically illustrating cooperative location according to an embodiment of the present disclosure;

Fig. 3 is a block diagram schematically illustrating an examplary structure of a position management device according to an embodiment of the present disclosure;

Fig. 4 schematically shows a flowchart of the operation of the position management device according to an embodiment of the present disclosure;

Fig. 5 is a diagram schematically illustrating a plurality of terminal devices arranged along a specific trajectory according to an embodiment of the present disclosure;

Fig. 6 is a diagram schematically illustrating the basic principle of OTDOA location according to an embodiment of the present disclosure;

Fig. 7 is a diagram schematically illustrating the basic principle of downlink transmission beam location according to an embodiment of the present disclosure;

Fig. 8 is an exemplary signaling flow chart schematically illustrating cooperative location according to an embodiment of the present disclosure;

Fig. 9 is a diagram schematically illustrating result of linear fitting for location tracking of a terminal device according to an embodiment of the present disclosure;

Fig. 10 is a diagram schematically illustrating a comparison of location distance errors between cooperative location aided location tracking and individual location tracking according to an embodiment of the present disclosure;

Fig. 11 is a diagram schematically illustrating a comparison of location angle errors between cooperative location aided location tracking and individual location tracking according to an embodiment of the present disclosure;

Fig. 12 is a diagram schematically illustrating a location-aided beam search according to an embodiment of the present disclosure;

Fig. 13 is a signaling flow chart schematically illustrating location-aided beam search according to an embodiment of the present disclosure;

Fig. 14 is a diagram schematically illustrating a comparison of search times overhead required for location-aided beam search and conventional beam search according to an embodiment of the present disclosure;

Fig. 15 is a diagram schematically illustrating location-aided beam switching according to an embodiment of the present disclosure;

Fig. 16 is a signaling flow chart schematically illustrating location-aided beam switching according to an embodiment of the present disclosure;

Fig. 17A is a diagram schematically illustrating the relationship between the success probability of location-aided beam switching and the time advance according to an embodiment of the present disclosure;

Fig. 17B is a diagram schematically illustrating the relationship between pilot signal overhead and time advance of location-aided beam switching according to an embodiment of the present disclosure;

Fig. 18 is a block diagram schematically illustrating an examplary structure of an electronic device according to an embodiment of the present disclosure;

Fig. 19 is a flowchart schematically illustrating the operation of an electronic device according to an embodiment of the present disclosure;

Fig. 20 is a block diagram schematically illustrating an examplary structure of a terminal device according to an embodiment of the present disclosure;

Fig. 21 is a flowchart schematically illustrating the operation of a terminal device according to an embodiment of the present disclosure;

FIG. 22 is a block diagram of an exemplary structure of a personal computer as an information processing device that can be employed in an embodiment of the present disclosure.

FIG. 23 is a block diagram illustrating a first example of a schematic configuration of a eNB to which the technology of the present disclosure can be applied.

FIG. 24 is a block diagram illustrating a second example of a schematic configuration of a eNB to which the technology of the present disclosure can be applied.

FIG. 25 is a block diagram illustrating an example of a schematic configuration of a smartphone to which the technology of the present disclosure can be applied; and

FIG. 26 is a block diagram illustrating an example of a schematic configuration of a car navigation device to which the technology of the present disclosure can be applied.

Although the embodiments described in this disclosure may be susceptible to various modifications and alternative forms, specific embodiments thereof are shown by way of example in the drawings and are described in detail herein. It should be understood, however, that the drawings and detailed description thereof are not intended to limit the embodiments to the particular forms disclosed, but on the contrary, the intention is to cover all modifications, equivalents, and alternatives falling within the spirit and scope of the claims.

DETAILED DESCRIPTION OF PREFERRED EMBODIMENTS

Representative applications of various aspects of the device and method according to the present disclosure are described below. These examples are described only to enrich the context and to help to understand the described embodiments. Therefore, it is clear to those skilled in the art that the embodiments described below can be implemented without some or all of the specific details. In other cases, well-known process steps have not been described in detail in order to avoid unnecessarily obscuring the described embodiments. Other applications are possible, and the solutions of the present disclosure are not limited to these examples.

Hereinafter, one or more preferred embodiments of the present disclosure will be described in detail with reference to the accompanying drawings. In this specification and drawings, structural elements having substantially the same functions and structures are denoted by the same reference numerals, and repeated descriptions of these structural elements are omitted.

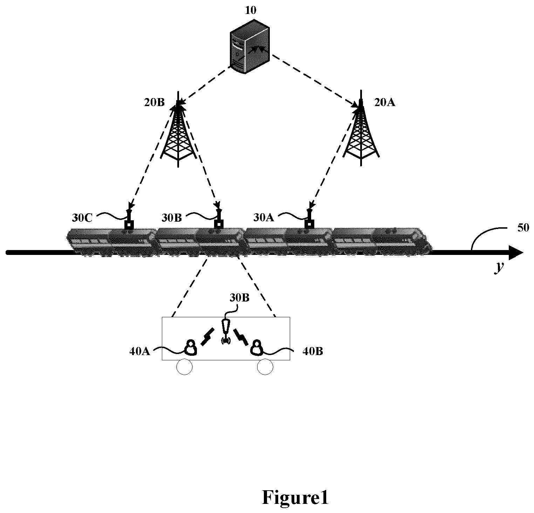

Furthermore, in this specification and drawings, in some cases, elements having substantially the same functions and structures can be distinguished by different letters attached to the same symbols. For example, as shown in Fig. 1, a plurality of terminal devices having basically the same functions and structures are divided into terminal devices 30A, 30B and 30C as appropriate. On the other hand, when each of a plurality of elements having substantially the same function and structure is not specifically distinguished, only the same symbols will be given. For example, when not specifically distinguished, the terminal devices 30A, 30B, and 30C will be simply designated as the terminal device 30.

Typically, a wireless communication system includes at least a control side and a terminal side, and a device on the control side can provide communication services for one or more devices on the terminal side.

In the present disclosure, the term "control side" has the full breadth of its usual meanings, and generally indicates a side in a communication system having a functionality of transmission and control of a signal stream, e.g., the side of the communication system that controls location. Similarly, the term "terminal side" has the full breadth of its usual meaning, and generally indicates a side of the communication system that receives the signal flow and operates according to the control, for example, the side of the communication system that is located. As an example, depending on the direction of signal flow in the communication system, the "control side" and "terminal side" may include different devices in the communication system. For example, for uplink signal transmission, "control side" equipment may include "base station" in a communication system, while "terminal side" equipment may correspondingly include "terminal device" in the communication system. On the contrary, for downlink signal transmission, "control side" equipment can include "terminal device" in a communication system, while "terminal side" equipment can correspondingly include "base station" in the communication system.

In this disclosure, the term "base station" has the full breadth of its usual meaning and includes at least a wireless communication station that is used as a part of a wireless communication system or a radio system to facilitate communication. As an example, the base station may be, for example, an eNB in a 4G communication standard, a gNB in a 5G communication standard, a remote radio head, a wireless access point, a UAV control tower, or a communication apparatus performing similar functions.

In the present disclosure, "electronic device on the control side" has the full breadth of its general meaning, and may include a device that is used as a part of a wireless communication system or a radio system to facilitate location and tracking. In this disclosure, "electronic device on control side" and "base station" can be used interchangeably, or "electronic device on control side" can be implemented as a part of "base station".

In the present disclosure, "position management device" is a device on the control side of a wireless communication system, and the term "position management device" has all the breadth of its general meaning, for example, it can include a position management device as a part of a wireless communication system or a radio system for location and tracking. In this disclosure, "position management device" can be used interchangeably with "base station" or "electronic device for base station", or "position management device" can be implemented as a part of "base station" or "electronic device for base station".

In this disclosure, the term "terminal device" has the full breadth of its general meaning, and includes at least terminal device which is a part of a wireless communication system or a radio system to facilitate communication. As an example, the terminal device may be, for example, a terminal device such as a wireless relay, a micro base station, a router, etc., or a communication device that performs similar functions. In this disclosure, "terminal device" and "relay" can be used interchangeably, or "terminal device" can be implemented as a part of "relay".

In the present disclosure, the term "UE" has the full breadth of its usual meaning and includes at least client device that is used as part of a wireless communication system or a radio system to facilitate communication. As an example, the UE may be a terminal device such as a mobile phone, a laptop computer, a tablet computer, a vehicle on-board communication apparatus, or the like, or a communication device that performs similar functions. In the present disclosure, "terminal device" can be in integrated with "user device".

It should be noted that although the embodiments of the present disclosure are described below mainly based on a communication system including a position management device, an electronic device, and a terminal device, these descriptions can be correspondingly extended to a case of a communication system including any other type of control side and terminal side. For example, the operation on the control side may correspond to the operation of location management device, base station and electronic device, while the operation on the terminal side may correspond to the operation of terminal device accordingly.

In addition, the description will be made in the following order.

1. Example of wireless communication system
2. Overview of beam management in wireless communication system
3. Cooperative location principle
4. Structural configuration of device

    4.1. Structure configuration of location management device
    4.2. Structural configuration of electronic device
    4.3. Structural configuration of terminal device

5. Application examples
6. Conclusion

« 1. Example of a wireless communication system»

Around the world, high-speed vehicles, such as high-speed trains, subways and so on, are increasing. More and more passengers and their equipments on high-speed vehicles bring massive communication service requirements, so it is very important to study the wireless communication system on high-speed vehicles.

An example of the configuration of a wireless communication system according to an embodiment of the present disclosure will be described below with reference to Fig. 1. Fig. 1 is a diagram schematically illustrating a wireless communication system according to an embodiment of the present disclosure. The wireless communication system is suitable for cooperative location and tracking according to embodiments of the present disclosure to perform beam searching and beam switching with high reliability and low delay. As shown in Fig. 1, the wireless communication system according to this embodiment includes a position management device 10, an electronic device 20, a terminal device 30, and a user device 40, wherein the terminal device 30 moves following a specific trajectory 50.

The position management device 10 is a device that locates and tracks the terminal device 30 and controls the electronic device 20 to perform beam search and beam switching. As shown in Fig. 1, the position management device 10 can locate and track terminal devices 30A to 30C, and control electronic devices 20A and 20B to perform beam search and beam switching. In an aspect, the position management device 10 may be implemented as a base station or a part of a base station, and may be referred to as "main base station" by way of example.

The electronic device 20 is a device that provides radio communication services to the terminal device 30 and the UE 40. As shown in Fig. 1, there may be a plurality of electronic devices 20, and the electronic device 20A provides a radio communication service to the terminal device 30A, while the electronic device 20B provides a radio communication service to the terminal devices 30B and 30C. In one aspect, the electronic device 20 may be implemented as a base station or a part of a base station, and may be referred to as an "auxiliary base station" by way of example. In some embodiments, the electronic devices 20A and 20B may be small cell base stations. In addition, in some embodiments, the position management device 10 may be a macrocell base station. The macro cell base station has a function of cooperatively controlling radio communication performed by its subordinate small cell base stations 20A and 20B. In addition, the electronic device 20 may be connected so as to be able to communicate with each other, and the electronic device 20 and the position management device 10 may be connected so as to be able to communicate with each other.

Although the figure shows an example in which the position management device 10 and the electronic device 20 are separated from each other, the position management device 10 may also be implemented as the electronic device 20 or as a part of the electronic device 20. In addition, the position management device 10 and the electronic device 20 can also be used interchangeably.

The terminal device 30 is a device that communicates with the electronic device 20. In the scenario of fig. 1, the terminal device 30 has high mobility and performs base station selection according to its movement. In some embodiments, the terminal device 30 may include at least one terminal device. In one aspect, the terminal device 30 may be implemented as a mobile relay or a part of a mobile relay. On the other hand, when the position management device 10 or the electronic device 20 forms beam communication with the terminal device 30, the position management device 10 or the electronic device 20 can form an appropriate beam according to the movement of the terminal device 30, and perform beam search and beam tracking for communication.

The UE 40 is a device that communicates with the terminal device 30. In the scenario of Fig. 1, there may be one or more UE 40, and each terminal device serves as a relay to provide radio communication services to the UEs it serves. For example, in Fig. 1, a terminal device 30B provides radio communication services to UE 40A and UE 40B.

Hereinafter, the position management device 10, the electronic device 20, the terminal device 30, and the UE 40 may operate according to the radio access technology in LTE of 4G as well as the new radio access (NR) technology of 5G.

«2. Summary of beam management in the wireless communication system»

A base station is always provided with large number of antennas (more specifically, antenna elements), and antennas are used to form beams for communication with a terminal device. As an example, in 3GPP, a base station selects beams suitable for communication with a terminal device based on a reference signal formed by downlink beams. This downlink reference signal is also called a channel state information reference signal (CSI-RS). The base station provides a plurality of CSI-RS and communicates with the terminal device by using beams corresponding to reception results in the terminal device.

Specifically, first, the base station transmits multiple CSI-RS using multiple beams. Then, the terminal device selects a desired beam among a plurality of beams for transmitting CSI-RS based on the reception results of the plurality of provided CSI-RS, and transmits information indicating the selection result to the base station. The information indicating the selection result includes identification information (e.g., beam number) of a desired beam. For example, the terminal device selects the desired beam based on the received signal strength of each beam. Then, the base station uses the selected beam to communicate with the terminal device.

When the terminal device moves, especially at high speed, the terminal device will easily leave the beam, and thus it is difficult to transmit data from the base station to the terminal device. In addition, with the increase of the number of antenna elements, a sharper beam will be formed, and the terminal device will leave the beam more easily. Therefore, it is necessary to perform beam tracking/search with respect to the mobile terminal device.

Tracking capability varies with the frequency of providing CSI-RS to terminal device. For example, in the case where CSI-RS is provided at an interval of 100 ms, tracking is performed at a granularity of 100 ms. Under a condition that the terminal device moves at a speed of staying in the beam for 100 ms, good tracking can be performed at this granularity. However, if the speed of terminal device increases, it will need to track at a shorter granularity. In this case, the overhead of downlink resources for providing CSI-RS increases, so that it is difficult to perform effective communication. Therefore, it is necessary to be able to quickly and accurately search suitable beams for wireless communication.

In addition, there is a need for beam switching for high-speed mobile terminal device. As an example, there exists a case where the downlink quality provided by beams in use (for example, the measurement result of received signal strength of the downlink reference signal) is unacceptable, and there is another beam with better downlink quality. In this case, the terminal device decides to perform switching to another beam and notifies the serving base station of the decision. Then, switching to the other beam is performed by the serving base station.

In view of the above situation, when the cycle of providing CSI-RS is too short, it will cause relatively high signaling overhead or pilot overhead, while when the cycle of providing CSI-RS is too long, it will lead to the failure of beam switching in time, and even communication failure. Therefore, it is necessary to be able to accurately determine the beam switching position, and then determine the beam switching timing, so that beams can be switched accurately and with low overhead for wireless communication.

Wireless communication systems on transports (such as trains or vehicles, especially high-speed trains or vehicles) usually have the following three characteristics. First, a track followed by the train or vehicle often has a curvature radius larger than the radius of cell, so the track can be regarded as a one-dimensional topological structure in the cell, and the vertical distance from the base station to the track is easy to obtain. Secondly, a closed carriage will cause great attenuation of communication signals (especially millimeter wave signals). An effective solution is to install mobile equipments on the top of the carriage, such as the relay 30 shown in Figure 1, so the communication between the base station and the relay during the train running is mainly concerned in this disclosure. Third, in a scenario where trains or vehicles run along the track, there is often line-of-sight (LoS) transmission between base stations and relays, and there are few scattering paths. Therefore, in this case, it is feasible to achieve fast beam search and beam switching for relays on the train by improving location accuracy.

In view of the above considerations, the present disclosure proposes a technique for precise location of mobile devices on transports. Further, the present disclosure also provides a technique for performing beam search and/or beam switching by using the position of precisely located mobile devices in the wireless communication system of the vehicle. Particularly, in the technique disclosed in this disclosure, the mobile devices on transports are cooperatively located and/or tracked to improve the location accuracy, so that location-aided beam searching and beam switching can be performed with lower delay and overhead.

In the following, the technical implementation of the present disclosure will be exemplified for the application scenarios of high-speed trains. However, it should be pointed out that the technical implementation of this disclosure is not limited to this, and it can also be applied to other types of transports with a plurality of terminal devices installed, such as scenarios where mobile relays are installed on bus, subway, motorcade, etc., and a vehicle networking scenario, and so on.

«3. Princple of cooperative location >>

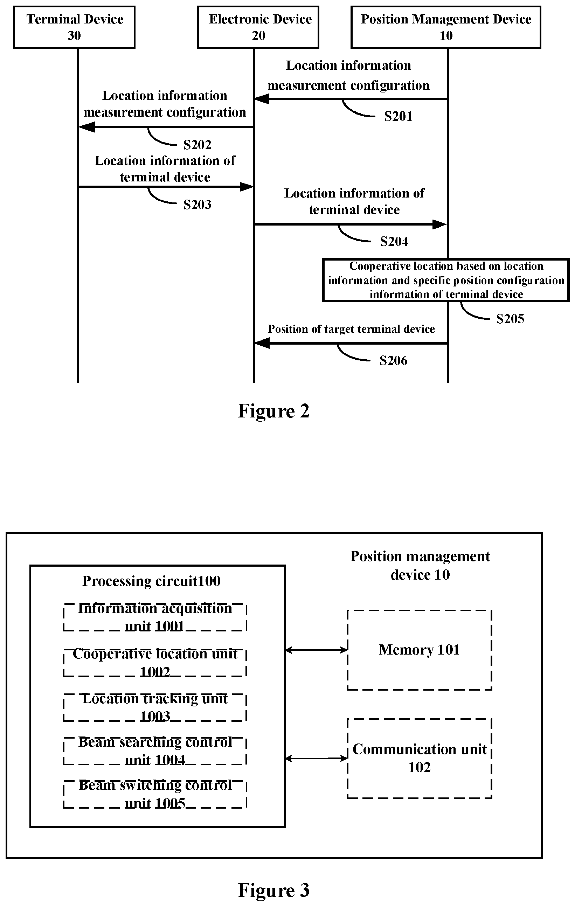

Next, a basic signaling flow 200 for terminal device location according to an embodiment of the present disclosure will be explained with reference to Fig. 2.

As shown in Fig. 2, first, in S201, the position management device 10 performs location information measurement configuration for the electronic device 20.

Next, in S202, the electronic device 20 performs location information measurement configuration for the terminal device 30 according to the location information measurement configuration received from the position management device 10. Although an example where the position management device 10 performs location information measurement configuration for the terminal device 30 via the electronic device 20 is exemplarily shown here, the present disclosure is not limited to this. For example, the position management device 10 may also directly perform location information measurement configuration for the terminal device 30.

Next, in S203, the terminal device 30 measures the location information of the terminal device 30 according to the location information measurement configuration, and transmits the measured location information of the terminal device 30 to the electronic device 20.

Then, at S204, the electronic device 20 transmits the received location information of the terminal device 30 to the position management device 10. Although only an example in which the location information of the terminal device is transmitted from the terminal device 30 to the position management device 10 via the electronic device 20 is shown here, the present disclosure is not so limited, for example, the terminal device 30 may directly transmit the location information of the terminal device 30 to the position management device 10.

Next, in S205, the position management device 10 performs cooperative location based on the received location information of the terminal devices and specific position configuration information of the terminal devices, thereby determining location information of a target terminal device among the terminal devices. In some embodiments, a train or a vehicle is equipped with a plurality of terminal devices, and the specific position configuration information of the terminal devices includes specific position relationships among the terminal devices, such as the distance, the direction angle, and so on among the terminal devices. In some embodiments, the terminal devices are arranged following a specific trajectory, and the specific position configuration information also includes the position information of the specific trajectory followed by the terminal device.

Finally, in S206, the position management device 10 transmits the determined position of the target terminal device to the electronic device 20 to further realize the location of other terminal devices. As an example, the electronic device can determine positions of other terminal devices based on the received position information of the target terminal device, so as to accurately communicate with a corresponding terminal device. It should be noted that, as another example, the position management device 10 can also locate other terminal devices by itself, and transmit the location of the located terminal devices to each electronic device, so that the electronic device can conveniently and accurately communicate with a corresponding terminal device.

In this disclosure, the location of a terminal device considers not only the location information of the terminal device itself, but also the positional relationship between the terminal device and other terminal devices, etc., so the location operation of this disclosure can be called cooperative location.

According to the present disclosure, by applying the specific position configuration information of at least one terminal device to cooperative location, the location accuracy of the terminal device can be significantly improved. This cooperative location is especially suitable for transports with specific arrangements, such as high-speed trains or vehicles.

Implementations of various devices of the present disclosure will be described in detail below with reference to the accompanying drawings.

«4. Structural configuration of device»

<4.1 Structural configuration of a position management device>

Fig. 3 is a block diagram schematically illustrating an example structure of a position management device according to an embodiment of the present disclosure. As shown in fig. 3, the position management device 10 includes a processing circuit 100, a memory 101, and a communication unit 102.

According to this embodiment, the processing circuit 100 may be configured to acquire location information of at least one terminal device on the terminal side in the wireless communication system, wherein at least one terminal device has specific position configuration information; determines position information of a target terminal device in the at least one terminal device based on the specific position configuration information of the at least one terminal device and the location information of the at least one terminal device.

In the structural example of the above device, the processing circuit 100 may be in the form of a general-purpose processor, or may be a dedicated processing circuit, such as an ASIC. For example, the processing circuit 100 can be configured by a circuit (hardware) or a central processing device such as a central processing unit (CPU). In addition, the processing circuit 100 may carry a program (software) for operating the circuit (hardware) or the central processing device. The program can be stored in a memory (such as arranged in the memory 101) or an external storage medium connected from the outside, and downloaded via a network (such as the Internet).

According to this embodiment, the processing circuit 100 may include an information acquisition unit 1001 configured to acquire the location information of at least one terminal device on the terminal side in the wireless communication system. According to this embodiment, the location information of a terminal device includes time-related location information or beam-related location information determined by the terminal device in combination with a control-side electronic device serving the terminal device.

According to this embodiment, when the control-side electronic device serving the terminal device is a first electronic device conforming to the 4G communication standard (i.e., connected to the LTE network), the location information can be time-related location information, which includes but is not limited to observed time difference of arrival (OTDOA) measurement result, which indicates a time difference between location reference signals PRS simultaneously sent by two first electronic devices serving the terminal device arriving at the terminal device. Additionally or alternatively, when the control-side electronic device serving the terminal device is a second electronic device conforming to the 5G communication standard (i.e., connected to the NR network), the location information may be beam-related location information, which includes beam information of a downlink transmission beam for the second electronic device communicating with the terminal device, which indicates angle or coverage information of the downlink transmission beam for the terminal device.

According to this embodiment, the location information of the terminal device can be acquired by the position management device from the terminal device, or from the control side electronic device serving the terminal device.

According to this embodiment, the location information of the terminal device can be periodically acquired based on a location cycle. According to this embodiment, the location cycle can be set to be equal to or less than a cycle in which the control-side electronic device conforming to 4G communication standard transmits the location reference signal PRS to the terminal device. As an example, the location information of the terminal device can be periodically acquired like time-related location information. As another example, the location information of the terminal device may be acquired according to a cycle smaller than the cycle of acquiring the time-related location information. This acquisition cycle can be preset by the communication system.

According to this embodiment, the location information of the terminal device can be acquired in real time. As an example, the location information of the terminal device can be acquired in response to trigger of a specific event. For example, when a terminal device accesses to the communication system, the control side electronic device or the terminal device can transmit the location information of the terminal device to the position management device. For example, the location information of the terminal device can be acquired in real time at the request of the position management device, the control side electronic device or other devices. Of course, the location information of the terminal device can also be acquired in real time in response to other specific events.

For example, the periodically acquired location information of the terminal device can usually be time-related location information, and the real-time acquired location information of the terminal device can usually be beam-related location information.

In addition, the information acquisition unit 1001 may also be configured to acquire specific position configuration information of at least one terminal device.

According to an embodiment, the specific position configuration information of the terminal devices includes a specific position relationship between at least one terminal device. According to an embodiment, when there are a plurality of terminal devices, the specific position configuration information of the terminal devices indicates a specific position relationship among the plurality of terminal devices, including but not limited to a distance, a direction angle, and the like. According to an embodiment, the terminal devices are arranged following a specific trajectory, and the specific position configuration information further includes the position information of the specific trajectory followed by the terminal devices. The specific position configuration information can be known/recorded in the communication system in advance or notified to the position management device, or measured by the electronic device on the control side or a specific terminal device (for example, a target terminal device) and provided to the position management device.

According to this embodiment, the processing circuit 100 may further include a cooperative location unit 1002. According to this embodiment, the cooperative location unit 1002 may be configured to determine the position information of the target terminal device in at least one terminal device based on the specific position configuration information of at least one terminal device and the location information of at least one terminal device.

According to this embodiment, when at least one terminal device includes a plurality of terminal devices, the cooperative location unit 1002 may be configured to determine a position error function of each terminal device among the plurality of terminal devices with respect to the target terminal device, based on position information of the control-side electronic device serving the plurality of terminal devices of the wireless communication system, the specific position relationships among the plurality of terminal devices, and location information of each terminal device; and determine position information of the target terminal device based on the position error function of each of the plurality of terminal devices.

As an example, the position error function can be constructed in a variety of ways, in particular, it can be constructed with the position of the target terminal device as a variable, and can be solved in a variety of ways to determine the position information of the target terminal device. For example, the cooperative location unit 1002 may be configured to determine the position information of the target terminal device based on the position error function according to a weighted minimum mean square error criterion.

According to this embodiment, in a case that at least one terminal device can be arranged following a specific trajectory, the cooperative location unit 1002 can be further configured to determine the location of the target terminal device based on position information of the specific trajectory followed by the plurality of terminal devices, wherein the position information of the specific trajectory is obtained by fitting the previously determined locations of terminal devices or obtained from a network map. Furthermore, as an example, the plurality of terminal devices may be arranged following a straight trajectory, and the spacing between the plurality of terminal devices is constant within a certain period of time, wherein the spacing between the plurality of terminal devices may be the same as or different from each ohter.

As an example, the position error function of each terminal device among a plurality of terminal devices with respect to the target terminal device can be constructed according to the location information of each terminal device and the position information of a specific trajectory, thereby determining the position information of the target terminal device. The position error function can be constructed and solved as described above.

According to an embodiment, the target terminal device may be a specific terminal device among at least one terminal device. As an example, when there are a plurality of terminal devices, the target terminal device may be the first terminal device or the final terminal device among the plurality of terminal devices, or a terminal device at a specific position which may be designated in advance. As another example, each of the at least one terminal device can be regarded as a target terminal device in turn, so that the position of the terminal device can be determined according to the scheme of the present disclosure.

In addition, the cooperative location unit 1002 can also be configured to determine the positions of other terminal devices among the plurality of terminal devices based on the determined position of the target terminal device and the specific positional relationship among the plurality of terminal devices, thereby realizing location for all terminal devices. As an example, for any terminal device, the position of the terminal device can be determined according to the relative position of the terminal device and the target terminal device, so that the position of each terminal device among a plurality of terminal devices can be determined. As another example, other terminal devices may be regarded as target terminal devices in turn, and their positions may be determined as described above, thereby realizing location for all terminal devices.

According to this embodiment, the processing circuit 100 may further include a location tracking unit 1003. According to this embodiment, the location tracking unit 1003 may be configured to estimate the position of the target terminal device at a specific moment based on the previously determined position information of the target terminal device and the location cycle. The estimation can be carried out in various ways. According to an embodiment, the estimation can be realized by fitting, especially linear fitting, the previously determined position information of the target terminal device. In some embodiments, the speed of the terminal device can be regarded as substantially constant during fitting, especially linear fitting.

According to an embodiment, the specific moment can be the current moment, so that the location tracking unit can estimate the position of the target terminal device at the current moment. In this case, the estimated position can be used to correct the previously calculated position at the current moment. According to an embodiment, the specific moment can be, for example, a certain time moment in the future, so the location tracking unit 1003 can track the position of the target terminal device at the future time moment.

According to this embodiment, the processing circuit 100 may further include a beam search control unit 1004. According to this embodiment, the beam search control unit 1004 may be configured to enable the control-side electronic device serving the terminal device to estimate the position of the terminal device at the current moment, based on the previously determined position of the terminal device; and enable the control-side electronic device serving the terminal device to configure the order of beam scanning based on the estimated position of the terminal device so as to scan beams for the terminal device.

In some embodiments, a beam whose beam direction is adjacent to the direction corresponding to the estimated position of the terminal device is scanned first. As an example, a beam having a beam direction corresponding to the estimated direction may refer to a beam whose beam direction is aligned or at least partially aligned with the estimated direction. As another example, a beam having a beam direction corresponding to the estimated direction may be a beam adjacent to the estimated direction. Thus, the beams can be scanned in a specific order. For example, scanning may start from a beam whose beam direction is aligned or at least partially aligned with the estimated direction. Or, they are scanned in turn according to the proximity of their beam directions to the estimated direction, with the nearest beam being scanned first. In some embodiments, when the beam gain is greater than a specific threshold, the beam is selected for data transmission with the terminal device, and the beam search control unit 1004 may be configured to control the control-side electronic device to stop beam scanning. In some embodiments, the beam gain may include the received signal strength of the beam. In a specific example, the beam search control unit 1004 configures and/or activates one or more CSI-RS resources for the terminal device through RRC (Radio Resource Control) signaling and/or downlink control signaling such as downlink control information DCI, and these CSI-RS resources corresponding to beams adjacent to a direction corresponding to the estimated position of the terminal device. Then, the control side electronic device can transmit CSI-RS signals on these CSI-RS resources through beams adjacent to the direction corresponding to the terminal position for the terminal device to receive (i.e., beam scanning). In another specific example, the beam search control unit 1004 may also configure and/or activate one or more CSI-RS resources for the terminal device through RRC (Radio Resource Control) signaling and/or downlink control signaling such as downlink control information DCI in advance, these CSI-RS resources corresponding to the beams adjacent to a direction corrsponding to the estimated position of the terminal device at a specific moment in the future. Then, at the specific moment in the future, the control side electronic device can transmit CSI-RS signals on these CSI-RS resources through the beams adjacent to the direction corresponding to the position of the terminal at the specific moment in the future for the terminal device to receive (i.e., beam scanning).

According to this embodiment, the processing circuit 100 may further include a beam switching control unit 1005. According to this embodiment, the beam switching control unit 1005 may be configured to enable the control-side electronic device serving the terminal device to determine a position of beam switching for the terminal device based on the intersection point of the current downlink transmission beam and the next downlink transmission beam for the terminal device; and enable the control-side electronic device serving the terminal device to estimate the time moment when the terminal device performs beam switching based on the determined position of the terminal device at a specific moment and the determined beam switching position.

In some embodiments, the control-side electronic device serving the terminal device transmits a pilot signal to the terminal device for beam switching before the estimated beam switching time moment. It should be noted that the pilot signal may be the same signal as the above-mentioned reference signal CSI-RS, PRS, etc., or may be a different signal. As an example, the control-side electronic device can use the current downlink transmission beam and the next downlink transmission beam to transmit pilot signals for beam communication with the terminal device, to judge whether beam switching can be performed. In some embodiments, when the gain of the next downlink transmission beam is larger than the gain of the current beam, the control-side electronic device serving the terminal device performs beam switching.

In addition, in some embodiments, the beam switching control unit 1005 is further configured to enable the control-side electronic device serving the terminal device to stop transmitting the pilot signal for beam switching while performing the beam switching..

It should be noted that the operations performed by the control-side electronic device serving the terminal device described above may also be performed by the position management device. That is, the position management device can directly serve the terminal device to perform operations performed by the control side electronic device, such as location and tracking of the terminal device, beam search and switching, and the like. As an example, in the case where there are a plurality of terminal devices, the control-side electronic device may serve some of the terminal devices to perform the above operations, while other terminal devices may directly perform the above operations by the position management device. For example, when there are multiple base stations or similar devices in the communication system, one of them can be selected as the position management device, which is also called as main base station, while the other base stations or similar devices can be used as the control-side electronic device, which is also called as auxiliary base station.

Furthermore, optionally, the electronic device 10 may further include a memory 101 and a communication unit 102 shown by dotted lines in the figure. In addition, the electronic device 10 may further include other components not shown, such as a radio frequency link, a baseband processing unit, a network interface, a processor, a controller, and the like. The processing circuit 100 may be associated with the memory 101 and/or the communication unit 102. For example, the processing circuit 100 may be directly or indirectly (for example, other components may be disposed therebetween) connected to the memory 101 for data access. Also for example, the processing circuit 100 may be directly or indirectly connected to the communication unit 102 to transmit radio signals via the communication unit 102 and receive radio signals via the communication unit 102.

The memory 101 may store various kinds of information generated by the processing circuit 100 (for example, information about composite data packet, information about the determined parameters, etc.), programs and data used for operation by the electronic device 10, data to be transmitted via the communication unit 102, and so on. The memory 101 is drawn with a dashed line because it can also be located inside the processing circuit 100 or even outside the electronic device 30. The memory 101 may be a volatile memory and / or a non-volatile memory, for example, the memory 101 may include, but not limited to, random access memory (RAM), dynamic random access memory (DRAM), static random access memory (SRAM), read-only memory (ROM), and flash memory.

The communication unit 102 may be configured to communicate with a terminal device under the control of the processing circuit 100. In one example, the communication unit 102 may be implemented as a transmitter or a transceiver, including communication components such as an antenna array and/or a radio frequency link, etc. In one implementation, the communication unit 102 may transmit position information of each terminal device determined in the processing circuit 100 to control-side electronic device serving each terminal device. In one embodiment, the communication unit 102 may also transmit and receive signaling.

Although Fig. 3 shows that the processing circuit 100 is separated from the communication unit 102, the processing circuit 100 may also be implemented to include the communication unit 102. In addition, the processing circuit 100 may also be implemented to include one or more other components in the position management device 10, or the processing circuit 100 may be implemented as the position management device 10 itself. In actual implementation, the processing circuit 100 may be implemented as a chip (such as an integrated circuit module including a single wafer), a hardware component or a complete product.

It should be noted that each of the above units only belongs to a logical module classified according to the specific function it implements, instead of limiting its specific implementation manner, for example, it can be implemented in software, hardware, or a combination of software and hardware. In an actual implementation, the foregoing units may be implemented as independent physical entities, or may be implemented by a single entity (for example, a processor (CPU or DSP, etc.), an integrated circuit, etc.). Furthermore, that the foregoing units are indicated by dotted lines in the figure indicates that the foregoing units may not actually exist, and the operation / functionality they achieve can be implemented by the processing circuit itself.

## Cooperative location

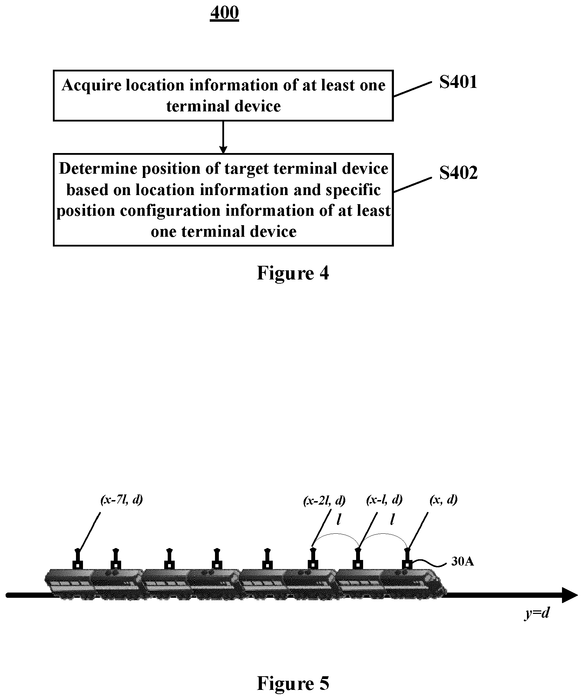

Next, the cooperative location operation implemented by the position management device will be explained with reference to Figs. 4 to 8.

Fig. 4 schematically shows a flowchart of the operation of the position management device according to an embodiment of the present disclosure.

At first, in step S401, a position management device acquires location information of at least one terminal device on the terminal side in the wireless communication system, wherein the at least one terminal device has specific position configuration information.

According to this embodiment, at least one terminal device may include a plurality of terminal devices, and the specific position configuration information may include a specific position relationship between a plurality of terminal devices, such as distance, relative angle, and the like.

In addition, in some embodiments, the terminal devices located on the same train can be grouped in advance, and the specific positional relationship among a plurality of terminal devices can be recorded at the same time. As an example, the terminal devices on the same train can be divided into one or more groups, and the specific positional relationship between all the terminal devices or the specific positional relationship between the terminal devices in each group can be recorded in a specific device in the communication network, such as a specific base station or other devices, in advance. The position management device can query the grouping of terminal devices and the specific position relationship of multiple terminal devices in the communication system. Where, the grouping can be valid for a long time, and the positional relationship of adjacent terminal devices in a group can remain unchanged within a specific period of time. For example, it can remain unchanged for a long time, and/or it can be updated and maintained regularly by operators. In other embodiments, the grouping relationship and the specific position relationship between the terminal devices can also be measured by the terminal device by itself and reported to the network side or the location management equipment.

In some embodiments, the plurality of terminal devices are arranged following a specific trajectory, and the specific locationspecific position configuration information further includes position information of the specific trajectory followed by the plurality of terminal devices. As an example, a plurality of terminal devices may be arranged following a linear trajectory, and the spacing between the plurality of terminal devices may be constant within a specific period of time.

Taking a high-speed train as an example, considering the length of the high-speed train and the huge data service demand on the train, for example, at least one relay can be installed on a train as the at least one terminal device. As illustrated in Fig. 5, considering that the track on which the high-speed train runs can be regarded as a one-dimensional topological structure, its trajectory can be regarded as a straight line, which can be expressed by $y=d$ in a coordinate system. Assuming that the coordinates of the first relay 30A are $(x,d)$, the coordinates of the second to eighth relays are $(x-l,d)$, $(x-2l,d)$, ..., $(x-7l,d)$.

It should be understood that although Fig. 5 only shows an example in which one relay is installed on each carriage and the intervals between the relays are equal, it should be noted that the relays may be arranged in other ways. In some embodiments, it is also possible to install multiple relays on each carriage or install one relay every several carriages as required, and the distance between the relays may be unequal. In addition, although Fig. 5 only shows an example in which the track is regarded as a straight line, in some embodiments, the track may not be limited to a straight line, for example, it may also be regarded as a curve or a broken line, as long as the positional relationship between relays is relatively fixed.

According to this embodiment, the location information of the terminal device may include time-related location information or beam-related location information determined by the terminal device in combination with a control-side electronic device serving the terminal device..

According to an embodiment, the location information of the terminal device may also include the information about estimated position of the terminal device. As an example, the position information of the terminal device can be estimated in various ways, such as a time correlation way or a beam correlation way to be described as below, and transmitted to the position management device as location information.

In the high-speed train communication scenario, different relays on the same train are served by different base stations, which may access LTE base station (eNB) or NR base station (gNB). The relay can choose to access the LTE network when the relay is located in an area where the NR network cannot provide services or the user data transmission served by the relay has a low demand while the relay can choose to access the NR network when the relay is located in an area where the LTE network cannot provide services or the user data transmission served by the relay has a high demand. Therefore, at least one of OTDOA location supported by LTE and downlink transmission beam location in NR can be used to realize cooperative location for all relays.

According to this embodiment, when the control-side electronic device serving the terminal device is an electronic device complying with the 4G communication standard (e.g., an LTE base station), the location information is time-related location information. LTE base station supports OTDOA location method. In addition, according to this embodiment, the time-related location information includes OTDOA measurement result, which indicates a time difference between location reference signals PRS simultaneously sent by two first electronic devices serving the terminal device arriving at the terminal device.

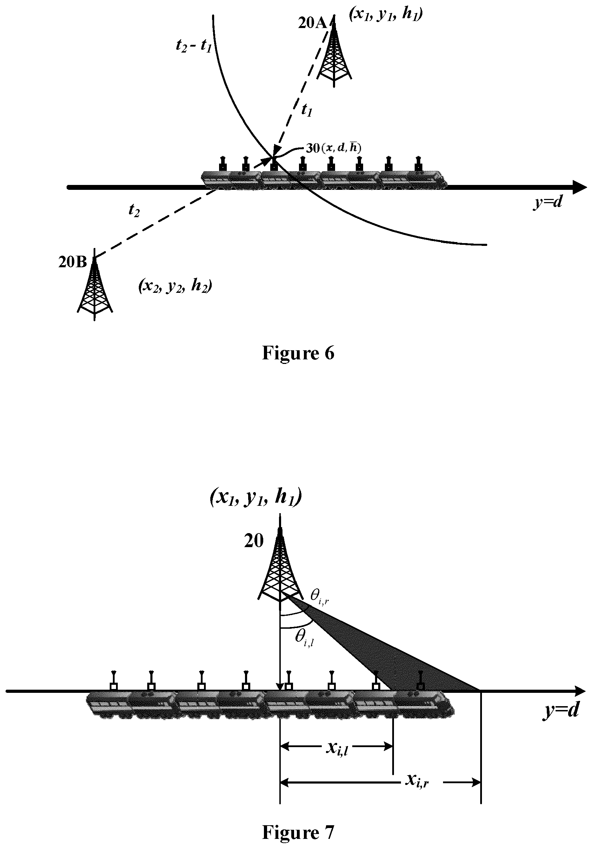

Fig. 6 is a diagram of the basic principle of OTDOA location according to an embodiment of the present disclosure. As shown in Fig. 6, considering that the height change of relay 30 has little influence on the location result during the train running, $\bar{h}$ is used to represent the average height of relay 30 during the running inside the cell, so the three-dimensional coordinates of relay 30 can be expressed as $(x, d, \bar{h})$. In some embodiments, both the vertical coordinate $d$ and the vertical coordinate $\bar{h}$ can be obtained in advance, for example, from a network map. As an example, $(x_1, y_1, h_1)$ and $(x_2, y_2, h_2)$ are used to represent the three-dimensional coordinates of the base stations 20A and 20B connected to the relay 30. The base station 20A and the base station 20B simultaneously transmit PRS to the relay 30 at a certain time. The relay 30 estimates the arrival times $t_1$ and $t_2$ of PRS by correlating the received signals with PRS signals from different base stations. The relay 30 reports the observed arrival time difference $\Delta t = t2 - t_1$ to the base station 20 in order to avoid the impact caused by clock deviation between the base station 20 and the relay 30. Considering the LoS transmission between the base station and the relay in the high-speed train scenario, the distance between the base stations 20A and 20B and the relay 30 satisfies Formula 1.

[Formula 1]

$$\sqrt{(x_2 - x)^2 + (y_2 - d)^2 + (h_2 - \bar{h})^2} - \sqrt{(x_1 - x)^2 + (y_1 - d)^2 + (h_1 - \bar{h})^2} = c\Delta t$$

Where c represents the velocity of light. Therefore, when the position coordinates of the base stations 20A, 20B and d, $\bar{h}$ are known, the unknown x can be solved by using Formula 1, and thus the position of the relay 30 can be obtained.

According to this embodiment, when the control-side electronic device serving the terminal device is an electronic device complying with the 5G communication standard (for example, NR base station), the location information is beam-related location information. NR base station supports the downlink transmission beam location method. According to this embodiment, the beam-related location information includes beam information of a downlink transmission beam for the second electronic device communicating with the terminal device, which indicates angle or coverage information of the downlink transmission beam for the terminal device..

Fig. 7 is a diagram schematically illustrating the basic principle of downlink transmission beam location according to an embodiment of the present disclosure. In the NR network, as shown in Fig. 7, for the $i$th downlink transmission beam from the base station 20, its horizontal angle coverage $(\theta_{i,l}, \theta_{i,r})$ can be obtained through the intersection of the beam and two adjacent beams (for example, including but not limited to the intersection of main lobes). As the track on which the high-speed train runs can be regarded as a one-dimensional topological structure, the coverage of the beam on the track can be expressed as the horizontal range $(x_{i,l}, x_{i,r})$, as shown in Figure 7. In addition, under the condition of LoS transmission, if the relay is located in the coverage area of beam $i$, beam $i$ can provide the highest beam gain for the relay among all beams. Therefore, the position of the relay served by the downlink transmission beam $i$ on the orbit can be estimated by Formula 2.

[Formula 2]

$$x_i = \frac{x_{i,l} + x_{i,r}}{2} = x_1 + (y_1 - d) * \frac{\tan\theta_{i,l} + \tan\theta_{i,r}}{2}$$

where, $x_{i,l} = x_1 + (y_1 - d)*\tan\theta_{i,l}$, $x_{i,r} = x_1 + (y_1 - d)*\tan\theta_{i,r}$

As described above, in the NR network, the relay can be located by using the downlink transmission beam. However, it should be understood that the location accuracy based on downlink transmission beam location depends on the length of the beam coverage on the track, and the length of the coverage depends on the beam width as well as the distance between the base station and the relay served by the beam. As shown in Fig. 7, for example, the beam width is $|\theta_{i,r} - \theta_{i,l}|$

It can be easily understood that the beam coverage angles $\theta_{i,l}$ and $\theta_{i,r}$ can also be located on both sides of the base station 20 in the horizontal direction. In this case, the value of $\theta_{i,l}$ can be negative. Therefore, the relay position can still be determined by the above Formula 2.

In addition, according to this embodiment, the location information of the terminal device can be acquired by the position management device from the terminal device, or by the position management device from the control side electronic device serving the terminal device.

In addition, according to this embodiment, the position management device can periodically acquire the location information according to a location cycle so as to periodically determine the location of the target terminal device. In some embodiments, the location cycle can be set to be equal to or less than a cycle in which the control-side electronic device conforming to 4G communication standard transmits the location reference signal PRS to the terminal device. In some embodiments, the location information can be acquired in real time.

In some embodiments, in an LTE network, PRS can be transmitted periodically, with typical periodic values such as 160ms, 320ms, 640ms, 1280ms, and so on. Therefore, the LTE base station can only periodically obtain the OTDOA measurement results reported by the relay, so as to carry out periodic cooperative location. In the NR network, for a relay connected to the NR base station, if the relay is in a connected state, the downlink transmission beam information used by the relay can be obtained at the NR base station at any time; if the relay is in an idle state, an optimal downlink transmission beam information used by the relay can be obtained by beam scanning, and its period is usually less than the OTDOA measurement period. Therefore, for example, the period of obtaining downlink transmission beam information can be set as an integral fraction of the OTDOA measurement period. By way of example, beam location information can be obtained on trigger or on demand, as described above.

It should note that although the position of a single relay can be determined according to Formula 1 or Formula 2 as described above, the position of a single relay thus obtained usually has a large error. For example, as mentioned above, when using OTDOA measurement results to locate relays, the location accuracy of OTDOA is still limited, which is mainly influenced by factors such as LTE system bandwidth, base station clock deviation, multipath, the distance between relay and base station, etc., and the location distance error can range from several meters to tens of meters. Similarly, there still exists a large location distance error when using beam information for location.

Therefore, this disclosure proposes cooperative location, that is, using the location information of each relay and the specific position relationship between the relays, the position information of a single relay can be determined more accurately.

Returning to fig. 4, after step S401, the position management device determines location information of a target terminal device among the at least one terminal device, based on the specific position configuration information of the at least one terminal device and the location information of the at least one terminal device.

In some embodiments, at least one terminal device includes a plurality of terminal devices, and the position management device can determine a position error function for each terminal device among the plurality of terminal devices with respect to the target terminal device, based on location information of a control-side electronic device serving the plurality of terminal devices of the wireless communication system, the specific position relationships among the plurality of terminal devices, and location information of each terminal device; and determine position information of the target terminal device based on the position error function for each terminal device of the plurality of terminal devices.

As an example, consider $N$ relays are installed on the same high-speed train at equal intervals, and the interval between respective relays is $l$. With $(x, d, \overline{h})$ representing the position of a first relay as the target relay, the position of the $i$th relay can be expressed as $(x - (i - 1) * l, d, \overline{h})$.

In some embodiments, the $i$th relay is connected to a LTE base station, and $\Delta t_i$ represents the OTDOA measurement result reported by the $i$th relay at time $t$, so the position error function for the $i$th relay with respect to the first relay position x can be expressed as Formula 3.

[Formula 3]

$$e_i(x) = \frac{1}{\sigma_m{}^2} (c\Delta t_i - \sqrt{\left(x_{i2} - (x - (i-1)*l)\right)^2 + (y_{i2} - d)^2 + \left(h_{i2} - \overline{h}\right)^2}$$

$$+ \sqrt{(x_{i1} - (x - (i-1)*l))^2 + (y_{i1} - d)^2 + (h_{i1} - \overline{h})^2})^2$$

Wherein $(x_{i1}, y_{i1}, h_{i1})$ and $(x_{i2}, y_{i2}, h_{i2})$ represent the three-dimensional coordinates of two LTE base stations connected to the $i$th relay. $\sigma_m{}^2$ represents the measurement variance of $c\Delta t_i$ estimated and configured by the base station.

In addition, as an alternative to Formula 3, the LTE base station can directly solve the position $x_i$ of the $i$th relay on the track according to Formula 1. Considering that the longitudinal coordinates and vertical coordinates of respective relays are approximately equal to those of the first relay, the position error function for the $i$th relay with respect to the first relay position x can also be expressed as Formula 4.

[Formula 4]

$$e_i(x) = \frac{1}{\sigma_e{}^2} (x_i - (x - (i-1)*l))^2$$

Where $\sigma_e{}^2$ represents the variance of the estimation result.

In some embodiments, the jth relay is connected to the NR base station, the position of the jth relay on the track can be expressed as $(x - (j - 1) * l)$, and the coverage area of the downlink transmission beam j used by the jth relay on the track at time t is $(\boldsymbol{x_{j^*,l}},\ \boldsymbol{x_{j^*,r}})$.

[Formula 5]

$$e_j(x) = \left(x - (j-1)*l - \frac{x_{j^*,l} + x_{j^*,r}}{2}\right)^2 \Big/ \left(\frac{(x_{j^*,l} - x_{j^*,r})^2}{12}\right)$$

where $\dfrac{(x_{j^*,l} - x_{j^*,r})^2}{12}$ represents the variance of location according to the coverage of downlink transmission beam.

It should be pointed out that in Formula 5, $\dfrac{(x_{j^*,l} - x_{j^*,r})^2}{12}$ can also be replaced by the position of each relay directly solved.

In some embodiments, the position management device determines the position information of the target terminal device based on the position error function according to a weighted minimum mean square error criterion. In some embodiments, the position information of a specific trajectory followed by a plurality of terminal devices is known, for example, $\boldsymbol{d}$ is known. In this case, the position management device may further determine the position of the target terminal device based on the position information (e.g., $\boldsymbol{y} = \boldsymbol{d}$) of a specific track followed by a plurality of terminal devices. For example, the optimal location result $\boldsymbol{x^*}$ of the first relay at time t can be obtained by using the weighted minimum mean square error criterion, as shown in Formula 6.

[Formula 6]

$$x^* = \underset{x}{\operatorname{argmin}} \sum_{i=1}^{N} e_i(x)$$

In some embodiments, the calculation method of $\boldsymbol{e_i(x)}$ is selected between the OTDOA location method and the NR downlink transmission beam location method based on whether the $i$th relay is connected to a LTE base station or a NR base station. $\boldsymbol{e_i(x)}$ may correspond to a relay connected to a LTE base station, or a relay connected to a NR base station. It should be understood that N relays participating in the calculation may all be connected to LTE base stations or NR base stations at a certain time, and may also be partially connected to LTE base stations and partially connected to NR base stations. In some embodiments, one relay is only connected to LTE base station or NR base station at a specific moment. In some embodiments, the position information of a specific track can be obtained by fitting the previously determined positions of terminal device or obtained from a network map.

In some embodiments, the location information of a specific track followed by a plurality of terminal devices is unknown, for example, $\boldsymbol{d}$ is unknown. Particularly, when $\boldsymbol{d}$ is unknown, the position error function can be changed to $\boldsymbol{e_i(x, d)}$ with two unknowns, so that the optimal location result for the first relay and $\boldsymbol{d}$ can be jointly optimized into Formula 7.

[Formula 7]

$$(x^*, d^*) = \underset{x,d}{\operatorname{argmin}} \sum_{i=1}^{N} e_i(x,d)$$

In some embodiments, according to Formula 7, by averaging the relay location results in a period of time, the track coordinate $\boldsymbol{y} = \hat{\boldsymbol{d}}$ in the average sense can be obtained, which can be applied to the later cooperative location. In addition, in some embodiments, the track coordinate $\boldsymbol{y} = \hat{\boldsymbol{d}}$ can also be continuously revised over time, so as to improve the accuracy of cooperative location.

Through the above process, the position of the target relay can be located more accurately.

The operation of cooperative location has been described above with the first relay as the target relay. It should be noted that the target relay is not limited to this, but can be a specific relay among multiple relays, such as the last relay, a relay in an intermediate position, or a relay at a specific position, and in view of the positional relationship among multiple relays, the position of any other relay among multiple relays can be expressed based on the position of the specific relay, so that the position of the target relay can still be calculated based on the above formula.

In some embodiments, the position management device may determine positions of other terminal devices among the plurality of terminal devices based on the determined position of the target terminal device and the specific positional relationship among the plurality of terminal devices. As an example, the positions of other terminal devices can be determined based on the positional relationship between the other terminal devices and the target terminal device. As another example, each of a plurality of terminal devices may be sequentially taken as a target terminal device for position determination as described above. For example, the position of each target terminal device can be determined based on the estimated positions of other terminal devices. Also, for example, the calculation can be performed by using a Gauss-Newton iteration method, wherein the position of a later target terminal device can be iteratively determined based on the determined position of the previous target terminal device.

In addition, in some embodiments, the position management device may transmit the determined position of each terminal device to the control-side electronic device serving each terminal device, so that the control-side electronic device can locate each terminal device. In some embodiments, the position management device may transmit the determined position of the target terminal device to the control-side electronic device serving each terminal device, so that the control-side electronic device can locate each terminal device. For example, one control-side electronic device can locate several terminal devices it serves.

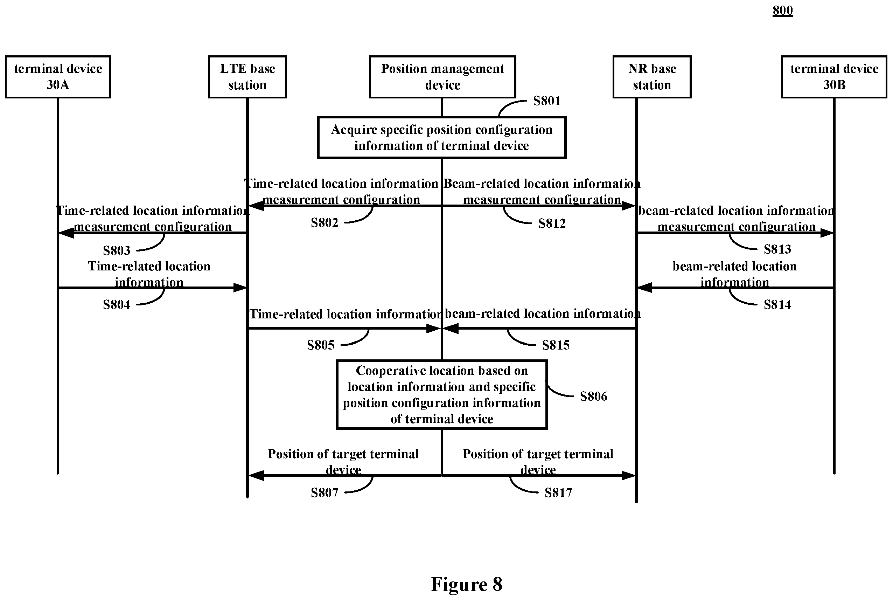

Next, the signaling flow 800 in this specific example of cooperative location will be explained with reference to Fig. 8. Fig. 8 is an exemplary signaling flow chart schematically illustrating cooperative location according to an embodiment of the present disclosure.

First, in S801, the position management device acquires specific position configuration information of terminal devices. Among them, the specific position configuration information of terminal devices indicates the specific position relationship between a plurality of terminal device, for example, the distance, the direction angle and so on between a plurality of terminal device. For example, the specific position configuration information of the terminal devices can be obtained by fitting the previously determined positions of the terminal devices or obtained from a network map in advance.

Next, in S802, when the terminal device 30A is connected to the LTE base station, the position management device performs time-related position information measurement configuration for the LTE base station serving the terminal device 30A.

Next, in S803, the LTE base station performs time-related location information measurement configuration on the terminal device 30A according to the time-related location information measurement configuration received from the position management device. Although only an example in which the position management device performs time-related location information measurement configuration on the terminal device 30A via the LTE base station is shown here, the present disclosure is not limited to this, for example, the position management device may also directly perform time-related location information measurement configuration on the terminal device 30A.

Next, in S804, the terminal device 30A measures the time-related location information of the terminal device 30A according to the time-related location information measurement configuration, and transmits the measured time-related location information of the terminal device 30A to the LTE base station. Then, in S805, the LTE base station transmits the received time-related location information of the terminal device 30A to the position management device. Although only an example in which the time-related location information of the terminal device 30A is transmitted from the terminal device 30A to the position management device via the LTE base station is shown here, the present disclosure is not limited to this, for example, the terminal device 30A may directly transmit the time-related location information to the position management device.

According to an embodiment, the time-related location information may include, for example, OTDOA measurement result information. According to an embodiment, the time-related location information may also include the location information of the relay determined according to the OTDOA measurement result.

In addition, similar to the above S802-S805, S812-S815 show the signaling flow when the terminal device 30B is connected to a NR base station. Instead of the time-related location information in S802-S805, the beam-related location information of terminal device 30B is measured, configured and transmitted in S812-S815, and the specific process therein is similar to the process of measuring, configuring and transmitting time-related information of terminal device 30A in S802-S805, and its description is omitted here.

According to this embodiment, the beam-related location information includes beam information of a downlink transmission beam for the NR base station communicating with the terminal device 30B, which indicates angle or coverage information of the downlink transmission beam for the terminal device 30B. According to an embodiment, the beam-related location information may also include the relay position information determined according to the beam information of the downlink transmission beam.

Next, in S806, the position management device performs cooperative location based on the received location information of the terminal devices and the specific position configuration information of the terminal devices, thereby determining the position information of a target terminal device among the terminal devices. According to this embodiment, the location information of the terminal device may include both the time-related location information of the terminal device 30A and the beam-related location information of the terminal device 30B, or either one of them. Among them, the specific position configuration information of the terminal devices indicates the specific position relationship between a plurality of terminal devices, for example, the distance, the direction angle, and so on between a plurality of terminal device.

Finally, in S807, the position management device transmits the determined position of the target terminal device to the LTE base station, so as to further realize cooperative location of all terminal devices. Similarly, in S817, the position management device transmits the determined position of the target terminal device to the NR base station, so as to further realize cooperative location of all terminal devices. As an example, the control-side electronic device can locate several terminal devices it serves based on the position of the target terminal device.

It should note that, as an example, the position management device may also determine the positions of all terminal devices, as described above, and transmit the determined positions of all terminal devices to the control side electronic device serving each terminal device, so that the control side electronic devices can locate each terminal device.

It should be understood that only the main signaling flow in the specific example of cooperative location according to the embodiment of the present disclosure is shown here, and the cooperative location according to the present disclosure naturally also includes other auxiliary signaling needed to complete the cooperative location. According to the principle and signaling flow of cooperative location as described above, the cooperative location according to the embodiment of the present disclosure is completed.

With reference to Figs. 4 to 8, the cooperative location operation performed by the position management device in a case where there are a plurality of terminal devices has been described above. According to the cooperative location process described above, the specific position configuration of terminal device can be utilized, and the advantages of OTDOA location and downlink transmission beam location can be comprehensively utilized, so that the location accuracy can be improved and the overhead can be reduced.

Furthermore, in this disclosure, each terminal device (e.g., relay) can only be connected to one of LTE base station or NR base station, and only upload one of time-related location information or beam-related location information, so that the transmitted information is simplified and the communication overhead can be reduced.

It has been described above that the position management device cooperatively locates the terminal devices when there are a plurality of terminal devices. Based on the accurate position information obtained by cooperative location, it can realize the real-time location of terminal devices at any time, and help to search and switch beams with lower delay and overhead. This will be described in further detail below.

Location tracking

In some embodiments, the position management device may also perform location tracking for a terminal device based on cooperative location. In some embodiments, the position management device may also estimate the position of the target terminal device at a specific moment based on the previously determined position information of the target terminal device and the location cycle. As an example, the position can be estimated by mathematical fitting, especially linear fitting. As an example, the specific moment may be the current moment, so that the position of the target terminal device at the current moment can be corrected. As an example, the specific moment can be a future time moment or an arbitrary time moment during a cycle, and thus the position of the target terminal device at the time moment can be estimated.

In some embodiments, in order to obtain the position of a relay at a specific moment, it is also necessary to know the speed information of the train. Generally, the acceleration of trains is less than **1m/s²**, so the speed of trains can be regarded as constant in a short time. According to some embodiments, the linear fitting method can be used to obtain the speed information of the train, so as to correct the position of the target terminal device at the current moment to further improve the location accuracy, and to further accurately estimate the position at any time.

In some embodiments, the position management device may use a least square linear fitting to obtain the speed of the train. However, it should be understood that the present disclosure can use any other linear fitting method to obtain the speed of the train.

As an example, the position of the train is represented by the position of the first relay, the cycle of cooperative location is represented by $T$, and $N_{LR}$ represents the number of cooperative location values required for linear fitting. $N_{LR}$ should be small enough to ensure that the speed can be regarded as a constant value within the fitting time, for example, $N_{LR} = \frac{1}{T}$. $x^*$ is used to represent the cooperative location value of the first relay at time $t$ calculated by the above cooperative location, and $\hat{x}_{t-T}, \hat{x}_{t-2T}, \cdots, \hat{x}_{-(N_{LR}-1)T}$ respectively represent the first $N_{LR} - 1$ location results (the first $N_{LR} - 1$ location results are derived from linear fitting of the previous results). The linear estimation model constructed by the least square method is shown in Formula 8.

[Formula 8]

$$\widehat{\beta} = [\widehat{x}_0, \widehat{v}]^T = (S^T S)^{-1} S^T X$$

Particularly,

- $\widehat{v}$ represents the speed to be estimated;

-

$$X = [x_t^*, \widehat{x}_{t-T}, \widehat{x}_{t-2T}, \ldots, \widehat{x}_{t-(N_{LR}-1)T}]^T;$$

-

$$S = \begin{bmatrix} 1 & 1 & \ldots & 1 \\ t & t-T & \ldots & t-(N_{LR}-1)T \end{bmatrix}^T。$$

According to Formula 8, the train speed $\widehat{v}$ and the origin coordinate $\widehat{x}_0$ of the fitting curve can be linearly fitted. Then, the location result at time t can be updated to $\widehat{x}_t = \widehat{x}_0 + \widehat{v} * t$ for the next fitting, so that the linear fitting curve can be corected continuously to make the fitting result more accurate.

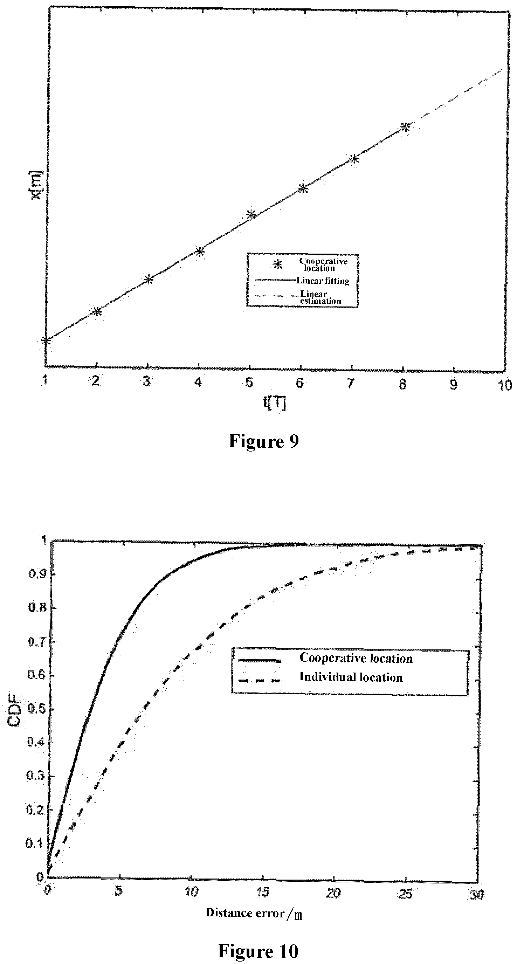

Fig. 9 is a diagram schematically illustrating a linear fitting result of location tracking for a terminal device according to an embodiment of the present disclosure. As shown in fig. 9, the correspondence curve between time t and relay position x is fitted according to the values of multiple cooperative location. Because the train speed can be regarded as constant in a short time, the fitting result here is approximately a straight line.

Furthermore, according to the embodiment of the present disclosure, the position of the train at a future time can be linearly predicted according to the fitting result. For example, for any future time $t_a$ after time $t$, the train position can be predicted as $\widehat{x}_{t_a} = \widehat{x}_t + \widehat{v} * (t_a - t)$, and the prediction result can be shown by the dotted line in Fig. 9. As an example, the position of the train at any time moment during the location cycle can be predicted according to the fitting result.

According to embodiments, the present disclosure can also use other methods for location tracking, for example, an extended Kalman filter method can be used for location tracking based on the previously determined position of the terminal device.

By further performing position estimation on the basis of cooperative location, the position of the terminal device at the current moment can be further accurately determined through correction. In addition, the position of the terminal device at a specific moment can be further accurately fitted and predicted, thereby realizing more accurate location of the terminal device.

Performance Analysis

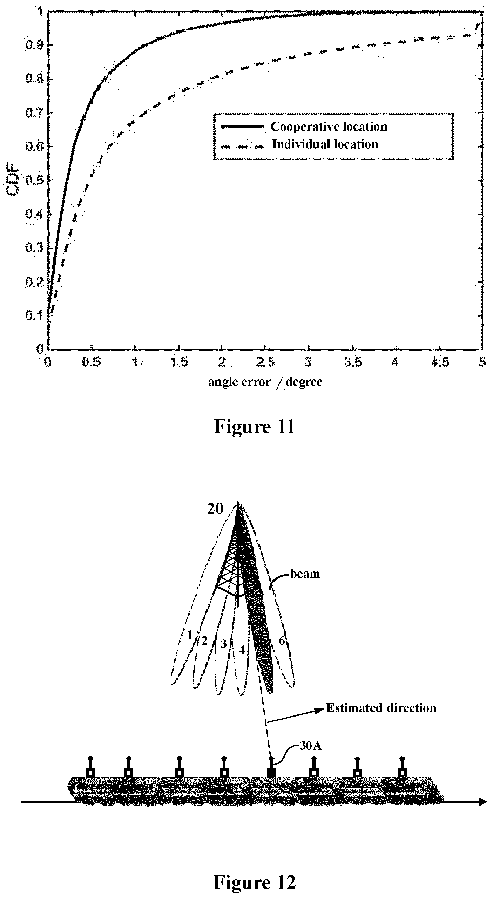

Next, with reference to Figs. 10 and 11, the performance of cooperative location aided location tracking according to an embodiment of the present disclosure will be explained.

As an example, assume that various parameters in the wireless communication system are configured as shown in Table 1.

**Table 1**

| param eters | Inter-base station distance | Distance between base station and railway | Height of base station | Number of relays | Inter-relay distance | Height of relay |
|---|---|---|---|---|---|---|
| values | 1000m | 100m | 35m | 8 | 50m | 10m |
| param eter | light velocity | LTE carrier frequency | LTE system band width | LTE sampling interval | standard deviation of base station clock | PRS transmiss ion period |
| values | c=3*10^8 m/s | 2GHz | 20MHz | $T_s$ =32.55n s | $\sigma_B = T_s$ | 160ms |

It is assumed that each base station provides six wide beams with a beam width of 30° to cover the railway for 180°, and each wide beam provides six narrow beams with a beam width of 5°. The initial speed of the train is 100m/s, and the acceleration obeys Gaussian distribution with mean value of 0 and variance of 1. During the train running, the first, third and seventh relays are connected to NR base stations, other relays are connected to LTE base stations, with the fourth relay acts as the target relay.

As an example, according to the above parameters, the location distance error and location angle error between cooperative location and individual location are calculated.

Fig. 10 schematically compares location distance errors between cooperative location aided location tracking according to an embodiment of the present disclosure and individual location tracking. As shown in Fig. 10, it is assumed that the location cycle is the same as the PRS cycle, for example, 160ms, and the number of fitting values required for location tracking is 10. According to the above parameters, the cumulative distribution function (CDF) of location distance errors of cooperative location aided location tracking according to the embodiment of the present disclosure and individual location tracking is statistically analyzed. Cumulative distribution function means that for a variable $x$, $x$ is less than or equal to the sum of occurrence probabilities of a certain value.

In Fig. 10, each point on the curve represents the sum of probabilities that the location distance error is less than or equal to a certain value. It can be seen that the cooperative location-aided location tracking according to the embodiment of the present disclosure has a higher probability of corresponding to a lower location distance error than the individual location tracking. As an example, according to statistics, the average distance error of cooperative location aided location tracking according to the embodiment of the present disclosure is 3.6m, while the average distance error of individual location tracking is 8.7m.

Fig. 11 schematically compares location angle errors between cooperative location aided location tracking according to an embodiment of the present disclosure and individual location tracking. In Fig. 11, each point on the curve represents the sum of probabilities that the location angle error is less than or equal to a certain value. It can be seen that the cooperative location-aided location tracking according to the embodiment of the present disclosure has a higher probability of corresponding to a lower location angle error than the individual location tracking. As an example, according to statistics, the average angle error of cooperative location aided location tracking according to the embodiment of the present disclosure is 0.45°, while the average angle error of individual location tracking is 1.44°.

Location-aided Beam searching

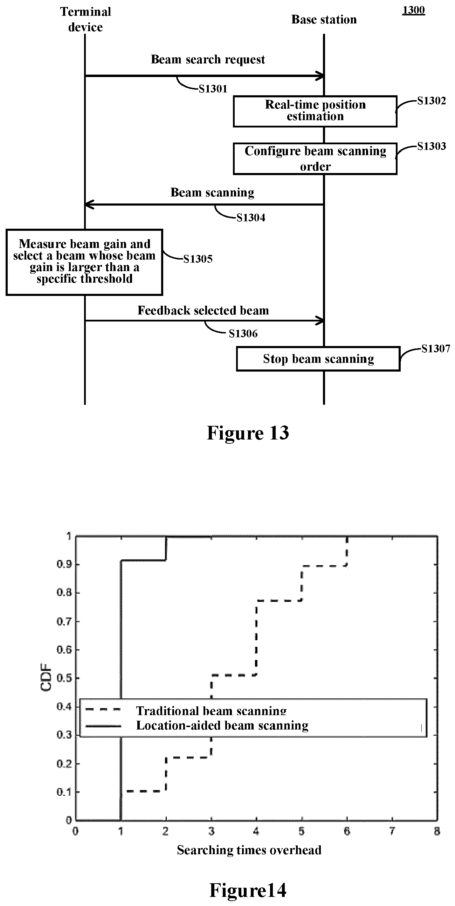

In some embodiments, location-aided beam searching may also be performed based on cooperative location as described above. Next, location-aided beam searching according to an embodiment of the present disclosure will be exemplarily described with reference to Figs. 12 and 13.

In some embodiments, the position management device may enable the control-side electronic device serving the terminal device to estimate the position of the terminal device at the current moment, based on the previously determined position of the terminal device; and enable the control-side electronic device serving the terminal device to configure the order of beam scanning based on the estimated position of the terminal device so as to scan beams for the terminal device.

It should be noted that, according to an embodiment, the previously determined position of the terminal device may include the position at the current moment determined according to the cooperative location operation described above. In addition, the previously determined position of the terminal device can also be the position at the specific time moment determined in the latest location tracking. Therefore, the position of the terminal device at the current moment can be estimated according to the aforementioned location tracking operation. It should be understood that the position of the terminal device at the current moment can also be estimated by other estimation methods.

Fig. 12 is a diagram schematically illustrating a location-aided beam searching according to an embodiment of the present disclosure. As shown in Fig. 12, when the base station 20 receives a request for beam searching from the target relay 30A, the base station 20 estimates the position $(\hat{x}, d)$ of the target relay 30A at the current moment based on the position and speed at the current moment and at a certain previous time moment acquired by the latest location tracking. Assuming that the two-dimensional coordinates of the base station 20 are $(x_1, y_1)$, the direction angle $\hat{\theta} = \arctan \frac{\hat{x} - x_1}{y_1 - d}$ of the target relay 30A relative to the base station 20 can be further estimated.

Next, according to the estimated $\hat{\theta}$, the base station 20 configures the scanning order of the downlink transmission beam. In some embodiments, a beam whose beam directiona is adjacent to the direction corresponding to the estimated position of the terminal device is scanned first. For example, among all the candidate beams, a beam whose beam direction is closer to the estimated $\hat{\theta}$ will be scanned preferentially. As shown in Fig. 12, according to the estimated direction angle $\hat{\theta}$, the scanning order of the downlink transmission beam at the base station 20 will be configured as 5 -> 4 -> 6 -> 3 -> 2 -> 1.

In some embodiments, when the beam gain is greater than a specific threshold, the beam is selected for data transmission with the terminal device, and the control-side electronic device stops beam scanning. As an example, the target relay 30A measures the gain of the currently scanned beam, and when the beam gain is greater than a predetermined threshold, the beam will be selected for data transmission. In some embodiments, the predetermined threshold for the beam gain may be configured according to the gain of the wide beam used before beam searching, for example. Then, the target relay 30A feeds back the selected beam to the base station, and the base station stops beam scanning.

For example, in the traditional beam search scheme, the base station usually scans beams in a fixed order, such as 1 -> 2 -> 3 -> 4 -> 5 -> 6. In contrast, in the embodiment of the present disclosure, a beam whose beam direction is adjacent to the direction corresponding to the estimated position of the terminal device is scanned preferentially, as described above, and thus, the optimal downlink transmission beam can be found more quickly. Thereby the delay and overhead caused by the beam search at the transmission end can be reduced.

Alternatively, the base station 20 may transmit the direction angle $\hat{\theta}$ of the target relay 30A estimated at the current moment to the target relay 30A, and the target relay 30A preferentially searches for a beam closer to $\hat{\theta}$ in the downlink receiving beam search. If the gain of the current beam is greater than the predetermined threshold, the beam will be selected for data transmission, and the target relay 30A stops beam searching, thus the delay and overhead caused by beam searching at the receiving end can be reduced.

Fig. 13 is a signaling flow chart schematically illustrating location-aided beam searching according to an embodiment of the present disclosure. As shown in Fig. 13, in S1301, the terminal device transmits a beam search request to the base station to request the base station to perform beam searching. Then, in S1302, the base station estimates the position of the terminal device in real time, thereby estimating the direction angle of the terminal device. Then, in S1303, the base station configures the beam scanning order according to the estimated direction angle. Then, in S1304, the base station performs beam scanning based on the configured beam scanning order. Then, in S1305, the terminal device measures the gain of the scanned beam, and when the scanned beam gain is greater than a predetermined threshold, selects the beam for communication. Then, in S1306, the terminal device feeds back the selected beam to the base station, and the base station and the terminal device can communicate by using the beam. At the same time that the base station receives the beam feedback, the base station stops beam scanning in S1307.

It should be noted that, in the embodiment of the present disclosure, the base station in Fig. 13 may employ a control-side electronic device serving the terminal device. In addition, in the case where the position management device directly serves the terminal device, the base station in Fig. 13 may employ the position management device.

Performance analysis of location-aided beam searching

Next, with reference to Fig. 14, the performance of location-aided beam searching according to an embodiment of the present disclosure will be explained. As shown in Fig. 14, the performance of location-aided beam searching is analyzed based on the parameters for analyzing cooperative location as described above.

Fig. 14 schematically compares the search times overhead before finding the optimal beam between the location-aided beam searchaccording to the embodiment of the present disclosure and the traditional beam search. It can be seen that, compared with the traditional beam search, the location-aided beam search according to the embodiment of the present disclosure has a higher probability of corresponding to lower search times overhead. As an example, according to statistics, the sum of the probability that location-aided beam search according to the embodiment of the present disclosure only needs to search once is 0.9, i.e., 90%, while the sum of the probability that the traditional beam search only needs to search once is 0.1, i.e., 10%. As an example, according to statistics, the average search time overhead of the location-aided beam search according to the embodiment of the present disclosure is 1.1 times, while the average search time overhead of the traditional beam search is 3.5 times.

Location-aided beam switching

In some embodiments, location-aided beam switching based on the cooperative location may also be performed.
Generally, when a train moves from the coverage of one beam to the coverage of an adjacent beam, in order to ensure reliable data transmission, the base station needs to switch the downlink transmission beam from the current beam to the adjacent beam. Generally, the base station will configure periodic pilot signals, such as CSI-RS, and require the relay to measure the gains of the current beam and adjacent beams. When the gain of adjacent beams is greater than that of current beams, beam switching will be triggered. However, if the pilot period is too short, it will lead to higher pilot signal overhead, while if the pilot period is too long, it will lead to the failure of timely beam switching and even communication failure.

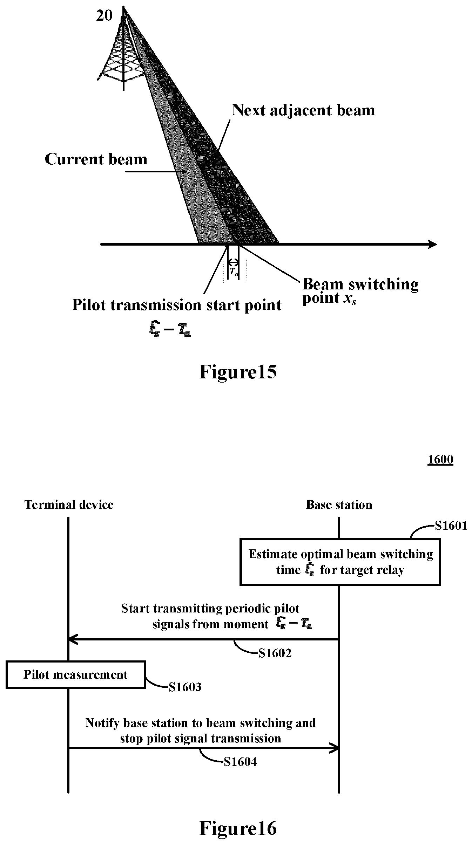

In this regard, the present disclosure proposes location-aided beam switching based on the cooperative location, which can accurately perform beam switching based on the cooperative location as described above. Next, location-aided beam switching according to an embodiment of the present disclosure will be exemplarily described with reference to Figs. 15 and 16.

In some embodiments, the position management device enable the control-side electronic device serving the terminal device to determine a position of beam switching for the terminal device based on the intersection point of the current downlink transmission beam and the next downlink transmission beam for the terminal device; and enable the control-side electronic device serving the terminal device to estimate the time moment when the terminal device performs beam switching based on the determined location of the terminal device at a specific moment and the determined beam switching position.

Fig. 15 is a diagram schematically illustrating location-aided beam switching according to an embodiment of the present disclosure. As an example, as shown in Fig. 15, when the base station 20 uses the LoS downlink transmission beam, the optimal position $x_s$ for beam switching can be determined according to the intersection of the current beam and adjacent beams (for example, including but not limited to the intersection of the main lobe).

In addition, through the latest location tracking, such as the location tracking described above, the base station obtains the position $\hat{x}_t$ and the speed $\hat{v}_t$ of the target relay at a certain time $t$, from which the base station can estimate

$$\hat{t}_s = t + \frac{x_s - \hat{x}_t}{\hat{v}_t}$$

the optimal time for beam switching, that is, .

However, considering the existence of position error, in order to avoid too late handover, it is preferred for the base station to start transmitting periodic pilot signals some time before the estimated optimal beam handover time. Therefore, in some embodiments, the control side electronic device serving the terminal device transmits a pilot signal to the terminal device for beam switching before the estimated beam switching time. As illustrated in Fig. 15, set a time advance $T_a$, the base station starts transmitting periodic pilot signals from the time moment $\hat{t}_s - T_a$. According to this embodiment, the size of $T_a$ should consider both the location error and the train speed, for example, the train speed estimated according to the location tracking described above. Of course, $T_a$ can be set according to experience in advance, for example.

In addition, in some embodiments, when the gain of the next downlink transmission beam is larger than the gain of the current beam, the control side electronic device serving the terminal device performs beam switching. In some embodiments, the position management device causes the control side electronic device serving the terminal device to stop transmitting the pilot signal for beam switching while performing beam switching. As illustrated in Fig. 15, the target relay measures the gains of the current beam and the adjacent beam, and when the gain of the adjacent beam is greater than the gain of the current beam, the target relay notifies the base station to perform beam switching and stop transmitting pilot signals. In this way, it is only necessary to transmit periodic pilot signals near the time of beam switching, thus realizing timely beam switching with lower pilot signal overhead.

The signaling procedure of the above location-aided beam switching will be described below. Fig. 16 is a signaling flow chart schematically illustrating location-aided beam switching according to an embodiment of the present disclosure. As shown in Fig. 16, in S1601, the base station first estimates the optimal beam switching time $\hat{t}_s$ for the target relay. Then, in S1602, the base station starts transmitting periodic pilot signals from time $\hat{t}_s - T_a$, where $T_a$ is the set time advance. Then, in S1603, the terminal device performs pilot measurement to obtain the gains of the current beam and adjacent beams. When the gain of the adjacent beam is greater than the gain of the current beam, the terminal device notifies the base station to perform beam switching and stop the pilot signal transmission in S1604.

Performance analysis of location-aided beam switching

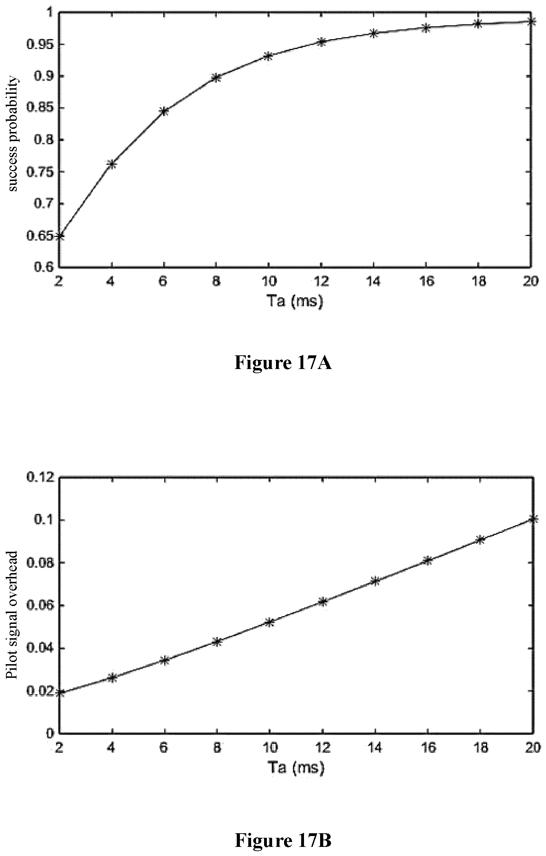

Next, with reference to figs. 17A and 17B, the performance of location-aided beam switching according to an embodiment of the present disclosure will be explained. As shown in fig. 17A and fig. 17B, the performance of location-aided beam switching is analyzed based on the parameters for analyzing cooperative location as described above.

Figs. 17A and 17B schematically show the relationship between the success probability of location-aided beam switching and pilot signal overhead and time advance $T_a$, respectively, according to an embodiment of the present disclosure. According to this embodiment, switching success is defined as the position of the target relay being before the optimal beam switching point when the pilot is started to be transmitted. In addition, the pilot signal overhead in Fig. 17B refers to the ratio of the location-aided beam switching according to the embodiment of the present disclosure to the pilot signal overhead required by the conventional mechanism using periodic pilots.

It can be seen from Fig. 17A and Fig. 17B that with the increase of $T_a$, the success probability of beam switching becomes higher, and at the same time, the pilot signal overhead of location-aided beam switching according to the embodiment of the present disclosure is far less than the pilot signal overhead required by the traditional mechanism, specifically, it is on the order of a few tenths of the pilot signal overhead required by the traditional mechanism. According to this embodiment, further, by setting a reasonable $T_a$, a trade-off between the success probability of beam switching and the pilot signal overhead can be achieved.

As described above, compared with individual relay location, the multi-relay cooperative location according to the present disclosure can achieve higher location accuracy. In addition, by performing beam searching with the aid of real-time cooperative location, the search times and delay required for beam searching can be reduced significantly, and by performing beam switching with the aid of real-time cooperative location, timely beam switching can be realized with lower pilot signal overhead.

The implementation of the present disclosure has been described above for the case where at least one terminal device is a plurality of terminal devices. It should note that the implementation of the present disclosure is not limited thereto. The implementation of the present disclosure can still be effectively used in the case of a single terminal device, and also obtain favorable effects. According to an embodiment, the implementation of the present disclosure can use the scene information of a specific scene where a single terminal device is located to locate the terminal device, and can further perform location tracking, beam searching and switching based on the location result.

Hereinafter, the implementation of the present disclosure will be described for an embodiment in which at least one terminal device includes only one terminal device.

In some embodiments, at least one terminal device may include only one terminal device. The position management device can receive an indication from the terminal device about the communication scene in which the terminal device is located, wherein the communication scene includes a communication scene in which the terminal device moves along a specific track, and the position management device determines a corresponding terminal location scheme for location of the terminal device based on the communication scene indication.

For example, when a relay, a base station or a network initiates a location request, the position management device can first confirm that the relay is located on the track, and then the position management device obtains the coordinates of the track and determines the corresponding location scheme. In some embodiments, the location scheme may include, for example, an OTDOA location scheme, a downlink transmission beam location scheme, and the like.

In some embodiments, it can be confirmed as a relay on the train, for example, by assigning a special ID to the relay on the track or by using a high-speed flag given by a speed sensor. In some embodiments, the track coordinates in the average sense can be given by fitting the long-term relay location results, or the track coordinates can be determined by accessing a network map.

In some embodiments, if the terminal device is located in an LTE network, the location management device determines to employ the OTDOA location scheme, and provides the terminal device with auxiliary information for carrying out the OTDOA location scheme, wherein the auxiliary information includes configuration information of a plurality of candidate base stations for the terminal device to measure; the location management device receives measurement results for two of the candidate base stations fed back by the terminal device, and carries out OTDOA location for the terminal device based on specific track information and measurement results for the two base stations. In some embodiments, the plurality of candidate base stations includes only 2 base stations. In some embodiments, the auxiliary information may include at least one of the following items: physical cell ID, global cell ID, transmission point ID of the candidate base station, relative timing relationship between the candidate base station and the reference base station, and location reference signal PRS configuration of the candidate base station. Here, the base station may correspond to the control-side electronic device in the present disclosure. It should be understood that the position management device can be implemented as, for example, an Enhanced Serving Mobile Location Center (E-SMLC) in TS36.305 standard or the Location Management Function (LMF) defined in TS38.305, or it can be one of the base stations to directly serve the terminal device.

In some embodiments, if the terminal device is located in an NR network, the location management device determines to employ a downlink transmission beam location scheme, receives the measurement results for one or more beams fed back by the terminal device, and performs downlink transmission beam location based on the information of a specific track and the beam measurement results from the terminal device. In some embodiments, the terminal device feeds back the measurement results for only one beam to the location management device. In some embodiments, the measurement result for the beam fed back by the receiving terminal device includes, for example, the beam number, and the position management device can obtain the beam information of the beam based on the selected beam number, and then perform downlink transmission beam location. The position management device can be implemented as LMF defined in TS38.305, for example.

It should be understood that, as another example, in the case of NR network, there may still be a single control side electronic device for beam communication with the terminal device, and the terminal device may transmit the measurement result for the beam to the position management device via the control side electronic device, and the position management device may provide the determined beam information to the control side electronic device, so that the control side electronic device can perform downlink transmission beam location for the terminal device.

As described above, in the case where there is only one terminal device, for a scene such as trains or vehicles traveling along specific tracks, by using the track information, the number of base stations with line-of-sight transmission the relay required for location of relay can be reduced. Specifically, OTDOA location only needs two base stations, while downlink transmission beam location only needs one base station. Therefore, the position error caused by non-line-of-sight transmission can be reduced.

«4.2. Structrual Configuration of Electronic device»

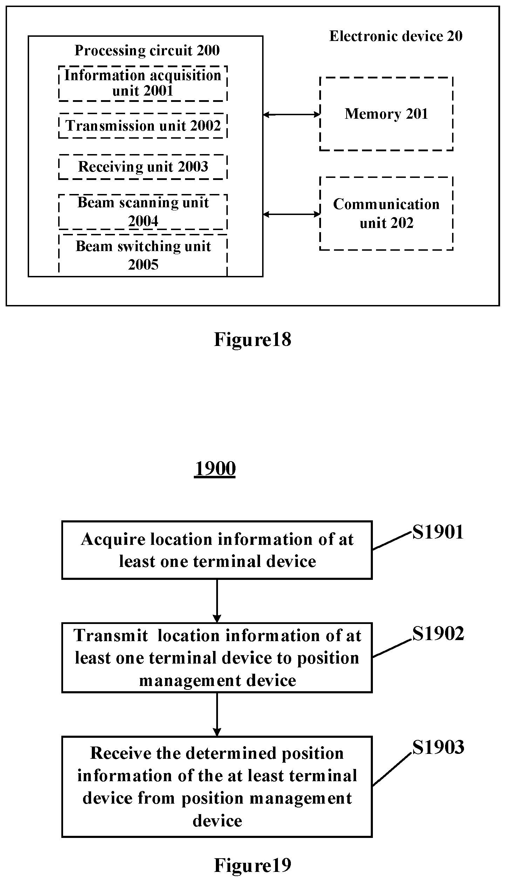

Fig. 18 is a block diagram schematically illustrating an examplary structure of an electronic device according to an embodiment of the present disclosure. As shown in Fig. 18, the electronic device 20 includes a processing circuit 200, a memory 201, and a communication unit 202.

According to this embodiment, the processing circuit 200 may be configured to acquire location information of at least one terminal device on the terminal side in the wireless communication system that the electronic device serves, wherein the at least one terminal device has specific position configuration information; transmit the location information of the at least one terminal device to a position management device in a wireless communication system, so that the position management device can determine location information of terminal device based on the location information and the specific position configuration information of the at least one terminal device; and receive the determined position information of the at least one terminal device from the position management device.

In the structural example of the electronic device 20, the processing circuit 200 may be in the form of a general-purpose processor, or may be a dedicated processing circuit, such as an ASIC. For example, the processing circuit 200 can be configured by a circuit (hardware) or a central processing device such as a central processing unit (CPU). In addition, the processing circuit 200 may carry a program (software) for operating the circuit (hardware) or the central processing device. The program can be stored in a memory (such as arranged in the memory 201) or an external storage medium connected from the outside, and downloaded via a network (such as the Internet).

According to this embodiment, the processing circuit 200 may include an information acquisition unit 2001, which may be configured to acquire location information of at least one terminal device on the terminal side in the wireless communication system that the electronic device serves,. In some embodiments, at least one terminal device may have specific position configuration information. In addition, in some embodiments, the location information of the terminal device may include time-related location information or beam-related location information determined by the terminal device in combination with the control-side electronic device serving the terminal device.

According to this embodiment, the processing circuit 200 may further include a transmission unit 2002, which may be configured to transmit the location information of at least one terminal device to a position management device in the wireless communication system. In addition, in some embodiments, the transmission unit 2002 may also be configured to periodically transmit location information to the position management device according to the location cycle, so as to periodically determine the position of the terminal device.

According to this embodiment, the processing circuit 200 may further include a receiving unit 2003, which may be configured to receive the determined position information of at least one terminal device from the position management device. In addition, in some embodiments, the processing circuit 200 may also be configured to locate other terminal devices according to the received determined position information of the terminal devices.

According to this embodiment, the processing circuit 200 may further include a beam scanning unit 2004, which may be configured to estimate the position of the terminal device at the current moment, based on the previously determined position of the terminal device; and configure the order of beam scanning based on the estimated position of the terminal device so as to scan beams for the terminal device. In some embodiments, the beam scanning unit 2004 may also be configured to scan a beam whose beam direction is adjacent to a direction corresponding to the estimated position of the terminal device first. In addition, in some embodiments, the beam scanning unit 2004 may also be configured to select the beam for data transmission with the terminal device and stop beam scanning when the beam gain is greater than a specific threshold.

According to this embodiment, the processing circuit 200 may further include a beam switching unit 2005, which may be configured to determine a position of beam switching for the terminal device based on the intersection point of the current downlink transmission beam and the next downlink transmission beam for the terminal device; and estimate the time moment when the terminal device performs beam switching based on the determined position of the terminal device at a specific moment and the determined beam switching position. In some embodiments, the beam switching unit 2005 may also be configured to cause the transmission unit 2002 to transmit a pilot signal to the terminal device for beam switching before the estimated beam switching time moment. In addition, in some embodiments, the beam switching unit 2005 may be further configured to perform beam switching to switch the downlink transmission beam to the next downlink transmission beam when the gain of the next downlink transmission beam is greater than the gain of the current beam. In addition, in some embodiments, the beam switching unit 2005 may also be configured to stop transmitting the pilot signal for beam switching while performing beam switching.

Furthermore, optionally, the electronic device 20 may further include a memory 201 and a communication unit 202 shown by dotted lines in the figure. In addition, the electronic device 20 may further include other components not shown, such as a radio frequency link, a baseband processing unit, a network interface, a processor, a controller, and the like. The processing circuit 200 may be associated with the memory 201 and/or the communication unit 202. For example, the processing circuit 200 may be directly or indirectly (for example, other components may be disposed therebetween) connected to the memory 201 for data access. Also for example, the processing circuit 200 may be directly or indirectly connected to the communication unit 202 to transmit radio signals via the communication unit 202 and receive radio signals via the communication unit 202.

The memory 201 may store various kinds of information generated by the processing circuit 200 (for example, information about composite data packet, information about the determined parameters, etc.), programs and data used for operation by the electronic device 20, data to be transmitted via the communication unit 202, and so on. The memory 201 is drawn with a dashed line because it can also be located inside the processing circuit 200 or even outside the electronic device 20. The memory 201 may be a volatile memory and / or a non-volatile memory, for example, the memory 201 may include, but not limited to, random access memory (RAM), dynamic random access memory (DRAM), static random access memory (SRAM), read-only memory (ROM), and flash memory.

The communication unit 202 may be configured to communicate with a position management device and a terminal device under the control of the processing circuit 200. In one example, the communication unit 202 may be implemented as a transmitter or a transceiver, including communication components such as an antenna array and/or a radio frequency link, etc. In one embodiment, the communication unit 202 may transmit the location information of at least one terminal device acquired by the processing circuit 200 to the position management device in the wireless communication system.. In one embodiment, the communication unit 202 may also transmit and receive signaling required by the process described in the embodiments of the present disclosure.

Although it is shown in FIG. 18 that the processing circuit 200 is separated from the communication unit 202, the processing circuit 200 may also be implemented to include the communication unit 202. In addition, the processing circuit 200 may also be implemented to include one or more other components in the electronic device 20, or the processing circuit 200 may be implemented as the electronic device 20 itself. In an actual implementation, the processing circuit 200 may be implemented as a chip (such as an integrated circuit module including a single wafer), a hardware component, or a complete product.

It should be noted that each of the above units is only a logical module classified according to the specific function it implements, instead of limiting its specific implementation manner, for example, it can be implemented in software, hardware, or a combination of software and hardware. In actual implementation, the foregoing units may be implemented as independent physical entities, or may be implemented by a single entity (for example, a processor (CPU or DSP, etc.), an integrated circuit, etc.). Furthermore, the above units are indicated by dotted lines in the figure means such units need not to exist actually, while the operations/functions implemented by the units can be implemented by the processing circuit itself.

Fig. 19 is a flowchart schematically illustrating the operation of an electronic device according to an embodiment of the present disclosure.

As shown in fig. 19, in step S1901, an electronic device acquires location information of at least one terminal device on the terminal side in the wireless communication system that the electronic device serves, wherein the at least one terminal device has specific position configuration information. In some embodiments, the location information of the terminal device includes time-related location information or beam-related location information determined by the terminal device in combination with the control-side electronic device serving the terminal device.

Then, in step S1902, the electronic device transmits the location information of the at least one terminal device to a position management device in a wireless communication system, so that the position management device can determine location information of terminal device based on the location information and the specific position configuration information of the at least one terminal device. In addition, in some embodiments, the electronic device may periodically transmit location information to the position management device according to a location cycle, so that the position management device can periodically determine the position of the terminal device. Among them, the specific details of determining the position of the terminal device by the position management device have been described above, and the description is not repeated here.

Then, in step S1903, the electronic device receives the determined position information of the at least one terminal device from the position management device.

In addition, in some embodiments, the electronic device can also estimate the position of the terminal device at the current moment, based on the previously determined position of the terminal device; and configure the order of beam scanning based on the estimated position of the terminal device so as to scan beams for the terminal device. In some embodiments, the electronic device can scan a beam whose beam direction is adjacent to a direction corresponding to the estimated position of the terminal device first. In some embodiments, when the beam gain is greater than a specific threshold, the beam can be selected for data transmission with the terminal device and stop beam scanning. Among them, the specific details of beam search have been described above, and the description will not be repeated here.

In addition, in some embodiments, the electronic device may also determine a position of beam switching for the terminal device based on the intersection point of the current downlink transmission beam and the next downlink transmission beam for the terminal device; and estimate the time moment when the terminal device performs beam switching based on the determined position of the terminal device at a specific moment and the determined beam switching position. In some embodiments, the electronic device can transmit a pilot signal to the terminal device for beam switching before the estimated beam switching time moment. In some embodiments, the electronic device can perform beam switching to switch the downlink transmission beam to the next downlink transmission beam when the gain of the next downlink transmission beam is greater than the gain of the current beam, while stop transmitting the pilot signal for beam switching. Among them, the specific details of beam switching have been described above, and the description is not repeated here.

In addition, in some embodiments, the electronic device can also locate other terminal devices according to the received determined position information of the terminal devices.

«4.3. Structural configuration of terminal device»

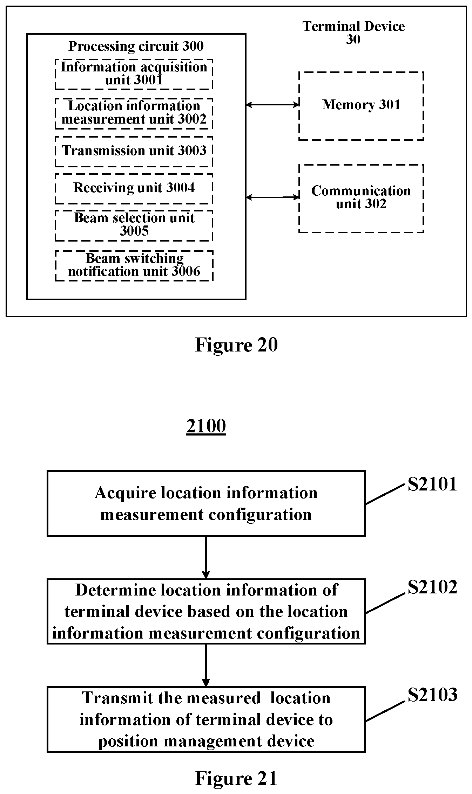

Fig. 20 is a block diagram schematically illustrating an examplary structure of a terminal device according to an embodiment of the present disclosure. As shown in fig. 20, the electronic device 30 includes a processing circuit 300, a memory 301, and a communication unit 302.

According to the embodiment, the processing circuit 300 can be configured to acquire a location information measurement configuration from an electronic device on a control side of a wireless communication system serving a terminal device; determine the location information of the terminal device based on the location information measurement configuration; and transmit the location information of the terminal device to the position management device in the wireless communication system, so that the position management device can determine position information of the terminal device based on the location information and specific position configuration information of the at least one terminal device including the terminal device.

In the structural example of the electronic device 30, the processing circuit 300 may be in the form of a general-purpose processor, or may be a dedicated processing circuit, such as an ASIC. For example, the processing circuit 300 can be configured by a circuit (hardware) or a central processing device such as a central processing unit (CPU). In addition, the processing circuit 300 may carry a program (software) for operating the circuit (hardware) or the central processing device. The program can be stored in a memory (such as arranged in the memory 301) or an external storage medium connected from the outside, and downloaded via a network (such as the Internet).

According to this embodiment, the processing circuit 300 may include an information acquisition unit 3001, which may be configured to acquire a location information measurement configuration from an electronic device on a control side of a wireless communication system serving a terminal device.

According to this embodiment, the processing circuit 300 may further include a location information measurement unit 3002, which may be configured to determine the location information of the terminal device according to the location information measurement configuration. In some embodiments, the location information of the terminal device includes time-related location information or beam-related location information determined by the terminal device in combination with the control-side electronic device serving the terminal device. In addition, in some embodiments, the location information measurement unit 3002 may also be configured to periodically determine the location information according to the location cycle.

According to this embodiment, the processing circuit 300 may further include a transmission unit 3003, which may be configured to transmit the location information of the terminal device to the position management device in the wireless communication system. In some embodiments, the transmission unit 3003 may also be configured to transmit a beam search request to the control-side electronic device serving the terminal device.

According to this embodiment, the processing circuit 300 may further include a receiving unit 3004, which may be configured to receive a scanning beam from the control-side electronic device. In some embodiments, the receiving unit 3004 may also be configured to receive a pilot signal from a control-side electronic device serving the terminal device.

According to this embodiment, the processing circuit 300 may further include a beam selection unit 3005, which may be configured to determine beam gains of scanning beams, select a beam for data transmission with the terminal device when the beam gain is greater than a specific threshold, and feed back the selected beam to the control-side electronic device.

According to this embodiment, the processing circuit 300 may further include a beam switching notification unit 3006, which may be configured to perform pilot measurement to determine the beam gain of the scanning beam, and notify the control side electronic device to perform beam switching to the scanning beam when the scanning beam gain is greater than the gain of the previous scanning beam.

Furthermore, optionally, the electronic device 30 may further include a memory 301 and a communication unit 302 shown by dotted lines in the figure. In addition, the electronic device 30 may further include other components not shown, such as a radio frequency link, a baseband processing unit, a network interface, a processor, a controller, and the like. The processing circuit 300 may be associated with the memory 301 and/or the communication unit 302. For example, the processing circuit 300 may be directly or indirectly (for example, other components may be disposed therebetween) connected to the memory 301 for data access. Also for example, the processing circuit 300 may be directly or indirectly connected to the communication unit 302 to transmit radio signals via the communication unit 302 and receive radio signals via the communication unit 302.

The memory 301 may store various kinds of information generated by the processing circuit 300 (for example, location information of terminal device, beam gain of scanning beam, etc.), programs and data used for operation by the electronic device 30, data to be transmitted via the communication unit 302, and so on. The memory 301 is drawn with a dashed line because it can also be located inside the processing circuit 300 or even outside the electronic device 30. The memory 301 may be a volatile memory and / or a non-volatile memory, for example, the memory 301 may include, but not limited to, random access memory (RAM), dynamic random access memory (DRAM), static random access memory (SRAM), read-only memory (ROM), and flash memory.

The communication unit 302 may be configured to communicate with an electronic device and a terminal device under the control of the processing circuit 300. In one example, the communication unit 302 may be implemented as a transmitter or a transceiver, including communication components such as an antenna array and/or a radio frequency link, etc. In one implementation, the communication unit 302 may transmit the location information of the terminal device determined in the processing circuit 300 to the position management device in the wireless communication system. In one implementation, the communication unit 302 may also transmit and receive signaling required by the process described in the embodiments of the present disclosure.

Although it is shown in FIG. 20 that the processing circuit 300 is separated from the communication unit 302, the processing circuit 300 may also be implemented to include the communication unit 302. In addition, the processing circuit 300 may also be implemented to include one or more other components in the electronic device 30, or the processing circuit 300 may be implemented as the electronic device 30 itself. In an actual implementation, the processing circuit 300 may be implemented as a chip (such as an integrated circuit module including a single wafer), a hardware component, or a complete product.

It should be noted that each of the above units is only a logical module classified according to the specific function it implements, instead of limiting its specific implementation manner, for example, it can be implemented in software, hardware, or a combination of software and hardware. In actual implementation, the foregoing units may be implemented as independent physical entities, or may be implemented by a single entity (for example, a processor (CPU or DSP, etc.), an integrated circuit, etc.). Furthermore, that the above units are indicated by dotted lines in the figure means such units need not to exist actually, while the operations/functions implemented by the units can be implemented by the processing circuit itself.

Fig. 21 is a flowchart schematically illustrating the operation of a terminal device according to an embodiment of the present disclosure.

As shown in fig. 21, in step S2101, the terminal device acquires a location information measurement configuration from an electronic device on a control side of a wireless communication system serving a terminal device. Then, in step S2102, the terminal device determines the location information of the terminal device according to the location information measurement configuration. In some embodiments, the location information of the terminal device includes time-related location information or beam-related location information determined by the terminal device in combination with the control-side electronic device serving the terminal device. In some embodiments, the terminal device may periodically determine the location information according to a location cycle.

Then, in step S2103, the terminal device transmits the location information of the terminal device to the position management device in the wireless communication system, so that the position management device can determine position information of the terminal device based on the location information and specific position configuration information of the at least one terminal device including the terminal device.

In addition, in some embodiments, the terminal device may transmit a beam search request to the control-side electronic device serving the terminal device; receive a scanning beam from an electronic device on the control side; and determine beam gain of the scanning beam, select the beam for data transmission with the terminal device when the beam gain is greater than a specific threshold, and feed back the selected beam to the control-side electronic device. As mentioned above, the specific details of the beam searching have been described, and the description will not be repeated here.

In addition, in some embodiments, the terminal device may receive a pilot signal from a control-side electronic device serving the terminal device; and perform pilot measurement to determine the beam gain of the scanning beam, and notify the electronic device on the control side to perform beam switching to the scanning beam when the scanning beam gain is greater than the gain of the previous scanning beam. As mentioned above, the specific details of the beam searching have been described, and the description will not be repeated here.

« 5. Application examples »

An example of a high-speed train communication scenario is described in this disclosure, but it should be understood that the application scenario of this disclosure is not limited to a high-speed train communication scenario. The improved scheme proposed in this disclosure can be applied to any mobile communication application scenario with high requirements on delay and reliability.

It should be noted that the application examples described above are merely exemplary. The embodiments of the present disclosure can also be executed in any other suitable manner in the above application examples, and the advantageous effects obtained by the embodiments of the present disclosure still can be achieved. Moreover, the embodiments of the present disclosure can also be applied to other similar application examples, and the advantageous effects obtained by the embodiments of the present disclosure can still be achieved.

It should be understood that the machine-executable instructions in the machine-readable storage medium or program product according to the embodiments of the present disclosure may be configured to perform operations corresponding to the above-mentioned device and method embodiments. When referring to the above device and method embodiments, the embodiments of the machine-readable storage medium or program product are clear to those skilled in the art, and therefore will not be described repeatedly. Machine-readable storage medium and program products for carrying or including the above-mentioned machine-executable instructions also fall within the scope of the present disclosure. Such a storage medium may include, but is not limited to, a floppy disk, an optical disk, a magneto-optical disk, a memory card, a memory stick, and the like.

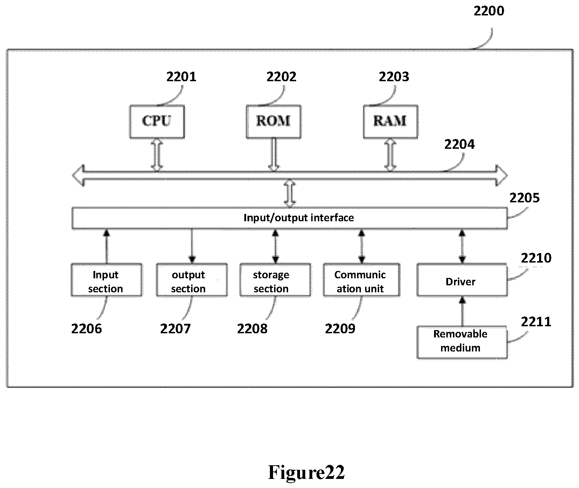

In addition, it should be understood that the processes and devices described above may also be implemented by software and / or firmware. When implemented by software and / or firmware, a program constituting the software is installed from a storage medium or a network to a computer having a dedicated hardware structure, such as a general-purpose personal computer 2200 shown in FIG. 22, and the computer can perform a variety of functions by installing various programs thereon. FIG. 22 is a block diagram illustrating an example structure of a personal computer as an information processing apparatus that can be adopted in an embodiment of the present disclosure. In one example, the personal computer may correspond to the above-described exemplary terminal device according to the present disclosure.

In FIG. 22, a central processing unit (CPU) 2201 performs various processes according to a program stored in a read only memory (ROM) 2202 or a program loaded from a storage section 2208 to a random-access memory (RAM) 2203. In the RAM 2203, data required when the CPU 2201 executes various processes and the like is also stored as necessary.

The CPU 2201, the ROM 2202, and the RAM 2203 are connected to each other via a bus 2204. An input / output interface 2205 is also connected to the bus 2204.

The following components are connected to the input / output interface 2205: an input section 2206 including a keyboard, a mouse, etc.; an output section 2207 including a display, such as a cathode ray tube (CRT), a liquid crystal display (LCD), etc., and a speaker, etc.; a storage section 2208 including hard disks, etc.; and communication section 2209 including network interface cards such as LAN cards, modems, etc. The communication section 2209 performs communication processing via a network such as the Internet.

A driver 2210 is also connected to the input / output interface 2205 as needed. A removable medium 2211 such as a magnetic disk, an optical disk, a magneto-optical disk, a semiconductor memory, etc. is installed on the drive 2210 as needed, so that a computer program read out therefrom can be installed into the storage section 2208 as needed.

In a case where the above-mentioned processes are realized by a software, the programs constituting the software are installed from a network such as the Internet or a storage medium such as a removable medium 2211.

Those skilled in the art should understand that such a storage medium is not limited to the removable medium 221 shown in FIG. 22 in which the program is stored and which is distributed separately from the device to provide the program to the user. Examples of the removable medium 2211 include a magnetic disk (including a floppy disk (registered trademark)), an optical disk (including a CD-ROM and a digital versatile disk (DVD)), and a magneto-optical disk (including a mini disk (MD) (registered trademark) )) and semiconductor memory. Alternatively, the storage medium may be the ROM 2202, a hard disk included in the storage section 2208, and the like, in which programs are stored and which are distributed to users along with the device containing them.

The technology of the present disclosure can be applied to various products.

For example, the position management device 10 / electronic devices 20 according to embodiments of the present disclosure can be implemented a variety of control devices/base stations, or be included in a variety of control devices/base stations. For example, the electronic device 30 according to embodiments of the present disclosure can be implemented as a variety of terminal devices or be included in a variety of terminal devices.

For example, the control device/base stations mentioned in this disclosure can be implemented as any type of evolved Node B (eNB), such as macro eNB and small eNB. A small eNB may be an eNB covering a cell smaller than a macro cell, such as a pico eNB, a micro eNB, and a home (femto) eNB. Furthermore, for example, the control device/base stations can be implemented as gNB, such as macro gNB and small gNB. A small gNB may be a gNB covering a cell smaller than a macro cell, such as a pico gNB, a micro gNB, and a home (femto) gNB. Alternatively, the base station can be implemented as any other type of base station, such as a NodeB and a Base Transceiver Station (BTS). The base station may include: a main body (also referred to as a base station device) configured to control wireless communication; and one or more remote radio heads (RRHs) disposed at a place different from the main body. In addition, various types of terminals described below can work as base stations by temporarily or semi-persistently performing base station functions.

For example, in some embodiments, the user equipment mentioned in this disclosure can be implemented as a mobile terminal such as a smart phone, a tablet personal computer (PC), a notebook PC, a portable gaming terminal, a portable / dongle Mobile routers and digital cameras, or vehicle terminals such as car navigation equipment. User equipment can also be implemented as a terminal that performs machine-to-machine (M2M) communication, also called as a machine type communication (MTC) terminal. In addition, the user equipment may be a wireless communication module mounted on each of the terminals described above, such as an integrated circuit module including a single chip.

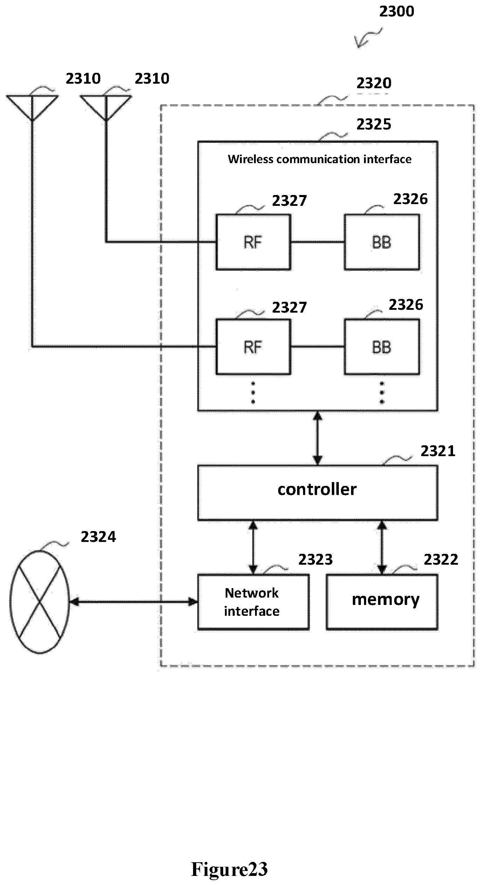

Examples according to the present disclosure will be described below with reference to FIGS. 23 to 26.

[Example of base station]

It should be understood that the term "base station" in this disclosure has the full breadth of its usual meaning and includes at least a wireless communication station that is used as part of a wireless communication system or radio system for facilitating communication. Examples of base stations may be, for example but not limited to, the following: maybe one or both of a base transceiver station (BTS) and a base station controller (BSC) in a GSM system, may be one or both of a radio network controller (RNC) and Node B in a WCDMA system, may be eNBs in LTE and LTE-Advanced systems, or may be corresponding network nodes in future communication systems (such as gNB, eLTE eNB, etc that may appear in 5G communication systems). Part of the functions in the base station of the present disclosure can also be implemented as an entity with control function for communication in D2D, M2M, and V2V communication scenarios, or as an entity that plays a spectrum coordination role in cognitive radio communication scenarios.

First example

FIG. 23 is a block diagram illustrating a first example of a schematic configuration of a gNB to which the technology of the present disclosure can be applied. The gNB 2300 includes a plurality of antennas 2310 and a base station device 2320. The base station device 2320 and each antenna 2310 may be connected to each other via an RF cable. In an implementation manner, the gNB 2300 (or the base station device 2320) herein may correspond to the above-mentioned position management device 10 or electronic devices 20.

Each of the antennas 2310 includes a single or multiple antenna elements, such as multiple antenna elements included in a multiple-input multiple-output (MIMO) antenna, and is used for the base station device 2320 to transmit and receive wireless signals. As shown in FIG. 23, the gNB 2300 may include a plurality of antennas 2310. For example, multiple antennas 2310 may be compatible with multiple frequency bands used by gNB 2300.

The base station device 2320 includes a controller 2321, a memory 2322, a network interface 2323, and a wireless communication interface 2325.

The controller 2321 may be, for example, a CPU or a DSP, and operates various functions of the base station device 2320 at a higher layer. For example, the controller 2321 determines position information of a target terminal device in at least one terminal device on the terminal side of a wireless communication system based on the location information and specific position configuration information of the at least one terminal device acquired via a wireless communication interface 2325. The controller 2321 may have logical functions that perform controls such as radio resource control, radio bearer control, mobility management, admission control, and scheduling. The controls can be performed in conjunction with a nearby gNB or core network node. The memory 2322 includes a RAM and a ROM, and stores a program executed by the controller 2321 and various types of control data such as a terminal list, transmission power data, and scheduling data.

The network interface 2323 is a communication interface for connecting the base station device 2320 to the core network 2324. The controller 2321 may communicate with a core network node or another gNB via the network interface 2323. In this case, the gNB 2300 and the core network node or other gNBs may be connected to each other through a logical interface such as an S1 interface and an X2 interface. The network interface 2323 may also be a wired communication interface or a wireless communication interface for a wireless backhaul line. If the network interface 2323 is a wireless communication interface, compared with the frequency band used by the wireless communication interface 2325, the network interface 2323 can use a higher frequency band for wireless communication.

The wireless communication interface 2325 supports any cellular communication scheme such as Long Term Evolution (LTE) and LTE-Advanced, and provides a wireless connection to a terminal located in a cell of the gNB 2300 via an antenna 2310. The wireless communication interface 2325 may generally include, for example, a baseband (BB) processor 2326 and an RF circuit 2327. The BB processor 2326 may perform, for example, encoding / decoding, modulation / demodulation, and multiplexing / demultiplexing, and execute various types of signal processing in layers such as LI, Medium Access Control (MAC), Radio Link Control (RLC), and Group Data Convergence Protocol ( PDCP). As an alternative of the controller 2321, the BB processor 2326 may have a part or all of the above-mentioned logical functions. The BB processor 2326 may be a memory storing a communication control program, or a module including a processor and related circuits configured to execute the program. Updating the program can change the function of the BB processor 2326. The module may be a card or a blade inserted into a slot of the base station device 2320. Alternatively, the module may be a chip mounted on a card or a blade. Meanwhile, the RF circuit 2327 may include, for example, a mixer, a filter, and an amplifier, and transmits and receives a wireless signal via the antenna 2310. Although FIG. 23 illustrates an example in which one RF circuit 2327 is connected to one antenna 2310, the present disclosure is not limited to this illustration, but one RF circuit 2327 may be connected to multiple antennas 2310 at the same time.

As shown in FIG. 23, the wireless communication interface 2325 may include a plurality of BB processors 2326. For example, the plurality of BB processors 2326 may be compatible with multiple frequency bands used by gNB 2300. As shown in FIG. 23, the wireless communication interface 2325 may include a plurality of RF circuits 2327. For example, the plurality of RF circuits 2327 may be compatible with multiple antenna elements. Although FIG. 23 shows an example in which the wireless communication interface 2325 includes a plurality of BB processors 2326 and a plurality of RF circuits 2327, the wireless communication interface 2325 may also include a single BB processor 2326 or a single RF circuit 2327.

Second example

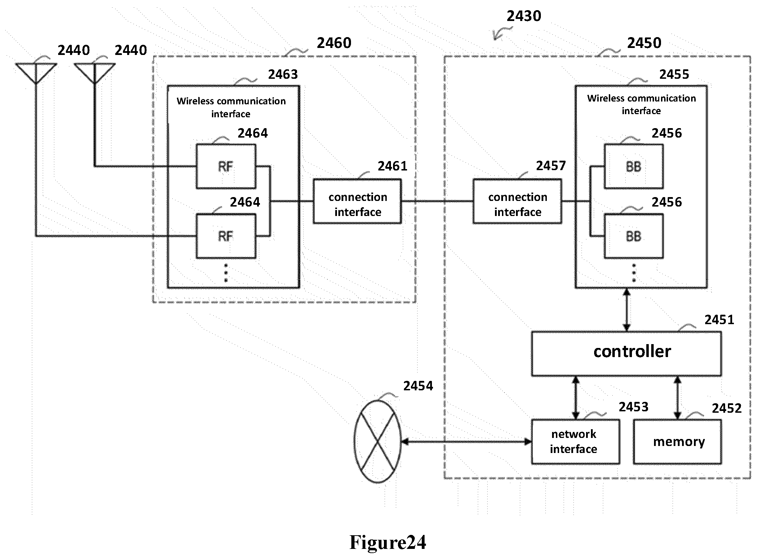

FIG. 24 is a block diagram illustrating a second example of a schematic configuration of a gNB to which the technology of the present disclosure can be applied. The gNB 2400 includes multiple antennas 2410, RRH 2420 and base station equipment 2430. The RRH 2420 and each antenna 2410 may be connected to each other via an RF cable. The base station equipment 2430 and the RRH 2420 may be connected to each other via a high-speed line such as a fiber optic cable. In an implementation manner, the gNB 2400 (or the base station equipment 2430) herein may correspond to the foregoing position management device 10 or electronic device 20.

Each of the antennas 2410 includes a single or multiple antenna elements (such as multiple antenna elements included in a MIMO antenna) and is used for RRH 2420 to transmit and receive wireless signals. As shown in FIG. 24, the gNB 2400 may include multiple antennas 2410. For example, multiple antennas 2410 may be compatible with multiple frequency bands used by gNB 2400.

The base station device 2430 includes a controller 2431, a memory 2432, a network interface 2433, a wireless communication interface 2434, and a connection interface 2436. The controller 2431, the memory 2432, and the network interface 2433 are the same as the controller 2321, the memory 2322, and the network interface 2323 described with reference to FIG. 23.

The wireless communication interface 2434 supports any cellular communication scheme such as LTE and LTE-Advanced, and provides wireless communication to a terminal located in a sector corresponding to the RRH 2420 via the RRH 2420 and the antenna 2410. The wireless communication interface 2434 may typically include, for example, a BB processor 2435. The BB processor 2435 is the same as the BB processor 2326 described with reference to FIG. 23 except that the BB processor 2435 is connected to the RF circuit 2422 of the RRH 2420 via the connection interface 2436. As shown in FIG. 24, the wireless communication interface 2434 may include a plurality of BB processors 2435. For example, multiple BB processors 2435 may be compatible with multiple frequency bands used by gNB 2400. Although FIG. 24 shows an example in which the wireless communication interface 2434 includes a plurality of BB processors 2435, the wireless communication interface 2434 may also include a single BB processor 2435.

The connection interface 2436 is an interface for connecting the base station device 2430 (wireless communication interface 2434) to the RRH 2420. The connection interface 2436 may also be a communication module for communication in the above-mentioned high-speed line connecting the base station device 2430 (wireless communication interface 2434) to the RRH 2420.

The RRH 2420 includes a connection interface 2423 and a wireless communication interface 2421.

The connection interface 2423 is an interface for connecting the RRH 2420 (wireless communication interface 2421) to the base station device 2430. The connection interface 2423 may also be a communication module for communication in the above-mentioned high-speed line.

The wireless communication interface 2421 transmits and receives wireless signals via the antenna 2410. The wireless communication interface 2421 may generally include, for example, an RF circuit 2422. The RF circuit 2422 may include, for example, a mixer, a filter, and an amplifier, and transmits and receives wireless signals via the antenna 2410. Although FIG. 24 illustrates an example in which one RF circuit 2422 is connected to one antenna 2410, the present disclosure is not limited to this illustration, but one RF circuit 2422 may be connected to multiple antennas 2410 at the same time.

As shown in FIG. 24, the wireless communication interface 2421 may include a plurality of RF circuits 2422. For example, the plurality of RF circuits 2422 may support multiple antenna elements. Although FIG. 24 shows an example in which the wireless communication interface 2421 includes a plurality of RF circuits 2422, the wireless communication interface 2421 may include a single RF circuit 2422.

[ Example of user equipment ]

First example

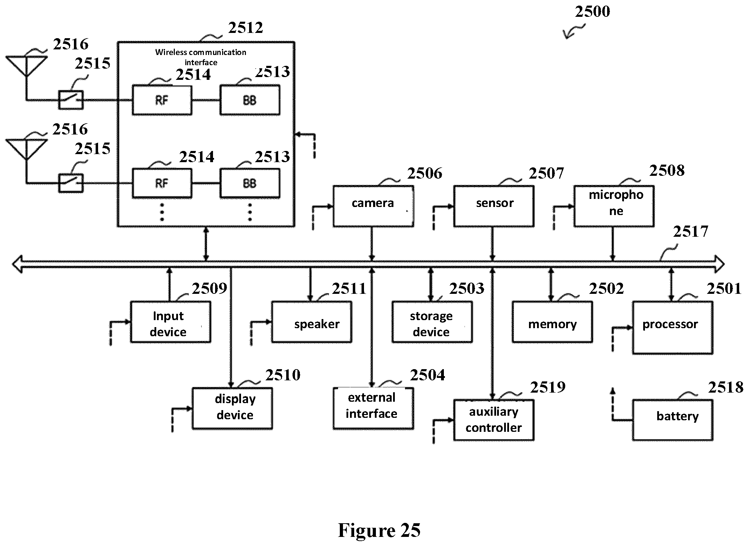

FIG. 25 is a block diagram illustrating an example of a schematic configuration of a smartphone 2500 to which the technology of the present disclosure can be applied. The smartphone 2500 includes a processor 2501, a memory 2502, a storage device 2503, an external connection interface 2504, a camera device 2506, a sensor 2507, a microphone 2508, an input device 2509, a display device 2510, a speaker 2511, a wireless communication interface 2512, one or more antenna switches 2515, one or more antennas 2516, a bus 2517, a battery 2518, and an auxiliary controller 2519. In an implementation manner, the smart phone 2500 (or the processor 2501) herein may correspond to the foregoing user device UE 40.

The processor 2501 may be, for example, a CPU or a system on chip (SoC), and controls functions of an application layer and another layer of the smartphone 2500. The memory 2502 includes a RAM and a ROM, and stores data and programs executed by the processor 2501. The storage device 2503 may include a storage medium such as a semiconductor memory and a hard disk. The external connection interface 2504 is an interface for connecting external devices such as a memory card and a universal serial bus (USB) device to the smartphone 2500.

The camera device 2506 includes an image sensor such as a charge-coupled device (CCD) and a complementary metal oxide semiconductor (CMOS), and generates a captured image. The sensor 2507 may include a set of sensors such as a measurement sensor, a gyroscope sensor, a geomagnetic sensor, and an acceleration sensor. The microphone 2508 converts a sound input to the smartphone 2500 into an audio signal. The input device 2509 includes, for example, a touch sensor, a keypad, a keyboard, a button, or a switch configured to detect a touch on the screen of the display device 2510, and receives an operation or information input from a user. The display device 2510 includes a screen such as a liquid crystal display (LCD) and an organic light emitting diode (OLED) display, and displays an output image of the smartphone 2500. The speaker 2511 converts an audio signal output from the smartphone 2500 into a sound.

The wireless communication interface 2512 supports any cellular communication scheme such as LTE and LTE-Advanced, and performs wireless communication. The wireless communication interface 2512 may generally include, for example, a BB processor 2513 and an RF circuit 2514. The BB processor 2513 may perform, for example, encoding / decoding, modulation / demodulation, and multiplexing / demultiplexing, and perform various types of signal processing for wireless communication. Meanwhile, the RF circuit 2514 may include, for example, a mixer, a filter, and an amplifier, and transmits and receives wireless signals via the antenna 2516. The wireless communication interface 2512 may be a chip module on which a BB processor 2513 and an RF circuit 2514 are integrated. As shown in FIG. 25, the wireless communication interface 2512 may include multiple BB processors 2513 and multiple RF circuits 2514. Although FIG. 25 illustrates an example in which the wireless communication interface 2512 includes a plurality of BB processors 2513 and a plurality of RF circuits 2514, the wireless communication interface 2512 may also include a single BB processor 2513 or a single RF circuit 2514.

In addition, in addition to the cellular communication scheme, the wireless communication interface 2512 may support other types of wireless communication scheme, such as a short-range wireless communication scheme, a near field communication scheme, and a wireless local area network (LAN) scheme. In this case, the wireless communication interface 2512 may include a BB processor 2513 and an RF circuit 2514 for each wireless communication scheme.

Each of the antenna switches 2515 switches a connection destination of the antenna 2516 between a plurality of circuits included in the wireless communication interface 2512 (for example, circuits for different wireless communication schemes).

Each of the antennas 2516 includes a single or multiple antenna elements, such as multiple antenna elements included in a MIMO antenna, and is used for the wireless communication interface 2512 to transmit and receive wireless signals. As shown in FIG. 25, the smartphone 2500 may include a plurality of antennas 2516. Although FIG. 25 illustrates an example in which the smart phone 2500 includes a plurality of antennas 2516, the smart phone 2500 may also include a single antenna 2516.

In addition, the smartphone 2500 may include an antenna 2516 for each wireless communication scheme. In this case, the antenna switch 2515 may be omitted from the configuration of the smartphone 2500.

The bus 2517 connects the processor 2501, the memory 2502, the storage device 2503, the external connection interface 2504, the camera device 2506, the sensor 2507, the microphone 2508, the input device 2509, the display device 2510, the speaker 2511, the wireless communication interface 2512, and the auxiliary controller 2519 to each other. The battery 2518 supplies power to each block of the smartphone 2500 shown in FIG. 25 via a feeder, and the feeder is partially shown as a dotted line in the figure. The auxiliary controller 2519 operates the minimum necessary functions of the smartphone 2500 in the sleep mode, for example.

Second example

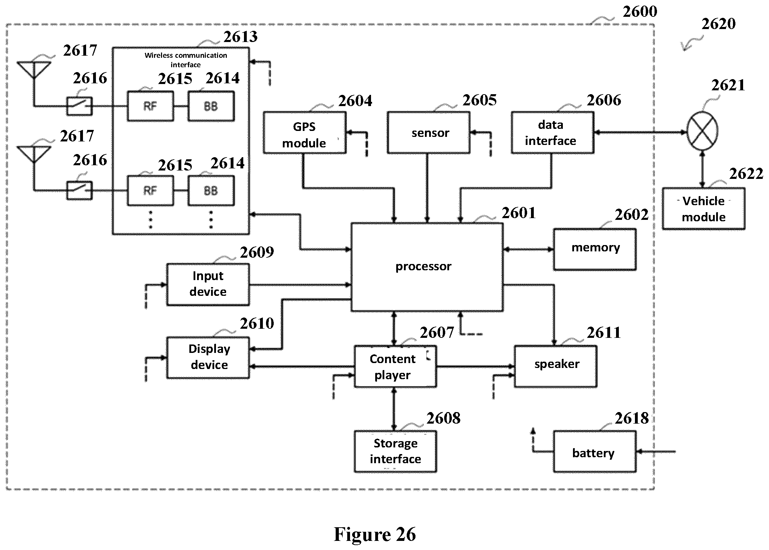

FIG. 26 is a block diagram illustrating an example of a schematic configuration of a car navigation device 2600 to which the technology of the present disclosure can be applied. The car navigation device 2600 includes a processor 2601, a memory 2602, a global location system (GPS) module 2604, a sensor 2605, a data interface 2606, a content player 2607, a storage medium interface 2608, an input device 2609, a display device 2610, a speaker 2611, and a wireless communication interface 2613, one or more antenna switches 2616, one or more antennas 2617, and a battery 2618. In an implementation manner, the car navigation device 2600 (or the processor 2601) herein may correspond to the terminal device 30.

The processor 2601 may be, for example, a CPU or a SoC, and controls navigation functions and other functions of the car navigation device 2600. The memory 2602 includes a RAM and a ROM, and stores data and programs executed by the processor 2601.

The GPS module 2604 uses a GPS signal received from a GPS satellite to measure the position (such as latitude, longitude, and altitude) of the car navigation device 2600. The sensor 2605 may include a set of sensors such as a gyroscope sensor, a geomagnetic sensor, and an air pressure sensor. The data interface 2606 is connected to, for example, an in-vehicle network 2621 via a terminal not shown, and acquires data (such as vehicle speed data) generated by the vehicle.

The content player 2607 reproduces content stored in a storage medium such as a CD and a DVD, which is inserted into the storage medium interface 2608. The input device 2609 includes, for example, a touch sensor, a button, or a switch configured to detect a touch on the screen of the display device 2610, and receives an operation or information input from a user. The display device 2610 includes a screen such as an LCD or OLED display, and displays an image of a navigation function or reproduced content. The speaker 2611 outputs the sound of the navigation function or the reproduced content.

The wireless communication interface 2613 supports any cellular communication scheme such as LTE and LTE-Advanced, and performs wireless communication. The wireless communication interface 2613 may generally include, for example, a BB processor 2614 and an RF circuit 2615. The BB processor 2614 may perform, for example, encoding / decoding, modulation / demodulation, and multiplexing / demultiplexing, and perform various types of signal processing for wireless communication. Meanwhile, the RF circuit 2615 may include, for example, a mixer, a filter, and an amplifier, and transmit and receive wireless signals via the antenna 2617. The wireless communication interface 2613 may also be a chip module on which a BB processor 2614 and an RF circuit 2615 are integrated. As shown in FIG. 26, the wireless communication interface 2613 may include a plurality of BB processors 2614 and a plurality of RF circuits 2615. Although FIG. 26 shows an example in which the wireless communication interface 2613 includes a plurality of BB processors 2614 and a plurality of RF circuits 2615, the wireless communication interface 2613 may also include a single BB processor 2614 or a single RF circuit 2615.

In addition, in addition to the cellular communication scheme, the wireless communication interface 2613 may support other types of wireless communication scheme, such as a short-range wireless communication scheme, a near field communication scheme, and a wireless LAN scheme. In this case, the wireless communication interface 2613 may include a BB processor 2614 and an RF circuit 2615 for each wireless communication scheme.

Each of the antenna switches 2616 switches the connection destination of the antenna 2617 between a plurality of circuits included in the wireless communication interface 2613, such as circuits for different wireless communication schemes.

Each of the antennas 2617 includes a single or multiple antenna element, such as multiple antenna elements included in a MIMO antenna, and is used for the wireless communication interface 2613 to transmit and receive wireless signals. As shown in FIG. 26, the car navigation device 2600 may include a plurality of antennas 2617. Although FIG. 26 shows an example in which the car navigation device 2600 includes a plurality of antennas 2617, the car navigation device 2600 may also include a single antenna 2617.

In addition, the car navigation device 2600 may include an antenna 2617 for each wireless communication scheme. In this case, the antenna switch 2616 may be omitted from the configuration of the car navigation device 2600.

The battery 2618 supplies power to each block of the car navigation device 2600 shown in FIG. 26 via a feeder, and the feeder is partially shown as a dotted line in the figure. The battery 2618 accumulates power provided from the vehicle.

The technology of the present disclosure may also be implemented as a vehicle on-board system (or vehicle) 2620 including one or more of a car navigation device 2600, an in-vehicle network 2621, and a vehicle module 2622. The vehicle module 2622 generates vehicle data such as vehicle speed, engine speed, and failure information, and outputs the generated data to the in-vehicle network 2621.

«6. Conclusion »

The exemplary embodiments of the present disclosure have been described above with reference to Fig. 1 through Fig. 26. As described above, the position management device according to the embodiment of the present disclosure can cooperatively locate and track the target terminal device in at least one terminal device based on the specific position configuration information of at least one terminal device and the location information of at least one terminal device. According to the embodiment of the disclosure, two location methods under LTE network and NR network are comprehensively utilized to realize the real-time location of terminal device at any time, and the specific position configuration of terminal device is utilized to improve the location accuracy and reduce the overhead, and further realize rapid location-aided beam search and beam switching with lower delay and overhead.

The exemplary embodiments of the present disclosure have been described with reference to the drawings, but the present disclosure is of course not limited to the above examples. A person skilled in the art may find various alternations and modifications within the scope of the appended claims, and it should be understood that they will naturally fall in the technical scope of the present disclosure.

It should be understood that machine-executable instructions in a machine-readable storage medium or program product according to embodiments of the present disclosure may be configured to perform operations corresponding to the above-described apparatus and method embodiments. When referring to the above-described embodiments of the apparatus and method, the embodiments of the machine-readable storage medium or the program product will be clear to those skilled in the art, so the description will not be repeated. Machine-readable storage media and program products for carrying or including the above-mentioned machine-executable instructions also fall within the scope of this disclosure. Such storage media may include, but are not limited to, floppy disks, optical disks, magneto-optical disks, memory cards, memory sticks, and the like.

In addition, it should be understood that the above series of processes and devices can also be realized by software and/or firmware. In case of being implemented by software and/or firmware, corresponding programs constituting corresponding software are stored in the storage medium of related devices, and when the programs are executed, various functions can be executed.

For example, a plurality of functions included in one unit in the above embodiments may be implemented by separate devices. Alternatively, multiple functions implemented by multiple units in the above embodiments may be implemented by separate devices, respectively. In addition, one of the above functions may be implemented by multiple units. Needless to say, such configurations are included in the technical scope of the present disclosure.

In this specification, the steps described in the flowchart include not only processes performed in time series in the described order, but also processes performed in parallel or individually instead of having to be performed in time series. Further, even in the steps processed in a time series, needless to say, the order can be appropriately changed.

Implementation of exemplary embodiments of the present disclosure

According to the embodiments of the present disclosure, various manners of implementing the concepts of the present disclosure can be conceived, including but not limited to:

Exemplary embodiment 1. A position management device for a control side of a wireless communication system, comprising a processing circuit configured to:

acquire location information of at least one terminal device on the terminal side in the wireless communication system, wherein the at least one terminal device has specific position configuration information; and

determine location information of a target terminal device among the at least one terminal device, based on the specific position configuration information of the at least one terminal device and the location information of the at least one terminal device.

Exemplary embodiment 2. The position management device of exemplary embodiment 1, wherein

the location information of the terminal device includes time-related location information or beam-related location information determined by the terminal device in combination with a control-side electronic device serving the terminal device.

Exemplary embodiment 3. The position management device of exemplary embodiment 2, wherein the location information is the time-related location information when the control-side electronic device serving the terminal device is a first electronic device conforming to the 4G communication standard.

Exemplary embodiment 4. The position management device of exemplary embodiment 3, wherein the time-related location information includes a measurement result of Observed Time Difference Of Arrival OTDOA, which indicates a time difference between location reference signals PRS simultaneously transmitted by two first electronic devices serving the terminal device arriving at the terminal device.

Exemplary embodiment 5. The position management device of exemplary embodiment 2, wherein the location information is the beam-related location information when the control-side electronic device serving the terminal device is a second electronic device conforming to the 5G communication standard.

Exemplary embodiment 6. The position management device of exemplary embodiment 5, wherein the beam-related location information includes beam information of a downlink transmission beam for the second electronic device communicating with the terminal device, which indicates angle or coverage information of the downlink transmission beam for the terminal device.

Exemplary embodiment 7. The position management device of exemplary embodiment 1, wherein the location information of the terminal device is acquired by the position management device from the terminal device or from a control-side electronic device serving the terminal device.

Exemplary embodiment 8. The position management device of exemplary embodiment 1, wherein the position management device periodically acquires the location information according to a location cycle so as to periodically determine the position of the target terminal device.

Exemplary embodiment 9. The position management device of exemplary embodiment 8, wherein the location cycle can be set to be equal to or less than a cycle in which a control-side electronic device conforming to 4G communication standard transmits the location reference signal PRS to the terminal device.

Exemplary embodiment 10. The position management device of exemplary embodiment 8, wherein the processing circuit is further configured to:

based on the previously determined position information of the target terminal device and location cycle, correct the position of the target terminal device at the current time moment by linear fitting, and estimate the position of the target terminal device at a specific time moment.

Exemplary embodiment 11. The position management device of exemplary embodiment 1, wherein the processing circuit is further configured to:

enable the control-side electronic device serving the terminal device to estimate the position of the terminal device at the current time moment, based on the previously determined position of the terminal device; and
enable the control-side electronic device serving the terminal device to configure the order of beam scanning based on the estimated position of the terminal device so as to scan beams for the terminal device.

Exemplary embodiment 12. The position management device of exemplary embodiment 11, wherein a beam whose beam direction is adjacent to a direction corresponding to the estimated positoin of the terminal device is scanned firstly.

Exemplary embodiment 13. The position management device of exemplary embodiment 11, wherein, in the case where the gain of a beam is greater than a specific threshold, the beam is selected for data transmission with the terminal device, and the control-side electronic device stops beam scanning.

Exemplary embodiment 14. The position management device of exemplary embodiment 1, wherein the processing circuit is further configured to:

enable the control-side electronic device serving the terminal device to determine a position of beam switching for the terminal device based on the intersection point of the current downlink transmission beam and the next downlink transmission beam for the terminal device; and
enable the control-side electronic device serving the terminal device to estimate the time moment when the terminal device performs beam switching based on the determined position of the terminal device at a specific moment and the determined beam switching position.

Exemplary embodiment 15. The position management device of exemplary embodiment 14, wherein the control-side electronic device serving the terminal device transmits a pilot signal to the terminal device for beam switching before the estimated beam switching time moment.

Exemplary embodiment 16. The position management device of exemplary embodiment 14, wherein the control-side electronic device serving the terminal device performs beam switching in a case where the next downlink transmission beam has a gain larger than the gain of the current beam.

Exemplary embodiment 17. The position management device of exemplary embodiment 14, wherein the processing circuit is further configured to:

enable the control-side electronic device serving the terminal device to stop transmitting the pilot signal for beam switching while performing the beam switching.

Exemplary embodiment 18. The position management device of exemplary embodiment 1, wherein the at least one terminal device includes a plurality of terminal devices, and the specific position configuration information includes a specific position relationship among the plurality of terminal devices.

Exemplary embodiment 19. The position management device of exemplary embodiment 18, wherein the processing circuit is further configured to:

determine a position error function for each terminal device among the plurality of terminal devices with respect to the target terminal device, based on position information of control-side electronic devices of the wireless communication system serving the plurality of terminal devices, the specific position relationship among the plurality of terminal devices, and location information of each terminal device; and

determine position information of the target terminal device based on the position error function for each terminal device of the plurality of terminal devices.

Exemplary embodiment 20. The position management device of exemplary embodiment 19, wherein the position information of the target terminal device is determined based on the position error function according to a weighted minimum mean square error criterion.

Exemplary embodiment 21. The position management device of exemplary embodiment 18, wherein the plurality of terminal devices are arranged following a specific trajectory, and the specific position configuration information further includes position information of the specific trajectory followed by the plurality of terminal devices,

wherein the processing circuit is further configured to:

determine the position of the target terminal device based on position information of the specific trajectory followed by the plurality of terminal devices, wherein the position information of the specific trajectory is obtained by fitting the previously determined positions of terminal devices or obtained from a network map.

Exemplary embodiment 22. The position management device of exemplary embodiment 18, wherein the plurality of terminal devices are arranged following a straight trajectory, and the spacing between the plurality of terminal devices is constant within a certain period of time.

Exemplary embodiment 23. The position management device of exemplary embodiment 18, wherein the processing circuit is further configured to:

determine positions of other terminal devices among the plurality of terminal devices based on the determined position of the target terminal device and the specific positional relationship among the plurality of terminal devices.

Exemplary embodiment 24. The position management device of exemplary embodiment 23, wherein the processing circuit is further configured to:

transmit the determined position of each terminal device to the control-side electronic device serving each terminal device, so that the control-side electronic device locates each terminal device.

Exemplary embodiment 25. The position management device of exemplary embodiment 18, wherein the specific position relationship among the plurality of terminal devices is provided to the position management device in advance, or measured by the target terminal device and provided to the position management device.

Exemplary embodiment 26. An electronic device on control side of a wireless communication system, comprising a processing circuit configured to:

acquire location information of at least one terminal device on the terminal side in the wireless communication system served by the electronic device, wherein the at least one terminal device has specific position configuration information;

transmit the location information of at least one terminal device to a position management device in the wireless communication system, so that the position management device determines position information of the terminal device based on the location information and the specific position configuration information of the at least one terminal device; and

receive the determined position information of the at least one terminal device from the position management device.

Exemplary embodiment 27. The electronic device of exemplary embodiment 26, wherein the location information of the terminal device includes time-related location information or beam-related location information determined by the terminal device in combination with a control-side electronic device serving the terminal device.

Exemplary embodiment 28. The electronic device of exemplary embodiment 26, wherein the processing circuit is further configured to:

transmit the location information to the position management device according to a location cycle periodically so that the positioin of the terminal device is determined periodically.

Exemplary embodiment 29. The electronic device of exemplary embodiment 26, wherein the processing circuit is further configured to:

estimate the position of the terminal device at the current time moment, based on the previously received position of the terminal device; and
configure the order of beam scanning based on the estimated position of the terminal device so as to scan beams for the terminal device.

Exemplary embodiment 30. The electronic device of exemplary embodiment 29, wherein the processing circuit is further configured to:
scan a beam whose beam direction is adjacent to a direction corresponding to the estimated position of the terminal device firstly.

Exemplary embodiment 31. The electronic device of exemplary embodiment 29, wherein the processing circuit is further configured to:
in the case where the gain of a beam is greater than a specific threshold, select the beam for data transmission with the terminal device, and stop the beam scanning.

Exemplary embodiment 32. The electronic device of exemplary embodiment 26, wherein the processing circuit is further configured to:

determine a position of beam switching for the terminal device based on the intersection point of the current downlink transmission beam and the next downlink transmission beam for the terminal device; and
estimate the time moment when the terminal device performs beam switching based on the determined position of the terminal device at a specific time moment and the determined beam switching position.

Exemplary embodiment 33. The electronic device of exemplary embodiment 32, wherein the processing circuit is further configured to:
transmit a pilot signal to the terminal device for beam switching before the estimated beam switching time moment.

Exemplary embodiment 34. The electronic device of exemplary embodiment 32, wherein the processing circuit is further configured to:
in a case where the next downlink transmission beam has a gain larger than the gain of the current beam, perform beam switching to switch the downlink transmission beam to the next downlink transmission beam.

Exemplary embodiment 35. The electronic device of exemplary embodiment 32, wherein the processing circuit is further configured to:
stop transmission of the pilot signal for the beam switching while performing the beam switching.

Exemplary embodiment 36. The electronic device of exemplary embodiment 26, wherein the processing circuit is further configured to:
locate other terminal devices based on the received determined location information of the terminal device.

Exemplary embodiment 37. A terminal device on a terminal side of a wireless communication system, comprising a processing circuit configured to:

acquire a location information measurement configuration from an electronic device on a control side of a wireless communication system serving a terminal device;
determine the location information of the terminal device based on the location information measurement configuration; and
transmit the location information of the terminal device to the position management device in the wireless communication system, so that the position management device determines position information of the terminal device based on the location information and specific position configuration information of the at least one terminal device including the terminal device.

Exemplary embodiment 38. The terminal device of exemplary embodiment 37, wherein
the location information of the terminal device includes time-related location information or beam-related location information determined by the terminal device in combination with a control-side electronic device serving the terminal device.

Exemplary embodiment 39. The terminal device of exemplary embodiment 37, wherein the processing circuit is further configured to:
determine the location information according to a location cycle periodically.

Exemplary embodiment 40. The terminal device of exemplary embodiment 37, wherein the processing circuit is further configured to:

transmit a beam search request to a control-side electronic device serving the terminal device;
receive scanning beams from the control-side electronic device; and

determine beam gains of the scanning beams,
select a beam for data transmission with the terminal device when the beam has a gain greater than a specific threshold, and feed back the selected beam to the control-side electronic device.

Exemplary embodiment 41. The terminal device of exemplary embodiment 37, wherein the processing circuit is further configured to:

receive a pilot signal from a control-side electronic device serving the terminal device;
execute pilot measurement to determine the beam gain of the scanning beam, and when the scanning beam has a gain greater than the gain of the previous scanning beam, notify the control-side electronic device to execute beam switching to the scanning beam.

Exemplary embodiment 42. A position management device for a control side of a wireless communication system, comprising a processing circuit configured to:

receive an indication of a communication scene where a terminal device in the wireless communication system is located, wherein the communication scene comprises a communication scene in which the terminal device moves along a specific track; and
locate the terminal device based on the communication scene indication.

Exemplary embodiment 43. The position management device of exemplary embodiment 42, wherein the processing circuit is further configured to:
determine a location scheme for location of the terminal device based on the communication scene indication.
Exemplary embodiment 44. The position management device of exemplary embodiment 42 or 43, wherein the processing circuit is further configured to, in a case where it is determined that an OTDOA location scheme is employed based on the communication scene indication,

provide the terminal device auxiliary information for employing the OTDOA location scheme, the auxiliary information includes configuration information of a plurality of candidate base stations for the terminal device to measure; and
perform the OTDOA location for the terminal device based on the information about the specific track and the measurement results from the terminal device for two base stations in the plurality of candidate base stations.

Exemplary embodiment 45. The position management device of exemplary embodiment 44, wherein the plurality of candidate base stations include only 2 base stations.
Exemplary embodiment 46. The position management device of exemplary embodiment 44, wherein the auxiliary information includes at least one of the following:
physical cell ID, global cell ID, transmission point ID of the candidate base station, the relative timing relationship between the candidate base station and the reference base station, and the location reference signal PRS configuration of the candidate base station.
Exemplary embodiment 47. The position management device of exemplary embodiment 44, wherein the measurement result includes at least one of the following:
physical cell ID, global cell ID, transmission point ID of the base station and downlink timing measurement result of the base station.
Exemplary embodiment 48. The position management device of exemplary embodiment 42 or 43, wherein the processing circuit is further configured to, in a case that it is determined to employ a downlink transmission beam location scheme based on the communication scene indication,

enable a base station serving the terminal device to transmit a downlink transmission beam to the terminal device; and
perform downlink transmission beam location based on the information of the specific track and the measurement results from the terminal device for one or more downlink transmission beams.

Exemplary embodiment 49. The position management device of exemplary embodiment 48, wherein the measurement results include only measurement results of a single beam.
Exemplary embodiment 50. The position management device of exemplary embodiment 42, wherein the position management device is located in a base station serving the terminal device or in other control devices on the control side.

Exemplary embodiment 51. A terminal device on a terminal side of a wireless communication system, comprising a processing circuit configured to:

acquire an indication of a communication scene where a terminal device in the wireless communication system is located, wherein the communication scene comprises a communication scene in which the terminal device moves along a specific track; and

transmit the communication scene indication to a device on a control side of the wireless communication system, so that the terminal device can be located based on the communication scene indication.

Exemplary embodiment 52. The terminal device of exemplary embodiment 51, wherein the processing circuit is further configured to, in a case where it is determined that an OTDOA location scheme is employed based on the communication scene indication,

receive auxiliary information for employing the OTDOA location scheme, the auxiliary information includes configuration information of a plurality of candidate base stations for the terminal device to measure;

measure two base stations in the plurality of candidate base stations based on the auxiliary information; and transmit the measurement result to a device on a control side of the wireless communication system, so that the OTDOA location can be performed for the terminal device based on the information about the specific track and the measurement result.

Exemplary embodiment 53. The terminal device of exemplary embodiment 52, wherein the candidate base stations include only 2 base stations.

Exemplary embodiment 54. The terminal device of exemplary embodiment 52, wherein the auxiliary information includes at least one of the following:

physical cell ID, global cell ID, transmission point ID of the candidate base station, the relative timing relationship between the candidate base station and the reference base station, and the location reference signal PRS configuration of the candidate base station.

Exemplary embodiment 55. The terminal device of exemplary embodiment 52, wherein the measurement result includes at least one of the following:

physical cell ID, global cell ID, transmission point ID of the base station and downlink timing measurement result of the base station.

Exemplary embodiment 56. The terminal device of exemplary embodiment 51, wherein the processing circuit is further configured to, in a case that it is determined to employ a downlink transmission beam location scheme based on the communication scene indication,

receive a downlink transmission beam from a base station serving the terminal device;

measure one or more the downlink transmission beams; and

transmit the measurement result to a device on a control side of the wireless communication system, so that downlink transmission beam location can be performed based on the information of the specific track and the measurement result.

Exemplary embodiment 57. The terminal device of exemplary embodiment 54, wherein the measurement results include only measurement result of a single beam.

Exemplary embodiment 58. The terminal device of exemplary embodiment 51, wherein the base station serving the terminal device includes a position management device on the control side or other control devices on the control side of the wireless communication system.

Exemplary embodiment 59. A position management method for a wireless communication system, comprising:

acquiring location information of at least one terminal device on the terminal side in the wireless communication system, wherein the at least one terminal device has specific position configuration information; and

determining location information of a target terminal device among the at least one terminal device, based on the specific position configuration information of the at least one terminal device and the location information of the at least one terminal device.

Exemplary embodiment 60. The position management method of exemplary embodiment 59, wherein the location information of the terminal device includes time-related location information or beam-related location information determined by the terminal device in combination with a control-side electronic device serving the terminal device.

Exemplary embodiment 61. The position management method of exemplary embodiment 60, wherein the location information is the time-related location information when the control-side electronic device serving the terminal device is a first electronic device conforming to the 4G communication standard.

Exemplary embodiment 62. The position management method of exemplary embodiment 61, wherein the time-related location information includes a measurement result of Observed Time Difference Of Arrival OTDOA, which indicates a time difference between location reference signals PRS simultaneously transmitted by two first electronic devices serving the terminal device arriving at the terminal device.

Exemplary embodiment 63. The position management method of exemplary embodiment 61, wherein the location information is the beam-related location information when the control-side electronic device serving the terminal device is a second electronic device conforming to the 5G communication standard.

Exemplary embodiment 64. The position management method of exemplary embodiment 63, wherein the beam-related location information includes beam information of a downlink transmission beam for the second electronic device communicating with the terminal device, which indicates angle or coverage information of the downlink transmission beam for the terminal device.

Exemplary embodiment 65. The position management method of exemplary embodiment 59, wherein the location information of the terminal device is acquired from the terminal device or from a control-side electronic device serving the terminal device.

Exemplary embodiment 66. The position management method of exemplary embodiment 59, wherein the location information is periodically acquired according to a location cycle so as to periodically determine the position of the target terminal device.

Exemplary embodiment 67. The position management method of exemplary embodiment 66, wherein the location cycle can be set to be equal to or less than a cycle in which a control-side electronic device conforming to 4G communication standard transmits the location reference signal PRS to the terminal device.

Exemplary embodiment 68. The position management method of exemplary embodiment 66, further comprising: based on the previously determined position information of the target terminal device and location cycle, correcting the position of the target terminal device at the current time moment by linear fitting, and estimating the position of the target terminal device at a specific time moment.

Exemplary embodiment 69. The position management method of exemplary embodiment 59, further comprising:

enabling the control-side electronic device serving the terminal device to estimate the position of the terminal device at the current time moment, based on the previously determined position of the terminal device; and enabling the control-side electronic device serving the terminal device to configure the order of beam scanning based on the estimated position of the terminal device so as to scan beams for the terminal device.

Exemplary embodiment 70. The position management method of exemplary embodiment 69, wherein a beam whose beam direction is adjacent to a direction corresponding to the estimated positoin of the terminal device is scanned firstly.

Exemplary embodiment 71. The position management method of exemplary embodiment 69, wherein, in the case where the gain of a beam is greater than a specific threshold, the beam is selected for data transmission with the terminal device, and the control-side electronic device stops beam scanning.

Exemplary embodiment 72. The position management method of exemplary embodiment 59, further comprising:

enabling the control-side electronic device serving the terminal device to determine a position of beam switching for the terminal device based on the intersection point of the current downlink transmission beam and the next downlink transmission beam for the terminal device; and enabling the control-side electronic device serving the terminal device to estimate the time moment when the terminal device performs beam switching based on the determined position of the terminal device at a specific moment and the determined beam switching position.

Exemplary embodiment 73. The position management method of exemplary embodiment 59, wherein the control-side electronic device serving the terminal device transmits a pilot signal to the terminal device for beam switching before the estimated beam switching time moment.

Exemplary embodiment 74. The position management method of exemplary embodiment 72, wherein the control-side electronic device serving the terminal device performs beam switching in a case where the next downlink transmission beam has a gain larger than the gain of the current beam.

Exemplary embodiment 75. The position management method of exemplary embodiment 72, further comprising: enabling the control-side electronic device serving the terminal device to stop transmitting the pilot signal for beam switching while performing the beam switching.

Exemplary embodiment 76. The position management method of exemplary embodiment 59, wherein the at least one terminal device includes a plurality of terminal devices, and the specific position configuration information includes a specific position relationship among the plurality of terminal devices.

Exemplary embodiment 77. The position management method of exemplary embodiment 76, further comprising:

determining a position error function for each terminal device among the plurality of terminal devices with respect to the target terminal device, based on position information of control-side electronic devices of the wireless communication system serving the plurality of terminal devices, the specific position relationship among the plurality of terminal devices, and location information of each terminal device; and

determining position information of the target terminal device based on the position error function for each terminal device of the plurality of terminal devices.

Exemplary embodiment 78. The position management method of exemplary embodiment 77, wherein the position information of the target terminal device is determined based on the position error function according to a weighted minimum mean square error criterion.

Exemplary embodiment 79. The position management method of exemplary embodiment 59, wherein the plurality of terminal devices are arranged following a specific trajectory, and the specific position configuration information further includes position information of the specific trajectory followed by the plurality of terminal devices,

wherein the method further comprises:

determining the position of the target terminal device based on position information of the specific trajectory followed by the plurality of terminal devices, wherein the position information of the specific trajectory is obtained by fitting the previously determined positions of terminal devices or obtained from a network map.

Exemplary embodiment 80. The position management method of exemplary embodiment 79, wherein the plurality of terminal devices are arranged following a straight trajectory, and the spacing between the plurality of terminal devices is constant within a certain period of time.

Exemplary embodiment 81. The position management method of exemplary embodiment 76, further comprising: determining positions of other terminal devices among the plurality of terminal devices based on the determined position of the target terminal device and the specific positional relationship among the plurality of terminal devices.

Exemplary embodiment 82. The position management method of exemplary embodiment 81, further comprising: transmitting the determined position of each terminal device to the control-side electronic device serving each terminal device, so that the control-side electronic device locates each terminal device.

Exemplary embodiment 83. The position management method of exemplary embodiment 76, wherein the specific position relationship among the plurality of terminal devices is provided to a position management device in advance, or measured by the target terminal device and provided to the position management device.

Exemplary embodiment 84. A method for an electronic device on control side of a wireless communication system, comprising:

acquiring location information of at least one terminal device on the terminal side in the wireless communication system served by the electronic device, wherein the at least one terminal device has specific position configuration information;

transmitting the location information of at least one terminal device to a position management device in the wireless communication system, so that the position management device determines position information of the terminal device based on the location information and the specific position configuration information of the at least one terminal device; and

receiving the determined position information of the at least one terminal device from the position management device.

Exemplary embodiment 85. The method of exemplary embodiment 84, wherein the location information of the terminal device includes time-related location information or beam-related location information determined by the terminal device in combination with a control-side electronic device serving the terminal device.

Exemplary embodiment 86. The method of exemplary embodiment 84, further comprising: transmitting the location information to the position management device according to a location cycle periodically so that the positioin of the terminal device is determined periodically.

Exemplary embodiment 87. The method of exemplary embodiment 84, further comprising:

estimating the position of the terminal device at the current time moment, based on the previously received position of the terminal device; and

configuring the order of beam scanning based on the estimated position of the terminal device so as to scan beams for the terminal device.

Exemplary embodiment 88. The method of exemplary embodiment 87, further comprising:
scanning a beam whose beam direction is adjacent to a direction corresponding to the estimated position of the terminal device firstly.
Exemplary embodiment 89. The method of exemplary embodiment 87, further comprising:
in the case where the gain of a beam is greater than a specific threshold, selecting the beam for data transmission with the terminal device, and stopping the beam scanning.
Exemplary embodiment 90. The method of exemplary embodiment 84, further comprising:

determining a position of beam switching for the terminal device based on the intersection point of the current downlink transmission beam and the next downlink transmission beam for the terminal device; and
estimating the time moment when the terminal device performs beam switching based on the determined position of the terminal device at a specific time moment and the determined beam switching position.

Exemplary embodiment 91. The method of exemplary embodiment 90, further comprising:
transmitting a pilot signal to the terminal device for beam switching before the estimated beam switching time moment.
Exemplary embodiment 92. The method of exemplary embodiment 90, further comprising:
in a case where the next downlink transmission beam has a gain larger than the gain of the current beam, performing beam switching to switch the downlink transmission beam to the next downlink transmission beam.
Exemplary embodiment 93. The method of exemplary embodiment 90, further comprising:
stopping transmission of the pilot signal for the beam switching while performing the beam switching.
Exemplary embodiment 94. The method of exemplary embodiment 90, further comprising:
locating other terminal devices based on the received determined location information of the terminal device.
Exemplary embodiment 95. A method for a terminal device on a terminal side of a wireless communication system, comprising:

acquiring a location information measurement configuration from an electronic device on a control side of a wireless communication system serving a terminal device;
determining the location information of the terminal device based on the location information measurement configuration; and
transmitting the location information of the terminal device to the position management device in the wireless communication system, so that the position management device determines position information of the terminal device based on the location information and specific position configuration information of the at least one terminal device including the terminal device.

Exemplary embodiment 96. The method of exemplary embodiment 95, wherein
the location information of the terminal device includes time-related location information or beam-related location information determined by the terminal device in combination with a control-side electronic device serving the terminal device.
Exemplary embodiment 97. The method of exemplary embodiment 95, further comprising:
determining the location information according to a location cycle periodically.
Exemplary embodiment 98. The method of exemplary embodiment 95, further comprising:

transmitting a beam search request to a control-side electronic device serving the terminal device;
receiving scanning beams from the control-side electronic device; and
determining beam gains of the scanning beams,
selecting a beam for data transmission with the terminal device when the beam has a gain greater than a specific threshold, and feed back the selected beam to the control-side electronic device.

Exemplary embodiment 99. The method of exemplary embodiment 95, further comprising:

receiving a pilot signal from a control-side electronic device serving the terminal device;
executing pilot measurement to determine the beam gain of the scanning beam, and when the scanning beam has a gain greater than the gain of the previous scanning beam, notifying the control-side electronic device to execute beam switching to the scanning beam.

Exemplary embodiment 100. A position management method for a wireless communication system, comprising:

receiving an indication of a communication scene where a terminal device in the wireless communication system is located, wherein the communication scene comprises a communication scene in which the terminal device moves along a specific track; and

locating the terminal device based on the communication scene indication.

Exemplary embodiment 101. The position management method of exemplary embodiment 100, further comprising: determining a location scheme for location of the terminal device based on the communication scene indication.

Exemplary embodiment 102. The position management method of exemplary embodiment 100 or 101, further comprising:

in a case where it is determined that an OTDOA location scheme is employed based on the communication scene indication,

providing the terminal device auxiliary information for employing the OTDOA location scheme, the auxiliary information includes configuration information of a plurality of candidate base stations for the terminal device to measure; and

performing the OTDOA location for the terminal device based on the information about the specific track and the measurement results from the terminal device for two base stations in the plurality of candidate base stations.

Exemplary embodiment 103. The position management method of exemplary embodiment 102, wherein the plurality of candidate base stations include only 2 base stations.

Exemplary embodiment 104. The position management method of exemplary embodiment 102, wherein the auxiliary information includes at least one of the following:

physical cell ID, global cell ID, transmission point ID of the candidate base station, the relative timing relationship between the candidate base station and the reference base station, and the location reference signal PRS configuration of the candidate base station.

Exemplary embodiment 105. The position management method of exemplary embodiment 102, wherein the measurement result includes at least one of the following:

physical cell ID, global cell ID, transmission point ID of the base station and downlink timing measurement result of the base station.

Exemplary embodiment 106. The position management method of exemplary embodiment 100 or 101, futher comprising: in a case that it is determined to employ a downlink transmission beam location scheme based on the communication scene indication,

enabling a base station serving the terminal device to transmit a downlink transmission beam to the terminal device; and

performing downlink transmission beam location based on the information of the specific track and the measurement results from the terminal device for one or more downlink transmission beams.

Exemplary embodiment 107. The position management method of exemplary embodiment 106, wherein the measurement results include only measurement results of a single beam.

Exemplary embodiment 108. The position management method of exemplary embodiment 100, wherein the position management method is executed in a base station serving the terminal device or in other control devices on the control side.

Exemplary embodiment 109. A method for a terminal device on a terminal side of a wireless communication system, comprising:

acquiring an indication of a communication scene where a terminal device in the wireless communication system is located, wherein the communication scene comprises a communication scene in which the terminal device moves along a specific track; and

transmitting the communication scene indication to a device on a control side of the wireless communication system, so that the terminal device can be located based on the communication scene indication.

Exemplary embodiment 110. The method of exemplary embodiment 100, further comprising: in a case where it is determined that an OTDOA location scheme is employed based on the communication scene indication,

receiving auxiliary information for employing the OTDOA location scheme, the auxiliary information includes configuration information of a plurality of candidate base stations for the terminal device to measure;

measuring two base stations in the plurality of candidate base stations based on the auxiliary information; and

transmitting the measurement result to a device on a control side of the wireless communication system, so that the OTDOA location can be performed for the terminal device based on the information about the specific track and the measurement result.

Exemplary embodiment 111. The method of exemplary embodiment 109, wherein the candidate base stations include only 2 base stations.

Exemplary embodiment 112. The method of exemplary embodiment 109, wherein the auxiliary information includes at least one of the following:

physical cell ID, global cell ID, transmission point ID of the candidate base station, the relative timing relationship between the candidate base station and the reference base station, and the location reference signal PRS configuration of the candidate base station.

Exemplary embodiment 113. The method of exemplary embodiment 110, wherein the measurement result includes at least one of the following:

physical cell ID, global cell ID, transmission point ID of the base station and downlink timing measurement result of the base station.

Exemplary embodiment 114. The terminal method of exemplary embodiment 109, further comprising: in a case that it is determined to employ a downlink transmission beam location scheme based on the communication scene indication,

receiving a downlink transmission beam from a base station serving the terminal device;

measuring one or more the downlink transmission beams; and

transmitting the measurement result to a device on a control side of the wireless communication system, so that downlink transmission beam location can be performed based on the information of the specific track and the measurement result.

Exemplary embodiment 115. The method of exemplary embodiment 114, wherein the measurement results include only measurement result of a single beam.

Exemplary embodiment 116. The method of exemplary embodiment 109, wherein the base station serving the terminal device includes a position management device on the control side or other control devices on the control side of the wireless communication system.

Exemplary embodiment 117. A non-transitory computer-readable storage medium having executable instructions stored thereon that, when executed, implement the method according to any one of exemplary embodiments 59-116.

Exemplary embodiment 118. A device for control side of a wireless communication system, comprising a processing circuit configured to:

receive an indication of a communication scene where a terminal device in the wireless communication system is located, wherein the communication scene comprises a communication scene in which the terminal device moves along a specific track for location;

transmit control information indicating one or more CSI-RS resources to the terminal device;

perform beam transmission of CSI-RS signals on the one or more CSI-RS resources, so that the terminal device can determine a control side transmission beam whose CSI-RS signal receiving strength meets a predetermined condition;

receive indication information of CSI-RS resources from the terminal device corresponding to a control side transmission beam meeting a predetermined condition,

wherein the control side transmission beam for carrying the one or more CSI-RS resources corresponds to the position of the terminal device.

It should be noted that the location mentioned in this exemplary embodiment may be performed by a location server instead of gNB. It should also be pointed out that the beam corresponding to the position mentioned in this embodiment can cover selection of beams in adjacent directions, such as beams adjacent to the orientation of the position.

Exemplary embodiment 119. A terminal device for a terminal side of a wireless communication system, comprising a processing circuit configured to:

acquire an indication of a communication scene where a terminal device in the wireless communication system is located, wherein the communication scene comprises a communication scene in which the terminal device moves along a specific track;

transmit the communication scene indication to a device on control side of the wireless communication system, so that the terminal device can be positioned based on the communication scene indication;

receive control information indicating one or more CSI-RS resources from the device on control side;
perform beam reception on the one or more CSI-RS resources, so as to determine a control side transmission beam whose CSI-RS signal receiving strength meets a predetermined condition;
transmit indication information of CSI-RS resources corresponding to a control side transmission beam meeting a predetermined condition to the control-side device,
wherein the control side transmission beam for carrying the one or more CSI-RS resources corresponds to the position of the terminal device.

It should be noted that the location mentioned in this exemplary embodiment may be performed by a location server instead of gNB. It should also be pointed out that the beam corresponding to the position mentioned in this embodiment can cover selection of beams in adjacent directions, such as beams adjacent to the orientation of the position.
Exemplary embodiment 120. A wireless communication device, comprising:

a processor,
a storage device storing executable instructions that, when executed, implement the method according to any one of the exemplary embodiments 59-116.

Exemplary embodiment 121. A wireless communication device comprising means for performing the method according to any one of exemplary embodiments 59-116.
Although the present disclosure and its advantages have been described in detail, it should be understood that various changes, substitutions and alterations can be made hereto without departing from the spirit and scope of the present disclosure as defined by the appended claims. Furthermore, the terms "including", "comprising", or any other variation thereof, of the embodiments of the present disclosure are intended to encompass non-exclusive inclusion, such that a process, method, article, or device that includes a series of elements includes not only those elements, but also includes other elements not explicitly listed, or those inherent in the process, method, article, or equipment. Without more restrictions, the elements defined by the sentence "including a ..." do not exclude the existence of other identical elements in the process, method, article, or equipment including the elements.

**Claims**

1. A position management device for a control side of a wireless communication system, comprising a processing circuit configured to:

acquire location information of at least one terminal device on the terminal side in the wireless communication system, wherein the at least one terminal device has specific position configuration information; and
determine location information of a target terminal device among the at least one terminal device, based on the specific position configuration information of the at least one terminal device and the location information of the at least one terminal device.

2. The position management device of claim 1, wherein
the location information of the terminal device includes time-related location information or beam-related location information determined by the terminal device in combination with a control-side electronic device serving the terminal device.

3. The position management device of claim 2, wherein the location information is the time-related location information when the control-side electronic device serving the terminal device is a first electronic device conforming to the 4G communication standard.

4. The position management device of claim 3, wherein the time-related location information includes a measurement result of Observed Time Difference Of Arrival OTDOA, which indicates a time difference between location reference signals PRS simultaneously transmitted by two first electronic devices serving the terminal device arriving at the terminal device.

5. The position management device of claim 2, wherein the location information is the beam-related location information when the control-side electronic device serving the terminal device is a second electronic device conforming to the 5G communication standard.

6. The position management device of claim 5, wherein the beam-related location information includes beam information of a downlink transmission beam for the second electronic device communicating with the terminal device, which indicates angle or coverage information of the downlink transmission beam for the terminal device.

7. The position management device of claim 1, wherein the location information of the terminal device is acquired by the position management device from the terminal device or from a control-side electronic device serving the terminal device.

8. The position management device of claim 1, wherein the position management device periodically acquires the location information according to a location cycle so as to periodically determine the position of the target terminal device.

9. The position management device of claim 8, wherein the location cycle can be set to be equal to or less than a cycle in which a control-side electronic device conforming to 4G communication standard transmits the location reference signal PRS to the terminal device.

10. The position management device of claim 8, wherein the processing circuit is further configured to:
based on the previously determined position information of the target terminal device and location cycle, correct the position of the target terminal device at the current time moment by linear fitting, and estimate the position of the target terminal device at a specific time moment.

11. The position management device of claim 1, wherein the processing circuit is further configured to:

enable the control-side electronic device serving the terminal device to estimate the position of the terminal device at the current time moment, based on the previously determined position of the terminal device; and
enable the control-side electronic device serving the terminal device to configure the order of beam scanning based on the estimated position of the terminal device so as to scan beams for the terminal device.

12. The position management device of claim 11, wherein a beam whose beam direction is adjacent to a direction corresponding to the estimated positoin of the terminal device is scanned firstly.

13. The position management device of claim 11, wherein, in the case where the gain of a beam is greater than a specific threshold, the beam is selected for data transmission with the terminal device, and the control-side electronic device stops beam scanning.

14. The position management device of claim 1, wherein the processing circuit is further configured to:

enable the control-side electronic device serving the terminal device to determine a position of beam switching for the terminal device based on the intersection point of the current downlink transmission beam and the next downlink transmission beam for the terminal device; and
enable the control-side electronic device serving the terminal device to estimate the time moment when the terminal device performs beam switching based on the determined position of the terminal device at a specific moment and the determined beam switching position.

15. The position management device of claim 14, wherein the control-side electronic device serving the terminal device transmits a pilot signal to the terminal device for beam switching before the estimated beam switching time moment.

16. The position management device of claim 14, wherein the control-side electronic device serving the terminal device performs beam switching in a case where the next downlink transmission beam has a gain larger than the gain of the current beam.

17. The position management device of claim 14, wherein the processing circuit is further configured to:
enable the control-side electronic device serving the terminal device to stop transmitting the pilot signal for beam switching while performing the beam switching.

18. The position management device of claim 1, wherein the at least one terminal device includes a plurality of terminal devices, and the specific position configuration information includes a specific position relationship among the plurality of terminal devices.

**19.** The position management device of claim 18, wherein the processing circuit is further configured to:

determine a position error function for each terminal device among the plurality of terminal devices with respect to the target terminal device, based on position information of control-side electronic devices of the wireless communication system serving the plurality of terminal devices, the specific position relationship among the plurality of terminal devices, and location information of each terminal device; and
determine position information of the target terminal device based on the position error function for each terminal device of the plurality of terminal devices.

**20.** The position management device of claim 19, wherein the position information of the target terminal device is determined based on the position error function according to a weighted minimum mean square error criterion.

**21.** The position management device of claim 18, wherein the plurality of terminal devices are arranged following a specific trajectory, and the specific position configuration information further includes position information of the specific trajectory followed by the plurality of terminal devices,
wherein the processing circuit is further configured to:
determine the position of the target terminal device based on position information of the specific trajectory followed by the plurality of terminal devices, wherein the position information of the specific trajectory is obtained by fitting the previously determined positions of terminal devices or obtained from a network map.

**22.** The position management device of claim 18, wherein the plurality of terminal devices are arranged following a straight trajectory, and the spacing between the plurality of terminal devices is constant within a certain period of time.

**23.** The position management device of claim 18, wherein the processing circuit is further configured to:
determine positions of other terminal devices among the plurality of terminal devices based on the determined position of the target terminal device and the specific positional relationship among the plurality of terminal devices.

**24.** The position management device of claim 23, wherein the processing circuit is further configured to:
transmit the determined position of each terminal device to the control-side electronic device serving each terminal device, so that the control-side electronic device locates each terminal device.

**25.** The position management device of claim 18, wherein the specific position relationship among the plurality of terminal devices is provided to the position management device in advance, or measured by the target terminal device and provided to the position management device.

**26.** An electronic device on control side of a wireless communication system, comprising a processing circuit configured to:

acquire location information of at least one terminal device on the terminal side in the wireless communication system served by the electronic device, wherein the at least one terminal device has specific position configuration information;
transmit the location information of at least one terminal device to a position management device in the wireless communication system, so that the position management device determines position information of the terminal device based on the location information and the specific position configuration information of the at least one terminal device; and
receive the determined position information of the at least one terminal device from the position management device.

**27.** The electronic device of claim 26, wherein the location information of the terminal device includes time-related location information or beam-related location information determined by the terminal device in combination with a control-side electronic device serving the terminal device.

**28.** The electronic device of claim 26, wherein the processing circuit is further configured to:
transmit the location information to the position management device according to a location cycle periodically so that the positioin of the terminal device is determined periodically.

**29.** The electronic device of claim 26, wherein the processing circuit is further configured to:

estimate the position of the terminal device at the current time moment, based on the previously received position of the terminal device; and

configure the order of beam scanning based on the estimated position of the terminal device so as to scan beams for the terminal device.

30. The electronic device of claim 29, wherein the processing circuit is further configured to:
scan a beam whose beam direction is adjacent to a direction corresponding to the estimated position of the terminal device firstly.

31. The electronic device of claim 29, wherein the processing circuit is further configured to:
in the case where the gain of a beam is greater than a specific threshold, select the beam for data transmission with the terminal device, and stop the beam scanning.

32. The electronic device of claim 26, wherein the processing circuit is further configured to:

determine a position of beam switching for the terminal device based on the intersection point of the current downlink transmission beam and the next downlink transmission beam for the terminal device; and
estimate the time moment when the terminal device performs beam switching based on the determined position of the terminal device at a specific time moment and the determined beam switching position.

33. The electronic device of claim 32, wherein the processing circuit is further configured to:
transmit a pilot signal to the terminal device for beam switching before the estimated beam switching time moment.

34. The electronic device of claim 32, wherein the processing circuit is further configured to:
in a case where the next downlink transmission beam has a gain larger than the gain of the current beam, perform beam switching to switch the downlink transmission beam to the next downlink transmission beam.

35. The electronic device of claim 32, wherein the processing circuit is further configured to:
stop transmission of the pilot signal for the beam switching while performing the beam switching.

36. The electronic device of claim 26, wherein the processing circuit is further configured to:
locate other terminal devices based on the received determined location information of the terminal device.

37. A terminal device on a terminal side of a wireless communication system, comprising a processing circuit configured to:

acquire a location information measurement configuration from an electronic device on a control side of a wireless communication system serving a terminal device;
determine the location information of the terminal device based on the location information measurement configuration; and
transmit the location information of the terminal device to the position management device in the wireless communication system, so that the position management device determines position information of the terminal device based on the location information and specific position configuration information of the at least one terminal device including the terminal device.

38. The terminal device of claim 37, wherein
the location information of the terminal device includes time-related location information or beam-related location information determined by the terminal device in combination with a control-side electronic device serving the terminal device.

39. The terminal device of claim 37, wherein the processing circuit is further configured to:
determine the location information according to a location cycle periodically.

40. The terminal device of claim 37, wherein the processing circuit is further configured to:

transmit a beam search request to a control-side electronic device serving the terminal device;
receive scanning beams from the control-side electronic device; and
determine beam gains of the scanning beams,

select a beam for data transmission with the terminal device when the beam has a gain greater than a specific threshold, and feed back the selected beam to the control-side electronic device.

41. The terminal device of claim 37, wherein the processing circuit is further configured to:

receive a pilot signal from a control-side electronic device serving the terminal device;
execute pilot measurement to determine the beam gain of the scanning beam, and when the scanning beam has a gain greater than the gain of the previous scanning beam, notify the control-side electronic device to execute beam switching to the scanning beam.

42. A position management device for a control side of a wireless communication system, comprising a processing circuit configured to:

receive an indication of a communication scene where a terminal device in the wireless communication system is located, wherein the communication scene comprises a communication scene in which the terminal device moves along a specific track; and
locate the terminal device based on the communication scene indication.

43. The position management device of claim 42, wherein the processing circuit is further configured to:
determine a location scheme for location of the terminal device based on the communication scene indication.

44. The position management device of claim 42 or 43, wherein the processing circuit is further configured to, in a case where it is determined that an OTDOA location scheme is employed based on the communication scene indication,

provide the terminal device auxiliary information for employing the OTDOA location scheme, the auxiliary information includes configuration information of a plurality of candidate base stations for the terminal device to measure; and
perform the OTDOA location for the terminal device based on the information about the specific track and the measurement results from the terminal device for two base stations in the plurality of candidate base stations.

45. The position management device of claim 44, wherein the plurality of candidate base stations include only 2 base stations.

46. The position management device of claim 44, wherein the auxiliary information includes at least one of the following: physical cell ID, global cell ID, transmission point ID of the candidate base station, the relative timing relationship between the candidate base station and the reference base station, and the location reference signal PRS configuration of the candidate base station.

47. The position management device of claim 44, wherein the measurement result includes at least one of the following: physical cell ID, global cell ID, transmission point ID of the base station and downlink timing measurement result of the base station.

48. The position management device of claim 42 or 43, wherein the processing circuit is further configured to, in a case that it is determined to employ a downlink transmission beam location scheme based on the communication scene indication,

enable a base station serving the terminal device to transmit a downlink transmission beam to the terminal device; and
perform downlink transmission beam location based on the information of the specific track and the measurement results from the terminal device for one or more downlink transmission beams.

49. The position management device of claim 48, wherein the measurement results include only measurement results of a single beam.

50. The position management device of claim 42, wherein the position management device is located in a base station serving the terminal device or in other control devices on the control side.

51. A terminal device on a terminal side of a wireless communication system, comprising a processing circuit configured

EP 3 920 609 A1

to:

acquire an indication of a communication scene where a terminal device in the wireless communication system is located, wherein the communication scene comprises a communication scene in which the terminal device moves along a specific track; and

transmit the communication scene indication to a device on a control side of the wireless communication system, so that the terminal device can be located based on the communication scene indication.

52. The terminal device of claim 51, wherein the processing circuit is further configured to, in a case where it is determined that an OTDOA location scheme is employed based on the communication scene indication,

receive auxiliary information for employing the OTDOA location scheme, the auxiliary information includes configuration information of a plurality of candidate base stations for the terminal device to measure;

measure two base stations in the plurality of candidate base stations based on the auxiliary information; and

transmit the measurement result to a device on a control side of the wireless communication system, so that the OTDOA location can be performed for the terminal device based on the information about the specific track and the measurement result.

53. The terminal device of claim 52, wherein the candidate base stations include only 2 base stations.

54. The terminal device of claim 52, wherein the auxiliary information includes at least one of the following:
physical cell ID, global cell ID, transmission point ID of the candidate base station, the relative timing relationship between the candidate base station and the reference base station, and the location reference signal PRS configuration of the candidate base station.

55. The terminal device of claim 52, wherein the measurement result includes at least one of the following:
physical cell ID, global cell ID, transmission point ID of the base station and downlink timing measurement result of the base station.

56. The terminal device of claim 51, wherein the processing circuit is further configured to, in a case that it is determined to employ a downlink transmission beam location scheme based on the communication scene indication,

receive a downlink transmission beam from a base station serving the terminal device;
measure one or more the downlink transmission beams; and
transmit the measurement result to a device on a control side of the wireless communication system, so that downlink transmission beam location can be performed based on the information of the specific track and the measurement result.

57. The terminal device of claim 54, wherein the measurement results include only measurement result of a single beam.

58. The terminal device of claim 51, wherein the base station serving the terminal device includes a position management device on the control side or other control devices on the control side of the wireless communication system.

59. A position management method for a wireless communication system, comprising:

acquiring location information of at least one terminal device on the terminal side in the wireless communication system, wherein the at least one terminal device has specific position configuration information; and
determining location information of a target terminal device among the at least one terminal device, based on the specific position configuration information of the at least one terminal device and the location information of the at least one terminal device.

60. The position management method of claim 59, wherein
the location information of the terminal device includes time-related location information or beam-related location information determined by the terminal device in combination with a control-side electronic device serving the terminal device.

61. The position management method of claim 60, wherein the location information is the time-related location information when the control-side electronic device serving the terminal device is a first electronic device conforming to the 4G communication standard.

62. The position management method of claim 61, wherein the time-related location information includes a measurement result of Observed Time Difference Of Arrival OTDOA, which indicates a time difference between location reference signals PRS simultaneously transmitted by two first electronic devices serving the terminal device arriving at the terminal device.

63. The position management method of claim 61, wherein the location information is the beam-related location information when the control-side electronic device serving the terminal device is a second electronic device conforming to the 5G communication standard.

64. The position management method of claim 63, wherein the beam-related location information includes beam information of a downlink transmission beam for the second electronic device communicating with the terminal device, which indicates angle or coverage information of the downlink transmission beam for the terminal device.

65. The position management method of claim 59, wherein the location information of the terminal device is acquired from the terminal device or from a control-side electronic device serving the terminal device.

66. The position management method of claim 59, wherein the location information is periodically acquired according to a location cycle so as to periodically determine the position of the target terminal device.

67. The position management method of claim 66, wherein the location cycle can be set to be equal to or less than a cycle in which a control-side electronic device conforming to 4G communication standard transmits the location reference signal PRS to the terminal device.

68. The position management method of claim 66, further comprising:
based on the previously determined position information of the target terminal device and location cycle, correcting the position of the target terminal device at the current time moment by linear fitting, and estimating the position of the target terminal device at a specific time moment.

69. The position management method of claim 59, further comprising:

enabling the control-side electronic device serving the terminal device to estimate the position of the terminal device at the current time moment, based on the previously determined position of the terminal device; and
enabling the control-side electronic device serving the terminal device to configure the order of beam scanning based on the estimated position of the terminal device so as to scan beams for the terminal device.

70. The position management method of claim 69, wherein a beam whose beam direction is adjacent to a direction corresponding to the estimated positoin of the terminal device is scanned firstly.

71. The position management method of claim 69, wherein, in the case where the gain of a beam is greater than a specific threshold, the beam is selected for data transmission with the terminal device, and the control-side electronic device stops beam scanning.

72. The position management method of claim 59, further comprising:

enabling the control-side electronic device serving the terminal device to determine a position of beam switching for the terminal device based on the intersection point of the current downlink transmission beam and the next downlink transmission beam for the terminal device; and
enabling the control-side electronic device serving the terminal device to estimate the time moment when the terminal device performs beam switching based on the determined position of the terminal device at a specific moment and the determined beam switching position.

73. The position management method of claim 59, wherein the control-side electronic device serving the terminal device transmits a pilot signal to the terminal device for beam switching before the estimated beam switching time moment.

74. The position management method of claim 72, wherein the control-side electronic device serving the terminal device performs beam switching in a case where the next downlink transmission beam has a gain larger than the gain of the current beam.

75. The position management method of claim 72, further comprising:
enabling the control-side electronic device serving the terminal device to stop transmitting the pilot signal for beam switching while performing the beam switching.

76. The position management method of claim 59, wherein the at least one terminal device includes a plurality of terminal devices, and the specific position configuration information includes a specific position relationship among the plurality of terminal devices.

77. The position management method of claim 76, further comprising:

determining a position error function for each terminal device among the plurality of terminal devices with respect to the target terminal device, based on position information of control-side electronic devices of the wireless communication system serving the plurality of terminal devices, the specific position relationship among the plurality of terminal devices, and location information of each terminal device; and
determining position information of the target terminal device based on the position error function for each terminal device of the plurality of terminal devices.

78. The position management method of claim 77, wherein the position information of the target terminal device is determined based on the position error function according to a weighted minimum mean square error criterion.

79. The position management method of claim 59, wherein the plurality of terminal devices are arranged following a specific trajectory, and the specific position configuration information further includes position information of the specific trajectory followed by the plurality of terminal devices,
wherein the method further comprises:
determining the position of the target terminal device based on position information of the specific trajectory followed by the plurality of terminal devices, wherein the position information of the specific trajectory is obtained by fitting the previously determined positions of terminal devices or obtained from a network map.

80. The position management method of claim 79, wherein the plurality of terminal devices are arranged following a straight trajectory, and the spacing between the plurality of terminal devices is constant within a certain period of time.

81. The position management method of claim 76, further comprising:
determining positions of other terminal devices among the plurality of terminal devices based on the determined position of the target terminal device and the specific positional relationship among the plurality of terminal devices.

82. The position management method of claim 81, further comprising:
transmitting the determined position of each terminal device to the control-side electronic device serving each terminal device, so that the control-side electronic device locates each terminal device.

83. The position management method of claim 76, wherein the specific position relationship among the plurality of terminal devices is provided to a position management device in advance, or measured by the target terminal device and provided to the position management device.

84. A method for an electronic device on control side of a wireless communication system, comprising:

acquiring location information of at least one terminal device on the terminal side in the wireless communication system served by the electronic device, wherein the at least one terminal device has specific position configuration information;
transmitting the location information of at least one terminal device to a position management device in the wireless communication system, so that the position management device determines position information of the terminal device based on the location information and the specific position configuration information of the at least one terminal device; and
receiving the determined position information of the at least one terminal device from the position management device.

85. The method of claim 84, wherein the location information of the terminal device includes time-related location information or beam-related location information determined by the terminal device in combination with a control-side electronic device serving the terminal device.

**86.** The method of claim 84, further comprising:
transmitting the location information to the position management device according to a location cycle periodically so that the positioin of the terminal device is determined periodically.

**87.** The method of claim 84, further comprising:

estimating the position of the terminal device at the current time moment, based on the previously received position of the terminal device; and
configuring the order of beam scanning based on the estimated position of the terminal device so as to scan beams for the terminal device.

**88.** The method of claim 87, further comprising:
scanning a beam whose beam direction is adjacent to a direction corresponding to the estimated position of the terminal device firstly.

**89.** The method of claim 87, further comprising:
in the case where the gain of a beam is greater than a specific threshold, selecting the beam for data transmission with the terminal device, and stopping the beam scanning.

**90.** The method of claim 84, further comprising:

determining a position of beam switching for the terminal device based on the intersection point of the current downlink transmission beam and the next downlink transmission beam for the terminal device; and
estimating the time moment when the terminal device performs beam switching based on the determined position of the terminal device at a specific time moment and the determined beam switching position.

**91.** The method of claim 90, further comprising:
transmitting a pilot signal to the terminal device for beam switching before the estimated beam switching time moment.

**92.** The method of claim 90, further comprising:
in a case where the next downlink transmission beam has a gain larger than the gain of the current beam, performing beam switching to switch the downlink transmission beam to the next downlink transmission beam.

**93.** The method of claim 90, further comprising:
stopping transmission of the pilot signal for the beam switching while performing the beam switching.

**94.** The method of claim 90, further comprising:
locating other terminal devices based on the received determined location information of the terminal device.

**95.** A method for a terminal device on a terminal side of a wireless communication system, comprising:

acquiring a location information measurement configuration from an electronic device on a control side of a wireless communication system serving a terminal device;
determining the location information of the terminal device based on the location information measurement configuration; and
transmitting the location information of the terminal device to the position management device in the wireless communication system, so that the position management device determines position information of the terminal device based on the location information and specific position configuration information of the at least one terminal device including the terminal device.

**96.** The method of claim 95, wherein
the location information of the terminal device includes time-related location information or beam-related location information determined by the terminal device in combination with a control-side electronic device serving the terminal device.

**97.** The method of claim 95, further comprising:
determining the location information according to a location cycle periodically.

**98.** The method of claim 95, further comprising:

transmitting a beam search request to a control-side electronic device serving the terminal device;
receiving scanning beams from the control-side electronic device; and
determining beam gains of the scanning beams,
selecting a beam for data transmission with the terminal device when the beam has a gain greater than a specific threshold, and feed back the selected beam to the control-side electronic device.

**99.** The method of claim 95, further comprising:

receiving a pilot signal from a control-side electronic device serving the terminal device;
executing pilot measurement to determine the beam gain of the scanning beam, and when the scanning beam has a gain greater than the gain of the previous scanning beam, notifying the control-side electronic device to execute beam switching to the scanning beam.

**100.** A position management method for a wireless communication system, comprising:

receiving an indication of a communication scene where a terminal device in the wireless communication system is located, wherein the communication scene comprises a communication scene in which the terminal device moves along a specific track; and
locating the terminal device based on the communication scene indication.

**101.** The position management method of claim 100, further comprising:
determining a location scheme for location of the terminal device based on the communication scene indication.

**102.** The position management method of claim 100 or 101, further comprising:

in a case where it is determined that an OTDOA location scheme is employed based on the communication scene indication,
providing the terminal device auxiliary information for employing the OTDOA location scheme, the auxiliary information includes configuration information of a plurality of candidate base stations for the terminal device to measure; and
performing the OTDOA location for the terminal device based on the information about the specific track and the measurement results from the terminal device for two base stations in the plurality of candidate base stations.

**103.** The position management method of claim 102, wherein the plurality of candidate base stations include only 2 base stations.

**104.** The position management method of claim 102, wherein the auxiliary information includes at least one of the following: physical cell ID, global cell ID, transmission point ID of the candidate base station, the relative timing relationship between the candidate base station and the reference base station, and the location reference signal PRS configuration of the candidate base station.

**105.** The position management method of claim 102, wherein the measurement result includes at least one of the following: physical cell ID, global cell ID, transmission point ID of the base station and downlink timing measurement result of the base station.

**106.** The position management method of claim 100 or 101, futher comprising: in a case that it is determined to employ a downlink transmission beam location scheme based on the communication scene indication,

enabling a base station serving the terminal device to transmit a downlink transmission beam to the terminal device; and
performing downlink transmission beam location based on the information of the specific track and the measurement results from the terminal device for one or more downlink transmission beams.

**107.** The position management method of claim 106, wherein the measurement results include only measurement results of a single beam.

**108.** The position management method of claim 100, wherein the position management method is executed in a base station serving the terminal device or in other control devices on the control side.

**109.** A method for a terminal device on a terminal side of a wireless communication system, comprising:

acquiring an indication of a communication scene where a terminal device in the wireless communication system is located, wherein the communication scene comprises a communication scene in which the terminal device moves along a specific track; and

transmitting the communication scene indication to a device on a control side of the wireless communication system, so that the terminal device can be located based on the communication scene indication.

**110.** The method of claim 100, further comprising: in a case where it is determined that an OTDOA location scheme is employed based on the communication scene indication,

receiving auxiliary information for employing the OTDOA location scheme, the auxiliary information includes configuration information of a plurality of candidate base stations for the terminal device to measure;

measuring two base stations in the plurality of candidate base stations based on the auxiliary information; and transmitting the measurement result to a device on a control side of the wireless communication system, so that the OTDOA location can be performed for the terminal device based on the information about the specific track and the measurement result.

**111.** The method of claim 109, wherein the candidate base stations include only 2 base stations.

**112.** The method of claim 109, wherein the auxiliary information includes at least one of the following:
physical cell ID, global cell ID, transmission point ID of the candidate base station, the relative timing relationship between the candidate base station and the reference base station, and the location reference signal PRS configuration of the candidate base station.

**113.** The method of claim 110, wherein the measurement result includes at least one of the following:
physical cell ID, global cell ID, transmission point ID of the base station and downlink timing measurement result of the base station.

**114.** The terminal method of claim 109, further comprising: in a case that it is determined to employ a downlink transmission beam location scheme based on the communication scene indication,

receiving a downlink transmission beam from a base station serving the terminal device;
measuring one or more the downlink transmission beams; and
transmitting the measurement result to a device on a control side of the wireless communication system, so that downlink transmission beam location can be performed based on the information of the specific track and the measurement result.

**115.** The method of claim 114, wherein the measurement results include only measurement result of a single beam.

**116.** The method of claim 109, wherein the base station serving the terminal device includes a position management device on the control side or other control devices on the control side of the wireless communication system.

**117.** A non-transitory computer-readable storage medium having executable instructions stored thereon that, when executed, implement the method according to any one of claims 59-116.

**118.** A device for control side of a wireless communication system, comprising a processing circuit configured to:

receive an indication of a communication scene where a terminal device in the wireless communication system is located, wherein the communication scene comprises a communication scene in which the terminal device moves along a specific track for location;
transmit control information indicating one or more CSI-RS resources to the terminal device;

perform beam transmission of CSI-RS signals on the one or more CSI-RS resources, so that the terminal device can determine a control side transmission beam whose CSI-RS signal receiving strength meets a predetermined condition;

receive indication information of CSI-RS resources from the terminal device corresponding to a control side transmission beam meeting a predetermined condition,

wherein the control side transmission beam for carrying the one or more CSI-RS resources corresponds to the position of the terminal device.

119. A terminal device for a terminal side of a wireless communication system, comprising a processing circuit configured to:

acquire an indication of a communication scene where a terminal device in the wireless communication system is located, wherein the communication scene comprises a communication scene in which the terminal device moves along a specific track;

transmit the communication scene indication to a device on control side of the wireless communication system, so that the terminal device can be positioned based on the communication scene indication;

receive control information indicating one or more CSI-RS resources from the device on control side;

perform beam reception on the one or more CSI-RS resources, so as to determine a control side transmission beam whose CSI-RS signal receiving strength meets a predetermined condition;

transmit indication information of CSI-RS resources corresponding to a control side transmission beam meeting a predetermined condition to the control-side device,

wherein the control side transmission beam for carrying the one or more CSI-RS resources corresponds to the position of the terminal device.

120. A wireless communication device, comprising:

a processor,

a storage device storing executable instructions that, when executed, implement the method according to any one of the claims 59-116.

121. A wireless communication device comprising means for performing the method according to any one of claims 59-116..

**Figure1**

| Terminal Device 30 | Electronic Device 20 | Position Management Device 10 |

Location information measurement configuration

S201

Location information measurement configuration

S202

Location information of terminal device

S203

Location information of terminal device

S204

Cooperative location based on location information and specific position configuration information of terminal device

S205

Position of target terminal device

S206

**Figure 2**

**Position management device 10**

**Processing circuit100**

Information acquisition unit 1001

Cooperative location unit 1002

Location tracking unit 1003

Beam searching control unit 1004

Beam switching control unit 1005

Memory 101

Communication unit 102

**Figure 3**

<u>400</u>

Acquire location information of at least one terminal device ⟋ S401

Determine position of target terminal device based on location information and specific position configuration information of at least one terminal device ⟋ S402

Figure 4

(x-7l, d)    (x-2l, d)  (x-l, d)   (x, d)

l    l

30A

y=d

Figure 5

**Figure 6**

**Figure 7**

| terminal device 30A | LTE base station | Position management device | NR base station | terminal device 30B |

S801

Acquire specific position configuration information of terminal device

Time-related location information measurement configuration

Beam-related location information measurement configuration

S802

S812

Time-related location information measurement configuration

beam-related location information measurement configuration

S803

S813

Time-related location information

beam-related location information

S804

S814

Time-related location information

beam-related location information

S805

S815

Cooperative location based on location information and specific position configuration information of terminal device

S806

Position of target terminal device

Position of target terminal device

S807

S817

**Figure 8**

EP 3 920 609 A1

Figure 9

Figure 10

**Figure 11**

**Figure 12**

Terminal
device

Base station

1300

Beam search request

S1301

Real-time position
estimation

S1302

Configure beam scanning
order

S1303

Beam scanning

S1304

Measure beam gain and
select a beam whose beam
gain is larger than a
specific threshold

S1305

Feedback selected beam

S1306

Stop beam scanning

S1307

**Figure 13**

**Figure14**

**Figure15**

1600

**Figure16**

**Figure 17A**

**Figure 17B**

Processing circuit 200

Information acquisition
unit 2001

Transmission unit 2002

Receiving unit 2003

Beam scanning unit
2004

Beam switching unit
2005

Electronic device 20

Memory 201

Communication
unit 202

**Figure18**

**1900**

Acquire location information of at
least one terminal device

S1901

Transmit location information of at
least one terminal device to position
management device

S1902

Receive the determined position
information of the at least terminal
device from position management
device

S1903

**Figure19**

Terminal Device
30

Processing circuit 300

Information acquisition
unit 3001

Location information
measurement unit 3002

Transmission unit 3003

Receiving unit 3004

Beam selection unit
3005

Beam switching
notification unit 3006

Memory 301

Communication
unit 302

Figure 20

2100

| Acquire location information measurement configuration | S2101 |

| Determine location information of terminal device based on the location information measurement configuration | S2102 |

| Transmit the measured location information of terminal device to position management device | S2103 |

Figure 21

2200

2201    2202    2203

CPU    ROM    RAM

2204

2205

Input/output interface

| Input section | output section | storage section | Communic ation unit | Driver | 2210 |

2206    2207    2208    2209

2211

Removable medium

Figure22

**2300**

**2310**   **2310**         **2320**

**2325**

Wireless communication interface

**2327**          **2326**

| RF |          | BB |

**2327**          **2326**

| RF |          | BB |

**2321**

controller

**2324**

**2323**          **2322**

Network
interface          memory

Figure23

Figure24

Figure 25

Figure 26

EP 3 920 609 A1

## INTERNATIONAL SEARCH REPORT

| International application No. |
| --- |
| **PCT/CN2020/074204** |

| | |
| --- | --- |
| **A.** | **CLASSIFICATION OF SUBJECT MATTER** |
| | H04W 64/00(2009.01)i |

According to International Patent Classification (IPC) or to both national classification and IPC

| | |
| --- | --- |
| **B.** | **FIELDS SEARCHED** |

Minimum documentation searched (classification system followed by classification symbols)

H04W; H04Q; H04L

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 协作, 辅助, 补偿, 修正, 定位, 位置, 时间差, 波束, 间距, 距离, 相对角, 相对位置, 位置关系, 轨道, 轨迹, 类型, 场景, CSI-RS, 接收强度, 接收质量, collaboration, assistance, compensation, correction, position, OTDOA, beam, spacing, distance, relative angle, relative position, track, type, scene, strength, quality

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| Y | CN 108702726 A (INTEL CORPORATION) 23 October 2018 (2018-10-23) <br> description, paragraphs [0027]-[0090] | 1-117, 120-121 |
| Y | CN 107942287 A (XI'AN TCL SOFTWARE DEVELOPMENT CO., LTD.) 20 April 2018 (2018-04-20) <br> description, paragraphs [0120]-[0137], and figure 4 | 1-41, 59-99, 117, 120-121 |
| Y | CN 103379429 A (ZTE CORPORATION) 30 October 2013 (2013-10-30) <br> description, paragraphs [0049]-[0059] | 42-58, 100-121 |
| Y | CN 107872253 A (HUAWEI TECHNOLOGIES CO., LTD.) 03 April 2018 (2018-04-03) <br> description, paragraphs [0002]-[0003] | 118-119 |
| A | CN 103298098 A (ZTE CORPORATION) 11 September 2013 (2013-09-11) <br> entire document | 1-121 |
| A | HUAWEI et al. "Potential Techniques for NR Positioning" <br> *3GPP TSG RAN WG1 Meeting #95 R1-1812236*, 16 November 2018 (2018-11-16), <br> entire document | 1-121 |

☐ Further documents are listed in the continuation of Box C.    ☑ See patent family annex.

| | |
| --- | --- |
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| **21 April 2020** | **29 April 2020** |

| Name and mailing address of the ISA/CN | Authorized officer |
| --- | --- |
| **China National Intellectual Property Administration** <br> **No. 6, Xitucheng Road, Jimenqiao Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/074204**

| Patent document cited in search report | | | Publication date (day/month/year) | Patent family member(s) | | | Publication date (day/month/year) |
|---|---|---|---|---|---|---|---|
| CN | 108702726 | A | 23 October 2018 | WO | 2017164925 | A1 | 28 September 2017 |
| | | | | HK | 1262238 | A0 | 10 January 2020 |
| CN | 107942287 | A | 20 April 2018 | None | | | |
| CN | 103379429 | A | 30 October 2013 | JP | 2015519549 | A | 09 July 2015 |
| | | | | US | 2015131487 | A1 | 14 May 2015 |
| | | | | WO | 2013155754 | A1 | 24 October 2013 |
| CN | 107872253 | A | 03 April 2018 | EP | 3503613 | A1 | 26 June 2019 |
| | | | | WO | 2018059156 | A1 | 05 April 2018 |
| | | | | US | 2019222384 | A1 | 18 July 2019 |
| | | | | IN | 201917010788 | A | 28 June 2019 |
| CN | 103298098 | A | 11 September 2013 | None | | | |

Form PCT/ISA/210 (patent family annex) (January 2015)

**REFERENCES CITED IN THE DESCRIPTION**

**Patent documents cited in the description**

- CN 201910106818